(19) **Europäisches Patentamt / European Patent Office / Office européen des brevets**

(11) **EP 2 146 891 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(21) Anmeldenummer: **08749631.1**

(22) Anmeldetag: **21.04.2008**

(51) Int Cl.:
**B62M 19/00** (2006.01)

(86) Internationale Anmeldenummer:
**PCT/EP2008/054811**

(87) Internationale Veröffentlichungsnummer:
**WO 2008/129037 (30.10.2008 Gazette 2008/44)**

(54) **Hydraulisch antreibbares Leichtfahrzeug und Druckumsetzungseinrichtung insbesondere zum Einsatz in einem solchen Fahrzeug**

Hydraulically driven light vehicle and pressure conversion unit in particular for use in such a vehicle

Véhicle léger à propulsion hydraulique et convertisseur de pression en particulier pour une utilisation sur ce même véhicle

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.04.2007 DE 102007020297**

(43) Veröffentlichungstag der Anmeldung:
**27.01.2010 Patentblatt 2010/04**

(73) Patentinhaber:
• **Edelmann, Hermann**
  **Hohenzollernring 39**
  **72119 Ammerbuch (DE)**
• **Lutz, Johannes**
  **Knappenweg 32**
  **70569 Stuttgart (DE)**

(72) Erfinder:
• **Edelmann, Hermann**
  **Hohenzollernring 39**
  **72119 Ammerbuch (DE)**
• **Lutz, Johannes**
  **Knappenweg 32**
  **70569 Stuttgart (DE)**

(74) Vertreter: **Lutz, Johannes Dieter**
**Patentanwälte Wolf & Lutz**
**Hauptmannsreute 93**
**70193 Stuttgart (DE)**

(56) Entgegenhaltungen:
**EP-A- 0 364 823       WO-A-99/61306**
**DE-A1- 2 312 647      DE-A1- 4 335 494**
**US-A- 4 078 816**

**Beschreibung**

Die Erfindung betrifft ein hidraulisch antreibbares Leichtfahrzeug, das - in der Art eines Fahrrades oder einer Rikscha - mit Muskelkraft antreibbar ist und zur Beförderung mindestens zweier Personen geeignet ist, und mit den weiteren, im Oberbegriff des Patentanspruchs 1 genannten, gattungsbestimmenden Merkmalen.

Die Erfindung betrifft auch eine im Anspruch 18 definierte Druckumsetzungseinrichtung insbesondere zur Steuerung des Fahr-und/oder des Bremsbetriebes eines hydrolisch , antreibbaren Leichtfahrzeuges gemäß dem Anspruch 1.

Ein bekanntes Fahrzeug dieser Art ist als zweisitziges Vierradfahrzeug ausgebildet, das in der Art eines Tandemfahrrades mit einem Kettenantrieb versehen ist, bei dem zwei über Tretkurbeln antreibbare Kettenräder vorgesehen sind, die mittels einer von Hand betätigbaren Kettenschaltung auf verschiedene Übersetzungsverhältnisse einstellbar ist.

Die hierbei zur Anwendung gelangende Technik entspricht der bei einem Tandemzweirad üblichen Antriebstechnik.

Das bekannte Leichtfahrzeug ist mit zumindest den folgenden Nachteilen behaftet:

Ungeachtet des Umstandes, dass bei einer Besetzung des Fahrzeuges mit zwei etwa gleich kräftigen Personen, verglichen mit einem Fahrrad gleichsam die doppelte Antriebsenergie zur Verfügung steht, sind die das dynamische Verhalten des bekannten Fahrzeuges beschreibenden Größen, nämlich Beschleunigungsvermögen und Höchstgeschwindigkeit von denen eines mit nur einer Person besetzten Fahrrades oder auch eines Tandems nicht nennenswert verschieden, da der Antriebsstrang - wie beim üblichen Tandemfahrrad - einen Vergleich der von den beiden Insassen aufbringbaren Antriebsleistungen bzw. Antriebskräfte vermittelt und im Ergebnis das Kraftentfaltungsvermögen des jeweils Stärkeren der beiden Fahrer nutzt. Demgemäß entsprechen die mit dem bekannten Fahrzeug erreichbaren Fahrleistungen denjenigen, die mit einem Fahrrad erreichbar wären, bei dem jeweils der Fahrer, sobald seine Antriebsleistung zurückgeht, durch einen "frischen" Fahrer ersetzt werden kann, dessen Leistungsvermögen demjenigen des ersetzten Fahrers äquivalent ist.

In praxi bedeutet dies, dass das bekannte Fahrzeug, wenn es mit zwei Personen besetzt ist, zwar etwas länger als ein Fahrrad mit Höchstgeschwindigkeit gefahren werden kann, diese Höchstgeschwindigkeit jedoch nicht nennenswert höher ist als diejenige, die mit einem Fahrrad erreicht werden kann, d.h. die Geschwindigkeit von z. B. 40 km/h, zwar doppelt so lange wie mit einem normalen Fahrrad, absolut jedoch nur für eine im Minutenbereich liegende Zeitspanne.

Erschwerend für eine gute Ausnutzbarkeit des gleichsam doppelten Kräftepotentials ist auch der Umstand, dass an die Synchronizität der Bewegungen der Fahrer hohe Anforderungen zu stellen sind, wenn deren Kräfte sich zu einem höheren Wert ergänzen sollen, als demjenigen, der vom momentan effizienteren Fahrer ausübbar ist.

Zwar kann, für den Fall der Besetzung der Fahrzeuge mit zwei Personen, eine bessere Ausnutzung der von diesen aufbringbaren Kräften dann erzielt werden, wenn diese Personen jeweils einen für sich schaltbaren Antriebsstrang betätigen, jedoch muss dann ein sehr hoher auch mit erhöhtem Gewicht verbundener Aufwand in Kauf genommen werden, und es gilt auch für den Fall, dass das bekannte Fahrzeug mit Personen sehr unterschiedlichen Kraftentfaltungsvermögens besetzt ist, dass die weniger kräftige Person praktisch keinen nennenswerten Beitrag zur Fahrzeugdynamik leisten kann, sondern eher wie eine Last wirkt, die von dem kräftigeren Fahrer mitbewegt werden muss.

Ein hydraulisch antreibbares Leichtfahrzeug ist aus dem Dokument US-A-4078816 bekannt.

Aufgabe der Erfindung ist es daher, ein Fahrzeug der eingangs genannten Art zu schaffen, bei dem auch sehr unterschiedliche Kraftentfaltungspotentiale seiner Passagiere besser zur Fahrzeugbeschleunigung und zur Aufrechterhaltung einer bestimmten Fahrgeschwindigkeit nutzbar sind, d.h., die von z. B. zwei Fahrern jeweils einzeln aufbringbaren Kräfte zu einer resultierenden Kraft führen, die zumindest näherungsweise der algebraischen Summe der Einzelkräfte entspricht.

Diese Aufgabe wird, dem Grundgedanken nach, durch die kennzeichnenden Merkmale des Patentanspruchs 1 und in vorteilhaften Ausgestaltungen der Erfindung durch die Merkmale der Unteransprüche gelöst.

Hiernach hat das Fahrzeug einen hydraulischen Fahrantrieb, der den Fahrzeugrädern einzeln zugeordnete Hydromotore umfasst, deren rotatorisch antreibbare Abtriebelemente mit dem jeweils zugeordneten Fahrzeugrad formschlüssig, insbesondere drehfest, gekoppelt sind, so dass diese Motoren sowohl zur Beschleunigung des Fahrzeuges und Aufrechterhaltung einer erwünschten Fahrgeschwindigkeit - bei zum Vorratsbehälter hin offenem Rücklaufströmungspfad - als auch, z. B. durch Drosselung des Rücklaufströmungspfades zum Abbremsen des Fahrzeuges nutzbar sind. Antriebsstrang und Bremsanlage sind mit den selben Funktionselementen, gleichsam in Doppelfunktion derselben, realisiert, wodurch, verglichen mit einem konventionellen Fahrzeug, bei dem die Bremsanlage in der Regel mit antriebsfremden Bauelementen realisiert werden muss, z. B. Bremsscheiben und an diesen angreifenden Bremskrafterzeugungselementen, eine erhebliche Vereinfachung erzielt wird, mit der auch eine signifikante Gewichtseinsparung einhergeht.

Zur Erzeugung eines die Motore antreibenden Volumenstromes unter erhöhtem Druck stehenden Betriebsmediums - Hydrauliköl - ist als hydraulische Energiequelle eine von Insassen des Fahrzeuges "manuell", d.h. mit Muskelkraft über Handhebel und/oder über Pedale betätigbare Pumpeinrichtung vorgesehen, die, analog zu einem Fahrrad, einen Fahrbetrieb unter Ausnutzung der Muskelkraft eines oder mehrer Fahrzeuginsassen ermöglicht.

Hierbei sind den Fahrzeuginsassen bzw. den von Fahrzeuginsassen einnehmbaren Fahrzeugplätzen einzeln zugeordnete Hydraulikpumpen vorgesehen, die, je nach Einsatzzweck des Fahrzeuges und Fahrerwunsch des Fahrers und/oder weiterer Insassen des Fahrzeugs auf entsprechend verschiedene Betriebsbedingungen einstellbar gestaltet sein können.

Des weiteren ist mindestens ein Druckspeicher vorgesehen, der mittels der Pumpeinrichtung auf einen Energieinhalt aufladbar ist, der im wesentlichen durch die Speicherkapazität und eine aus Sicherheitsgründen erforderliche Druckbegrenzung bedingten Höchstbetrag begrenzt ist. Dieser "maximale" Energieinhalt, der - anstelle einer Betätigung der Pumpeinrichtung - zum Antrieb des Fahrzeuges, insbesondere zu einem den Fahrbetrieb einleitenden Anfahrbetrieb nutzbar ist, ist - erfindungsgemäß - dahingehend bemessen, dass der Energieinhalt des Speichers bei vollständiger Aufladung, für sich gesehen, ausreichend ist, das Fahrzeug, z. B. nach einem Umschalten einer Ampel von Rot auf Grün, aus dem Stillstand mit einer den üblichen Fahrzeugbeschleunigungen entsprechenden Beschleunigung auf einen Wert der Geschwindigkeit zu beschleunigen, der dem üblichen rollenden Verkehr entspricht, d.h. einen Wert um 40 km/h.

Das die Pumpeinrichtung und den/die Druckspeicher umfassende Druckversorgungsaggregat des Fahrzeuges, das die Energiequelle für die hydraulischen Antriebsmotore bildet, ist dahingehend ausgelegt, dass es sowohl im Fahrbetrieb des Fahrzeuges, d.h. wenn der Fahrer eine niedrigere Fahrzeuggeschwindigkeit einsteuert als es der momentanen Pumpenantriebsleistung der Fahrzeuginsassen entspricht, als auch durch einen Bremsbetrieb des Fahrzeuges, in dem die Motore des Fahrzeuges gleichsam als Pumpen arbeiten, aufladbar ist/sind, und auch im Stillstand des Fahrzeuges nach einer Feststellbremsung, wenn der Fahrer die Pumpe(n) des Druckversorgungsaggregats betätigt, gleichzeitig jedoch die Ventilsteuerung des Hydraulikantriebs in derjenigen Funktionsstellung hält, in welcher der/die Druckspeicher jedoch - ventilgesteuert - aufladbar ist/sind.

Der Speicher hält einen begrenzten Vorrat hydraulischer Energie bereit, die z. B. in Anfahrsituationen genutzt werden kann. Mit Hilfe der gespeicherten Energie in Schwung gekommen, ist es für den/die jeweiligen Fahrzeuginsassen sodann vergleichsweise einfach, durch ihre eigene Pumpleistung das Fahrzeug auf einer bestimmten Geschwindigkeit zu halten, dies zumindest dann, wenn sich das Fahrzeug auf einem im wesentlichen horizontal verlaufenden Fahrbahnabschnitt bewegt, da dann zur Aufrechterhaltung der mit Hilfe des Speicherinhalts erreichten Geschwindigkeit lediglich die Rollreibung und aerodynamische Verluste kompensiert werden müssen, die relativ gering sind.

Besetzt mit zwei Personen, die beide durch Pumpenbetätigung zur Vortriebsleistung des Antriebsstranges beitragen können, vermittelt das erfindungsgemäße Fahrzeug die vorteilhafte Eigenschaft, dass es mit höherer Geschwindigkeit gefahren werden kann als z. B. ein Fahrrad, da sich, bedingt durch die Art der Energieumsetzung durch ein hydraulisches Pumpen-Speicher-Motor-System eine gleichsam algebraische Addition der physikalischen Antriebsleistungen der beiden Personen erzielen lässt. Diese Eigenschaft des erfindungsgemäßen Leichtfahrzeuges ermöglicht unter bedarfsweiser Ausnutzung der in der Speichereinrichtung bereitgehaltenen Energie, verglichen mit einem Fahrrad, je nach Betriebssituation, entweder die Einhaltung einer bestimmten Fahrgeschwindigkeit mit vergleichsweise geringer Mühe oder die Erreichbarkeit einer Fahrgeschwindigkeit, die deutlich höher ist als die eines mit einer Person besetzten Fahrrades.

Durch eine Druckumsetzungseinrichtung, die gleichsam als Anpassungstransformator arbeitet, der - im Bremsbetrieb - den Druck des von den Radmotoren zur Druckumsetzungseinrichtung geförderten Druckmediums auf mindestens das im Speicher vorgegebene Druckniveau "hoch"-transformiert, ist auf einfache Weise sichergestellt, dass der Speicher auch dann aufladbar ist, wenn der Ausgangsdruck, den die Radpumpen abgeben, signifikant niedriger ist, als z. B. der Speicherinnendruck, der ein Eingangsrückschlagventil des Speichers in seiner Sperrstellung hält, und dadurch ein Rückströmen von Druckmedium aus dem Druckspeicher zu verhindert, wenn der mittels der mit Muskelkraft angetriebenen Pumpen des Druckversorgungsaggregats erzeugte Druck niedriger ist als der momentane Speicherdruck.

Zu diesem Zweck kann im Prinzip eine Verstellpumpe, z. B. eine Schrägscheibenachsialkolbenpumpe oder eine Flügelzellenpumpe geeignet sein, deren Fördervolumen veränderbar ist, derart, dass zur Erzielung eines hohen Ausgangsdrucks das Fördervolumen reduzierbar ist; natürlich versteht es sich, dass in praktischen Fällen die Fördermenge möglichst hoch sein soll, damit der Speicher rasch aufgeladen wird. In praxi muss mit zunehmendem Speicherdruck natürlich das Fördervolumen abgesenkt werden.

Hierbei ist es besonders günstig, wenn die hydraulische Antriebseinrichtung der Druckumsetzungseinrichtung stufenlos auf verschiedene Werte des Schluckvolumens einstellbar, um einen Fahrerwunsch nach Fahrzeugverzögerung und die "Geschwindigkeit" der Speicherladung in eine optimale Relation bringen zu können.

Durch eine Gestaltung der zur Drucktransformation ausgenutzten Druckumsetzungseinrichtung, bei der sowohl die Antriebseinrichtung als auch die Pumpeinrichtung mit Hilfe von Linearzylindern realisiert ist, ist die Druckumsetzungseinrichtung unter Beachtung hoher Präzisions- und Zuverlässigkeitserfordernissen gleichwohl einer einfachen Herstellung zugänglich und - konstruktionsbedingt - auch einer Bauweise mit relativ leichten Materialien, insbesondere Aluminium oder Magnesium zugänglich. In der Gestaltung der "linearen" Antriebseinrichtung mit hin- und her bewegbaren Kolben, ist auch eine einfache Ventilsteuerung über Anschläge möglich, deren Abstände voneinander zweckmäßigerweise einstellbar sind.

In Kombination hiermit ist es sowohl unter konstruktiven wie auch unter funktionellen Gesichtspunkten vorteilhaft, wenn auch die Pumpeinrichtung mittels linearer Kolbenpumpen implementiert ist, die in einer zur Konstruktion der Antriebseinrichtung analogen Bauweise realisiert sein kann, wobei die "linearen" Hin- und Herbewegungen des Kolbenaggregats der Antriebseinrichtung mittels eines gängigen Getriebes, das in der Art eines Zahnstangengetriebes ausgebildet sein kann, auf die Kolbenanordnung der Pumpeinrichtung übertragen werden kann.

Alternativ hierzu kann anstelle eines Zahnstangenritzel- oder eines Zahnradgetriebes ein Lenkergetriebe mit stangenförmigen Lenkerelementen eingesetzt werden, die durch Gelenke miteinander verbunden sind, deren Gelenkachsen senkrecht zu einer durch die Längsachsen der Antriebsvorrichtung und der Pumpeinrichtung eingespannten Ebene verlaufen.

In bevorzugter Gestaltung eines zur Antriebskopplung der Antriebseinrichtung und der Pumpeinrichtung vorgesehenen Getriebes umfasst dieses einen zweiarmigen Hebel, dessen Kraftarm-/Lastarm-Längenverhältnis einstellbar, und in besonders vorteilhafter Gestaltung stufenlos veränderbar ist.

In Kombination hiermit ist eine konstruktiv einfache und funktionell zuverlässige Gestaltung des Umsetzungsgetriebes dadurch gegeben, dass die Position des Mittelgelenks des zweiarmigen Hebels mittels eines zwischen der Antriebseinrichtung und der Pumpeinrichtung quer hin- und herverschiebbaren Schlittens zur Hebelarmlängeneinstellung auf einfache Weise veränderbar ist.

In bevorzugter Gestaltung des Leichtfahrzeuges ist das mittlere Schwenkgelenk 63 des zweiarmigen Hebels 43 tragende Schlitten 83 zur Einstellung des Hebelarmverhältnisses mittels eines ventilgesteuerten Hydraulikantriebes in alternativen Richtungen verschiebbar und in einer gewählten Position arretierbar, wobei der zur Verschiebung des Schlittens 83 vorgesehene Hydraulikantrieb einen doppelt wirkenden Linearzylinder 114 umfasst, dessen Kolben zug- und schubfest mit dem Schlitten 83 gekoppelt ist, und zur Bewegungssteuerung ein Nachlaufregelventil sein kann, das mit mechanischer Positionssollwertvorgabe und mit mechanischer Positionsistwertrückmeldung arbeitet und das Nachlaufregelventil 14 als lineares Schieberventil ausgebildet ist, dessen zentrale Längsachse parallel zur zentralen Längsachse des Stellzylinders des Schlittens 83 verlaufend angeordnet ist, wobei das Gehäuse des Nachlaufregelventils verschiebefest mit dem Schlitten 83 verbunden ist und die Positionssteuerung durch Verschiebung des Ventilkolbens erfolgt. Die Einstellung der Druckumsetzungseinrichtung auf situationsbedingt günstige Funktionszustände derselben ist dann auf besonders einfache - komfortable - Weise möglich.

Wenn die Druckumsetzungseinrichtung sowohl zur Steuerung des Speicherladebetriebes, d.h. als Bremssteuerergerät, als auch zur Steuerung des Fahrbetriebes benutzbar sein soll, so ist es besonders zweckmäßig, wenn die hydraulische Antriebseinrichtung und die hydraulische Pumpeinrichtung der Druckumsetzungseinrichtung gleich dimensioniert sind und demgemäß auch für beide Betriebssteuerungsarten gleichermaßen geeignet sind.

Zur vorzugsweise manuellen Wahl des Betriebsmodus ist in vorteilhafter Gestaltung der Funktionswahleinrichtung ein 3-Stellungsventil eingesetzt, das zusätzlich zu den durch Betätigung wählbaren Funktionsstellungen, die dem Fahrbetrieb bzw. dem Ladebetrieb zugeordnet sind, eine federzentrierte Sperrstellung als Mittelstellung (0) hat, die dem Fahrzeugstillstand zugeordnet ist.

Unter der - zum Zweck der Erläuterung vereinfachenden - Voraussetzung, dass das Druckversorgungsaggregat des Fahrzeuges mit einem konstanten Förderstrom seiner Pumpeinrichtung betreibbar ist, ist eine Geschwindigkeitsvorwahl und -einstellung im Prinzip auf einfache Weise dadurch möglich, dass das auf eine Umdrehung bezogene Schluckvolumen der Radantriebsmotore bzw. des Antriebsstranges des Fahrzeuges insgesamt diskret oder kontinuierlich veränderbar ist.

Auch ist eine kontinuierliche Veränderbarkeit der Fahrgeschwindigkeit des Fahrzeuges dadurch möglich, dass die Druckumsetzungseinrichtung zur Fahrbetriebssteuerung benutzt wird, wie schon erläutert, und z. B. durch kontinuierliche Veränderung des Hebelarmverhältnisses eines zur Hubsteuerung vorgesehenen zweiarmigen Hebels die Fahrgeschwindigkeit gesteuert wird.

Des Weiteren ist eine Art Steuerung der Fahrgeschwindigkeit auch über das Fördervolumen der Pumpeinrichtung des Druckversorgungsaggregats möglich.

Andererseits ist eine Steuerung der Fahrgeschwindigkeit über das Schluckvolumen des Antriebstranges auf einfache Weise dadurch möglich, dass vorzugsweise die Vorderradantriebsmotore ein größeres Schluckvolumen haben als die Hinterradantriebsmotore und eine achsweise Nutzung der Antriebsmotore möglich ist.

Bei radweiser Schaltbarkeit des Traktionsbetriebes der Vorderrad- und der Hinterradmotore ergeben sich zusätzliche Möglichkeiten der Geschwindigkeitsabstufung, wobei jeweils niedrigem Schluckvolumens des Antriebsstranges ein relativ hoher Wert der erreichbaren Fahrzeuggeschwindigkeit entspricht.

Im Falle einer individuellen Einschaltbarkeit des Traktionsbetriebes der einzelnen Radmotore können in sinnfälliger Weise fahrdynamisch günstige Radantriebskombinationen genutzt werden, wobei eine für die Erzielung hoher Fahrzeuggeschwindigkeiten günstige Gestaltung die eines Dreiradfahrzeug ist, das ein dem Durchmesser nach großes Hinterrad als Antrieb hat, so dass bei einem vergleichsweise kleinen Schluckvolumen des Hinterradantriebsmotors die Aufrechterhaltung einer relativ hohen Geschwindigkeit - auf ebener Fahrbahn zumindest - erreichbar ist.

Bei mehrsitzigen Ausführungsformen des erfindungsgemäßen Leichtfahrzeuges können ergonomisch besonders günstige Anordnungen und auch verschiedene Gestaltungen von Pumpen eingesetzt werden, die es erlauben, große Fahrstrecken und/oder vergleichsweise hohe Fahrtgeschwindigkeit ohne Hilfsenergie zu erreichen, d.h. einen Einsatzzweck des Fahrzeuges zu erfüllen, der bislang ausschließlich mit Fremdenergie betriebenen Motorfahrzeugen vorbehalten ist, insbesondere Fahrzeugen, die mit Brennkraftmaschinen betrieben werden.

Gleichwohl kann es auch in Kombination mit einem erfindungsgemäßen Leichtfahrzeug zweckmäßig sein, ein mit thermischer oder elektrischer Fremdkraft betriebenes Druckversorgungsaggregat einzusetzen, wobei ein solches zusätzliches Aggregat das klein gehalten sein kann, in das Fahrzeug ohne Schwierigkeit eingefügt und an einen zentralen Druckanschluss angeschlossen werden kann. Auch ein Mitführen eines solchen Aggregats gleichsam außerhalb des Fahrzeuges auf einem Anhängerfahrzeug ist möglich, wobei auf einem solchen Anhängerfahrzeug auch ein zusätzlicher Druckspeicher mitgeführt werden kann, der für Phasen rascher Beschleunigung oder längere Bergfahrtabschnitte nutzbar ist.

Gegenstand der Erfindung ist auch eine insbesondere für einen Einsatz bei einem hydraulisch antreibbaren Leichtfahrzeug der vorausgehend erläuterten Art geeignete Druckumsetzungseinrichtung zum Zweck einer Anpassung - Anhebung oder Absenkung - des Ausgangsdruckniveaus p2 einer hydraulischen Druckquelle an die Betriebsbedingungen eines hydraulischen Verbrauchers, als dessen Betriebs- bzw. Versorgungsdruckquelle die Druckumsetzungseinrichtung dient, die ihrerseits mit einem Eingangsdruck p1 beaufschlagbar ist, von dem der Versorgungsdruck p2 gemäß einer mindestens näherungsweise geltenden Beziehung der Form

$$p2 \cdot V2 = p1 \cdot V1$$

ableitbar ist, in der mit V2 das Fördervolumen einer eine Ausgangsstufe der Druckumsetzungseinrichtung bildenden Hydraulikpumpe und mit V1 das Schluckvolumen einer hydraulischen Antriebseinrichtung bezeichnet ist, mit der die Pumpeinrichtung der Druckumsetzungseinrichtung antreibbar ist, insbesondere zur Steuerung des Fahr- und/oder des Bremsbetriebes eines hydraulisch antreibbaren Leichtfahrzeuges.

Derartige Druckumsetzungseinrichtungen sind in einfachen, typischen Fällen als so genannte Druckübersetzer ausgebildet, die in üblicher Gestaltung einen 2-stufigen Kolben haben, der mit einer großflächigen Kolbenstufe einen Eingangsdruckraum und mit einer kleinerflächigen Kolbenstufe eine Ausgangsdruckkammer begrenzt und demgemäß mit einem Druckübersetzungsverhältnis p2/p1 = A1/A2 arbeitet, wobei mit A2 die Fläche der größeren Kolbenstufe und mit A1 die Fläche der kleineren Kolbenstufe bezeichnet wird.

Derartige Druckumsetzungseinrichtungen, die, je nach Bedarf zur Druckerhöhung mit dem genannten Übersetzungsverhältnis oder auch zur Druckerniedrigung im umgekehrten Verhältnis nutzbar sind, haben den Nachteil, dass das Druckumsetzungsverhältnis, das durch das Flächenverhältnis der Kolbenstufen gegeben ist, sehr genau auf den Einsatzzweck abgestimmt sein muss, da es in praxi nicht änderbar ist.

Besteht jedoch die Nebenbedingung, dass das Übersetzungsverhältnis einer Druckumsetzungseinrichtung bedarfsgerecht variabel sein soll, so ist mit der Lösung des diesbezüglichen Problems ein deutlich erhöhter technischer Aufwand verbunden. Beispielsweise ist es möglich, mit einer mittels eines Motors angetriebenen Verstellpumpe, z. B. einer Schrägscheibenaxialkolbenpumpe mit verstellbarem Anstellwinkel der Schrägscheibe, eine stetige Variation des Ausgangsdruckes der Pumpe und damit im Ergebnis auch eine veränderbare Relation zwischen einem Primärdruck p1 und dem erwünschten Ausgangsdruck der Pumpe zu erzielen, dies z. B. dadurch, dass ein druckgesteuerter Hydromotor als Antriebsmotor für die Pumpen verwendet wird, der mit einem definierten Antriebsdruck arbeitet.

Derartige Aggregate haben jedoch einen komplexen Aufbau und sind daher mit vergleichsweise hohen Herstellungskosten behaftet. Auch ist der Raumbedarf und das Gewicht solcher Aggregate vergleichsweise groß. Es kommt hinzu, dass derartige - bekannte - Motor-/Pumpenaggregate mit erheblichen Reibungsverlusten behaftet sind.

Demgegenüber soll eine Druckumsetzungseinrichtung geschaffen werden, die leicht und klein bauend realisierbar ist und innerhalb eines weiten Variationsbereiches - stufenlos - auf verschiedene Werte des Umsetzungsverhältnisses p2/p1 einstellbar ist, sowie mit deutlich geringeren Verlusten, z. B. Reibungsverlusten realisierbar ist, und dies bei gleichwohl kostengünstiger Herstellbarkeit.

Diese zusätzliche Aufgabe wird, dem Grundgedanken nach, durch die kennzeichnenden Merkmale des Patentanspruch 18 entsprechende Druckumsetzungseinrichtung gelöst, die gleichsam als Anpassungstransformator arbeitet, der den Druck von den Radmotoren zur Druckumsetzungseinrichtung geförderten Druckmediums auf mindestens das im Speicher vorgegebene Druckniveau "hoch"-transformiert, wodurch auf einfache Weise sichergestellt ist, dass der Speicher auch dann aufladbar ist, wenn der Ausgangsdruck, den die Radpumpen abgeben, signifikant niedriger ist, als z. B. der Speicherinnendruck, der ein Eingangsrückschlagventil des Speichers in seiner Sperrstellung hält, und dadurch ein Rückströmen von Druckmedium aus dem Druckspeicher zu verhindern; hierbei ist es besonders günstig ist, wenn die hydraulische Antriebseinrichtung der Druckumsetzungseinrichtung stufenlos auf verschiedene Werte des Schluckvolumens einstellbar ist. Hierbei ist es besonders vorteilhaft, wenn die Abstände hubbegrenzender Anschläge voneinander einstellbar sind.

Diese Druckumsetzungseinrichtung ist unter Beachtung hoher Präzisions-und Zuverlässigkeitserfordernissen gleichwohl einer einfachen Herstellung zugänglich und - konstruktionsbedingt - auch mit einer Bauweise in relativ leichten Materialien, insbesondere Aluminium oder Magnesium zugänglich.

Geeignete Gestaltungen der Druckumsetzungseinrichtung und ihres Nachlaufregelventils, die einzeln oder zu mehreren realisiert sein können, sind durch die Merkmale der Ansprüche 19 bis 23 in Einzelheiten spezifiziert, die der Fachmann, je nach Einsatzzweck, nutzen und erforderlichenfalls geeignet modifizieren kann.

Für den Fall eines Einsatzes der Druckumsetzungseinrichtung in einer Regelungseinrichtung ist es zweckmäßig, die Druckumsetzungseinrichtung mit der durch die Merkmale des Anspruchs 24 angegebenen Linearitätsbeziehung zwischen Regel- und Stellgröße zu realisieren.

Zur Reduzierung wirkungsgrad-mindernder Reibungsverluste ist es besonders vorteilhaft, wenn die Druckumsetzungseinrichtung mindestens für das zentrale Schwenkgelenk, mittels dessen der Hebel des Umsetzungsgetriebes an einem zur Übersetzungseinstellung verschiebbaren Schlitten gelagert ist, mit einer Einrichtung zur Kompensation von Lagerkräften versehen ist, die im Betrieb der Druckumsetzungseinrichtung mit alternierender Angriffsrichtung auftreten können.

Für eine derartige Lagerkraftkompensation im Bereich des "zentralen" Schwenklagers des zweiarmigen Hebels der Getriebeeinrichtung sind durch die Merkmale der Ansprüche 26 bis 29 geeignete Anordnungen und Gestaltungen von Kompensationskammern angegeben, die mit den in Lagerkräfte sich umsetzenden Antriebs- bzw. Ausgangsdrücken der Antriebseinheit und der Pumpeinheit der erfindungsgemäßen Druckumsetzungseinrichtung beaufschlagbar sind.

Hierzu analoge Maßnahmen, die zum Zweck einer Optimierung des Wirkungsgrades der erfindungsgemäßen Druckumsetzungseinrichtung eine vorteilhafte Leichtgängigkeit der Verschiebung eines das Schwenkgelenk tragenden Schlittens sowie des zweiarmigen Hebels in seiner zur Verstellung des Hebelarmverhältnisses vorgesehenen Führung dienen, sind durch die Merkmale der Ansprüche 30 und 31 näher spezifiziert.

Weitere Einzelheiten der erfindungsgemäßen Druckumsetzungseinrichtung ergeben sich aus der nachfolgenden Beschreibung spezieller Ausführungsbeispiele anhand der Zeichnung. Es zeigen:

Fig. 1 ein schematisch vereinfachtes Funktionsschema eines hydrau- lisch angetriebenen Leichtfahrzeuges mit einer zur Energierück- gewinnung im Bremsbetrieb sowie zur Betriebssteuerung des Fahrzeuges vorgesehenen, erfindungsgemäßen Druckumset- zungseinrichtung,

Fig. 2a eine schematisch vereinfachte Ansicht der Druckumsetzungsein- richtung gemäß Fig. 1 mit einer von einer hydraulischen An- triebseinrichtung angetriebenen hydraulischen Pumpeinrichtung zur Aufladung eines Druckspeichers, teilweise im Schnitt längs einer durch die zentrale Längsachse der Antriebseinrichtung und die zentrale Längsachse der Pumpeinrichtung aufgespannten Ebene, einschließlich hydraulischer Steuerungsperipherie,

Fig. 2b Einzelheiten einer Stelleinrichtung der Druckumsetzungseinrich- tung gemäß Fig. 2 zur stufenlosen Einstellung verschiedener Um- setzungsverhältnisse zwischen in die Einrichtung eingekoppeltem Primärdruck und zur Aufladung des Druckspeichers auskoppelba- rem Sekundärdruck, in einer der Fig. 2a entsprechenden Darstel- lung,

Fig. 2c ein vereinfachtes Blockschaltbild eines weiteren Ausführungsbei- spiels der Druckumsetzungseinrichtung;

Fig. 3a ein weiteres Ausführungsbeispiel einer erfindungsgemäßen Druckumsetzungseinrichtung mit einem kreisscheibenförmigen Lagerkörper für die schwenkbare Lagerung eines 2-armigen He- bels der Druckumset- zungseinrichtung an einem auf- und ab ver- schiebbaren Schlitten der Einrichtung, in einer den Fig. 2a und 2b entsprechenden, schematisch vereinfachter Ansichtsdarstellung,

Fig. 3b ein Detail der Druckumsetzung gemäß Fig. 3a, im Schnitt längs der Linie IIIa - IIIb der Fig. 3a, in vergrößertem Maßstab,

Fig. 3c den Schlitten der Druckumsetzungseinrichtung gemäß Fig. 3a im Schnitt längs der Linien IIIc - IIIc der Fig. 3a,

Fig. 3d die Druckumsetzungseinrichtung gemäß Fig. 3a im Schnitt längs der Linie IIId - IIId der Fig. 3a,

Fig. 4a eine schematisch vereinfachte Ansichtsdarstellung einer Stellein- richtung zur Einstellung des Hebelarmver- hältnisses bzw. des Druckumsetzungsverhältnisses $p_2/p_1$ einer Druckumsetzungsein- richtung gem. den Fig. 2a - 3d,

Fig. 4b    die Stelleinrichtung gemäß Fig. 4a, im Schnitt längs der Linie IVb - IVb der Fig. 4a,

Fig. 4c    ein Detail der Stelleinrichtung gemäß Fig. 4a, im Schnitt längs der Linie IVc - IVc der Fig. 4b und

Fig. 4d    eine schematisch vereinfachte, spezielle Konfiguration der Stell- einrichtung gemäß den Fig. 4a - 4c, zur Erläuterung der Funktion des speziellen Ausführungsbeispiels;

Fig. 4e    eine schematisch vereinfachte Darstellung einer Regelungsein- richtung als Erweiterung der Stelleinrichtung gemäß den Fig. 4a bis 4c und

Fig. 5    eine zur Druckversorgung des hydraulisch angetriebenen Leicht- fahrzeuges geeignete Zweizylinderpumpe im Schnitt längs einer die Zylinderachsen enthaltenen Ebene.

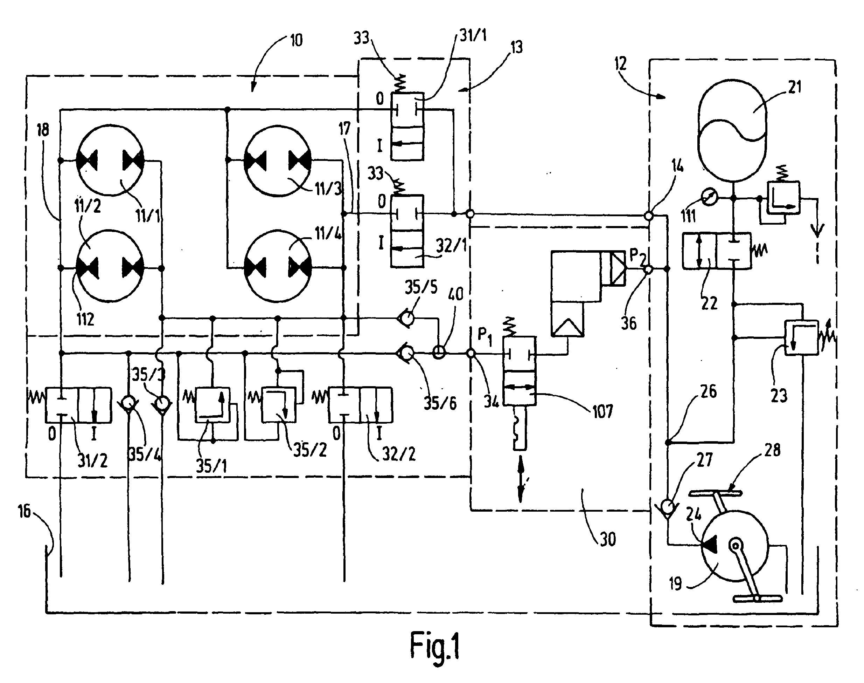

In der Fig. 1 ist insgesamt mit 10 der Antriebsstrang eines hydraulisch angetriebenen Fahrzeuges bezeichnet, das ohne Beschränkung der Allgemeinheit, d.h. lediglich zum Zweck der Erläuterung als Leichtfahrzeug mit vier antreibbaren Fahrzeugrädern vorausgesetzt sei, die jeweils durch einen Hydromotor 11/1 bis 11/4 repräsentiert sind, zu deren Druckversorgung ein insgesamt mit 12 bezeichnetes Druckversorgungsaggregat vorgesehen ist, das über eine insgesamt mit 13 bezeichnete Steuerventilanordnung, mittels derer der Vorwärtsfahrbetrieb und der Rückwärtsfahrbetrieb des Fahrzeuges ansteuerbar ist, an die Antriebshydromotore 11/1 bis 11/4 anschließbar ist. Diese Hydromotore 11/1 bis 11/4, zusammenfassend auch als Antriebsaggregat 11 bezeichnet, sind zwischen einem Ausgang 14 des Druckversorgungsaggregats 12 und dem insgesamt mit 16 bezeichneten Druckmediumvorratsbehälter hydraulisch "parallel" geschaltet, derart, dass sie - gleichzeitig - in den Vorwärtsfahrbetrieb oder den Rückwärtsfahrbetrieb schaltbar sind.

Die im Fahrbetrieb einander jeweils entsprechenden Motoranschlüsse, z. B. diejenigen Anschlüsse, die im Vorwärtsfahrbetrieb mit dem am Druckausgang 14 des Druckversorgungsaggregats 12 bereitgestellten hydraulischen Hochdruck, der in einer gängigen Auslegung um 200 bar betragen, jedoch auch signifikant höher sein kann, z. B. 400 bar, beaufschlagbar sind, sind an eine gemeinsame (Druck-) Versorgungsleitung 17 angeschlossen, die im Vorwärtsfahrbetrieb mit dem Hochdruckausgang 14 des Druckversorgungsaggregats 12 in kommunizierender Verbindung, einerseits, gehalten ist, und, andererseits, gegen den Vorratsbehälter 16 des Druckversorgungsaggregats 12 abgesperrt ist. Des Weiteren sind auch diejenigen Anschlüsse, die in dem angenommenen Betriebszustand mit dem Vorratsbehälter 16 kommunizierend verbunden sind, an eine gemeinsame (Rücklauf-) Tankleitung 18 angeschlossen, die - im Vorwärtsfahrbetrieb des Fahrzeuges - mit dem Vorratsbehälter 16 in kommunizierender Verbindung steht, jedoch gegen den Druckausgang 14 des Druckaggregats 12 abgesperrt ist.

Zur Einsteuerung des Rückwärtsfahrbetriebs werden die Antriebsmotore 11/1 bis 11/4 gleichsam "umgepolt", derart, dass die bei Vorwärtsfahrt zur Hochdruckzuführung genutzte Versorgungsleitung 17 in kommunizierende Verbindung mit dem Vorratsbehälter 16 geschaltet, jedoch gegen den Hochdruckausgang 14 des Druckversorgungsaggregats 12 abgesperrt wird, während gleichzeitig die andere Versorgungsleitung 18 über die Steuerventilanordnung 13 mit dem Hochdruckausgang 14 des Druckversorgungsaggregats 12 verbunden und dafür gegen den Vorratsbehälter 16 abgesperrt wird.

Für den Vorratsbehälter 16 ist vorausgesetzt, dass er, z. B. pneumatisch, auf einige bar vorgespannt ist, um unter den denkbaren Betriebsbedingungen der Pumpe(n) 19 des Druckversorgungsaggregats deren Befüllung zu garantieren und auch im Leerlauf der Radmotore 11/1 bis 11/4 und/oder, wenn diese in nachfolgend noch zu erläuternden Bremsphasen ihrerseits als Pumpen betrieben werden, deren Befüllung aus dem Vorratsbehälter zu gewährleisten. Typische Beträge der Druckvorspannung des Vorratsbehälters 16 liegen zwischen 3 und 5 bar.

Geeignete Motore, die eine derartige Drehrichtungsumkehr gleichsam durch Inversion der Funktionen Zu- und Rücklauf ermöglichen, sind z. B. zentral gesteuerte Radialkolbenmotore, die auch in einer Version mit gestellfeste Steuerteil und drehbarem Gehäuse auf einfache Weise als Nabenmotore verwendbar sind, wie für den betrachteten Einsatzfall zur Erläuterung angenommen: Derartige Nabenmotore sind in der deutschen Patentanmeldung DE 197 499 06 A1 beschrieben.

Natürlich versteht es sich, dass auch andere Typen von Hydromotoren mit umkehrbarer Drehrichtung zum angegebenen Zweck ebenfalls verwendbar sind.

Das Druckversorgungsaggregat 12 umfasst in der dargestellten, für sich bekannten Gestaltung eine Hydraulikpumpe, 19, die auf relativ hohe Ausgangsdrücke von z. B. 200 bis 300 bar ausgelegt ist, weiter einen auf entsprechend hohe Drücke ausgelegten Druckspeicher 21, der mittels der Hydraulikpumpe 19 aufladbar ist, sowie ein als 2/2-Wegeventil dargestelltes Umschaltventil 22, über das der Speicher 21 aufladbar bzw. an den Verbraucher, d.h. das Antriebsaggregat 11 anschließbar ist, und ein Druckbegrenzungsventil 23, mittels dessen der Maximalwert des Druckes einstellbar ist, auf den der Druckspeicher 21 aufladbar ist.

Des Weiteren ist zwischen den Druckausgang 24 der Hydraulikpumpe 19 und den verbraucherseitigen Anschluss 26 des Umschaltventils 22, ein Ausgangsrückschlagventil 27 geschaltet, das durch relativ höheren (Ausgangs-) Druck am Druckausgang 21 der Pumpe 19 als am verbraucherseitigen Ventilanschluss 26 in Öffnungsrichtung beaufschlagt und sonst sperrend ist.

Für den Fall, dass das durch den Antriebsstrang 10 repräsentierte Fahrzeug als ein sehr leichtes (Ultraleicht-) Fahrzeug ausgebildet ist, was zum Zweck der Erläuterung angenommen sei, kann die Pumpe 19 eines Druckversorgungsaggregates 12 als eine mit Muskelkraft antreibbare Pumpe ausgebildet sein, zu deren Antrieb beispielsweise ein schematisch angedeuteter Pedalantrieb 28 vorgesehen sein kann, der entweder direkt an einer Antriebswelle des Rotors der Pumpe 19 eingreift oder über ein nicht dargestelltes, schaltbares Getriebe mit dem Rotor der Pumpe 19 des Druckversorgungsaggregats antriebsgekoppelt ist.

Die zur Steuerung der Funktionen "Vorwärts"- und "Rückwärts"-Fahrt vorgesehene Steuerventilanordnung 13 ist in einer einfachst möglich erscheinenden Realisierungsform, bei der z. B. nur diese Umschaltung zwischen den Fahrtrichtungen vorgesehen ist und eine Geschwindigkeits- und Drehmoment-"Regelung" einer geeigneten Betätigung der Pumpe 19 des Druckversorgungsaggregats 12 vorbehalten ist, in einer aufgelösten d.h. allein mit 2/2-Wegeumschaltventilen realisierten Gestaltung dargestellt, derart, dass diese Ventile nur zwischen einer Durchflussstellung und einer Sperrstellung umschaltbar sind.

Demgemäß ist den beiden Druckversorgungsleitungen 17 und 18, zwischen denen die Antriebshydromotore 11/1 bis 11/4 parallel geschaltet sind, je ein Paar von Anschlusssteuerventilen 31/1 und 31/2 sowie 32/1 und 32/2 zugeordnet, die jeweils als 2/2-Wegeventile vorausgesetzt sind, die als alternative Funktionsstellungen je eine Sperrstellung und eine Durchflussstellung haben.

Die Steuerventile 31/1 und 31/2 sowie 32/1 und 32/2 haben als Grundstellung 0 jeweils ihre Sperrstellung, in die sie durch die Wirkung einer vorgespannten Ventilfeder 33 gedrängt werden.

Wenn die Steuerventile 32/1 und 31/2 sowie 31/1 und 32/2 ihre - sperrende - Grundstellung 0 einnehmen, verharrt das Fahrzeug im Stillstand, da weder Druckmedium über das Zuflusssteuerventil 31/1 oder das Zuflusssteuerventil 32/1 den Motoren zuströmen noch Druckmedium über das Abflusssteuerventil 31/2 oder das Abflusssteuerventil 32/2 zum Vorratsbehälter hin abströmen kann.

Davon ausgehend, dass das Fahrzeug in "Vorwärts" Richtung fährt, wenn über die P-Versorgungsleitung 17 bei geöffnetem Steuerventil 32/1 den Hydromotoren 11/1 bis 11/4 Druckmedium vom Druckausgang 14 des Druckversorgungsaggregats 12 her zuströmen kann, und über die Leitung 18 aus den Hydromotoren 11/1 bis 11/4 austretende Flüssigkeit über das in die Offenstellung I geschaltete Abflusssteuerventil 31/2 zum Vorratsbehälter 16 des Druckversorgungsaggregats 12 hin abströmen kann, und dass das Fahrzeug in Rückwärtsrichtung fährt, wenn diese Funktionen der beiden Versorgungsanschlussleitungen 17 und 18 gleichsam vertauscht sind, d.h. über die Leitung 17 Druckmittel abströmt, das den Motoren über die Leitung 18 zugeleitet wird, sind diese Fahrzeugbetriebszustände wie folgt einsteuerbar:

Für den Vorwärtsfahrbetrieb wird das eine Zuflusssteuerventil 32/1 in seine Durchflussstellung I geschaltet, während das andere Zuflusssteuerventil 31/1 in seiner sperrenden Grundstellung 0 gehalten bleibt. Des Weiteren wird das Abflusssteuerventil 31/2 in seine Durchflusssteuerung I gesteuert, und das andere Abflusssteuerventil 32/2 bleibt in der sperrenden Grundstellung 0. Von diesem Vorwärtsfahrzustand ausgehend, erfolgt die Einsteuerung des Rückwärtsfahrbetriebszustandes dadurch, dass die zuvor gesperrt gewesenen Steuerventile 31/1 und 32/2 in die Durchflussstellungen I umgeschaltet und dafür die zuvor in der Durchflussstellung I befindlichen Steuerventile 32/1 und 31/2 in die Durchflussstellung I umgeschaltet werden.

Zum Zweck einer so genannten Maximaldrucksekundär-"Absicherung', durch die, unabhängig von Ventilschaltvorgängen, der Antriebsstrang 10 gegen Beschädigungen geschützt werden soll, die durch Druckspitzen verursacht werden könnten, die z. B. aus einer unsachgemäßen Ventilumschaltung resultieren, sind zwei Druckbegrenzungsventile 35/1 und 35/2 vorgesehen, die zwischen die Vorwärtsfahrtdruckversorgungsleitung 17 und die Rückwärtsfahrtdruckversorgungsleitung 18 geschaltet sind.

Diese beiden Sicherheitsdruckbegrenzungsventile 35/1 und 35/2 können auf denselben Druckschwellenwert eingestellt sein wie das Druckbegrenzungsventil 23 des Druckversorgungsaggregats 12, können aber auch bei Bedarf auf andere, insbesondere höhere Werte des Druckes eingestellt werden, z. B. um hohe Bremskräfte erzielen zu können.

Des Weiteren umfasst die Steuerventilanordnung den beiden Druckversorgungsleitungen 17 und 18 einzeln zugeordnete Rückschlagventile 35/3 und 35/4, über die, jeweils im Leerlaufbetrieb, d.h. wenn am Hochdruckausgang 14 des Druckversorgungsaggregats 12 Druckmedium, das unter hohem Druck steht, nicht nachgeliefert wird, Druckmedium aus dem Tank zu den jeweiligen Druckanschlüssen der Hydromotore 11/1 bis 11/4 strömen kann, das dann mittels der im Leerlauf als Pumpen wirkenden Nabenmotore entweder über das geöffnete Steuerventil 31/2 wieder zum Tank 16 abströmen kann, oder, falls das Umschaltventil 31/2 geschlossen ist und die Nabenmotore als Pumpen wirken, zum Primäranschluss 34 einer Druckumsetzungseinrichtung 30 strömen kann; auch an diesen sind die beiden Anschlussleitungen 17 und 18 über je ein Rückschlagventil 35/5 bzw. 35/6 angeschlossen, die durch relativ höheren Druck in der jeweiligen Druckversorgungsleitung 17 bzw. 18 als am Primäranschluss 34 der Druckumsetzungseinrichtung 30 in Öffnungsrichtung beaufschlagt und sonst sperrend sind.

Des weiteren umfasst die Steuerventilanordnung 13/2, die einzeln den beiden Druckversorgungsleitungen 17 und 18 zugeordnete Rückschlagventile 35/3 und 35/4, über die, jeweils im Leerlaufbetrieb, d.h. wenn am Hochdruckausgang 14 des Druckversorgungsaggregats 12 Druckmedium, das unter hohem Druck steht, nicht nachgeliefert wird, Druckmedium aus dem Tank zu den jeweiligen Druckanschlüssen der Hydromotore 11/1 bis 11/4 strömen kann, das dann mittels der im Leerlauf als Pumpen wirkenden Nabenmotore entweder über das geöffnete Steuerventil 31/2 wieder zum Tank 16 abströmen kann, oder, falls das Umschaltventil 31/2 geschlossen ist und die Nabenmotore als Pumpen wirken, zum Primäranschluss 34 der Druckumsetzungseinrichtung 30 strömen kann; auch an diesen sind die beiden Anschlussleitungen 17 und 18 über je ein Rückschlagventil 35/5 bzw. 35/6 angeschlossen, die durch relativ höheren Druck in der jeweiligen Druckversorgungsleitung 17 bzw. 18 als am Primäranschluss 34 der Druckumsetzungseinrichtung 30 in Öffnungsrichtung beaufschlagt und sonst sperrend sind.

Hierbei versteht es sich, dass es bei einem Wechsel der Fahrtrichtung zweckmäßig ist, zwischen Vorwärts- und Rückwärtsfahrbetrieb eine Stillstandsphase einzusteuern, d.h. zuerst die beiden Ventile, die im Vorwärtsfahrbetrieb ihre Durchflussstellung I eingenommen hatten, in die sperrende Grundstellung 0 zurückzuschalten, bevor die Ventile 31/1 und 32/2, die im Rückwärtsfahrbetrieb offen sein müssen, in ihre jeweilige Durchflussstellung I umgeschaltet werden.

Die insoweit erläuterte Art der Fahrbetriebssteuerung ist auch - alternativ zu der Steuerventilanordnung mit vier 2/2-Wegeumschaltventilen 31/1 und 31/2 sowie 32/1 und 32/2, die individuell in ihre alternativen Funktionssteuerungen steuerbar sind, mit Hilfe eines einzigen nicht dargestellten 4/3-Wegeventils möglich, das zwei Versorgungsanschlüsse, nämlich einen P-Druckanschluss und einen T-Behälteranschluss hat sowie zwei kommutierbare Verbraucheranschlüsse, die alternativ an den Druckausgang 14 des Druckversorgungsaggregat 12 und dessen Vorratsbehälter 16 anschließbar sind.

Ein derartiges 4/3-Wegeventil hat dann zweckmäßigerweise eine "zentrale" Grundstellung "0" als Sperrstellung, in der die Versorgungsanschlüsse gegeneinander und gegen die Verbraucheranschlüsse abgesperrt sind und diese Anschlüsse auch gegen das Druckversorgungsaggregat und dessen Vorratsbehälter 16 abgesperrt sind; sowie zwei - alternative - Funktionsstellungen I und II, deren eine, z. B. die Funktionsstellung I dem Vorwärtsfahrbetrieb und deren zweite - die Funktionsstellung II - dem Rückwärtsfahrbetrieb zugeordnet sind. Bei einer derartigen Realisierung der Steuerventilanordnung als 4/3-Wegeventil entspräche dessen "zentraler", sperrender Grundstellung 0, die in der Fig. 1 dargestellte Sperrstellung der insgesamt vier Steuerventile, während die Funktionsstellung I des Dreistellungsventils derjenigen Funktionsstellung der Vierventilanordnung entspräche, in der das Umschaltventil 32/1 und das Umschaltventil 31/2 jeweils die Durchflussstellung I einnehmen und die beiden anderen Ventile 31/1 und 32/2 gesperrt sind; die andere Funktionsstellung des Dreistellungventils - die Rückwärtsfahrstellung - entspräche dann demjenigen Schaltzustand der Steuerventilanordnung 13, in dem die Umschaltventile 31/1 und 32/2 in die Durchflussstellung I geschaltet sind, während die beiden anderen Steuerventile 32/1 und 31/2 in der Sperrstellung 0 gehalten sind.

Zwischen das durch die vier Hydromotore 11/1 bis 11/4 gebildete Antriebsaggregat 11 und das Druckversorgungsaggregat 12, das im "normalen Vorwärtsfahrbetrieb" des Antriebsaggregats 11, d.h. nach einer mehr im einzelnen noch zu erläuternden Anfahr- und Beschleunigungsphase - im wesentlichen allein - die Druckversorgung des Antriebsaggregats 11 über die P-Versorgungsleitung 17 vermittelt, ist die insgesamt mit 30 bezeichnete, erfindungsgemäße Druckumsetzungseinrichtung funktionell eingefügt, die in einem Bremsbetrieb des Fahrzeuges, allgemeiner ausgedrückt in einem Betriebszustand des Fahrzeuges, in dem mindestens einige seiner Radantriebsmotore 11/1 bis 11/4 als Hydraulikpumpen arbeiten, eine Aufladung des Druckspeichers 21 des Druckversorgungsaggregats 12 bewirken kann.

In dem zur Erläuterung gewählten, speziellen- Einsatzfall gemäß Fig. 1 vermittelt die Druckumsetzungsein-richtung 30 beispielsweise die Funktion, dass für den Fall, dass an dem Primäranschluss 34 der Druckumsetzungsein-richtung 30 in diese Druckmedium auf dem Druckniveau $p_1$ eingekoppelt wird, an einem als Ausgang fungierenden Sekundäranschluss 36 der Druckumsetzungseinrichtung 30 Druckmedium auf einem für eine Aufladung des Druckspeichers 21 hinreichend hohen Druckniveau $p_2$ bereitgestellt wird.

Die Druckumsetzungseinrichtung 30 dient bei dem zur Erläuterung gewählten Einsatzbeispiel als Speicherladegerät, das durch eine Aufladung des Druckspeichers 21 eine mindestens teilweise Rückgewinnung der durch einen Bremsvorgang zu vernichtenden kinetischen Energie des Fahrzeuges ermöglicht; hierdurch wird erreicht, dass für eine nach einer Bremsung erfolgende Wiederbeschleunigungsphase ein erheblicher Anteil der hierfür erforderlichen Energie dem Speicher 21 des Druckversorgungsaggregats 12 entnehmbar ist.

Des Weiteren ist durch die Druckumsetzungseinrichtung 30 auch die Funktion eines Bremsgeräts implementiert, mit dem der Fahrer eine erwünschte Fahrzeugverzögerung stufenlos einsteuern kann.

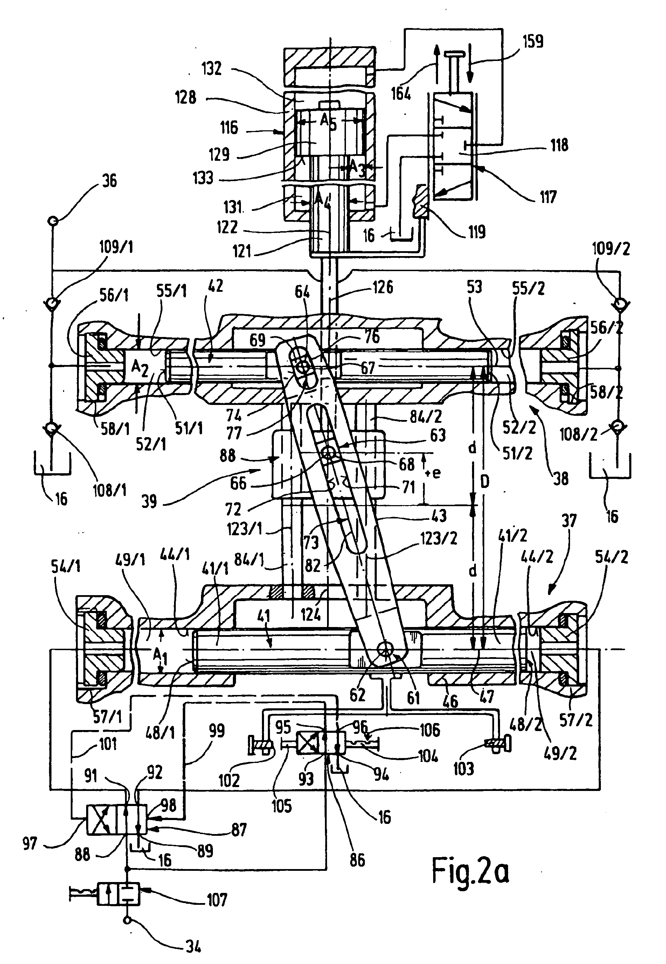

Zur Erläuterung des Bau- und Funktionsprinzips der Druckumsetzungseinrichtung 30 sei nunmehr auf die baulichen Einzelheiten des in der Fig. 2a dargestellten - speziellen - Ausführungsbeispiels Bezug genommen.

Die Druckumsetzungseinrichtung 30 gemäß Fig. 2a besteht, verallgemeinernd ausgedrückt, aus einer insgesamt mit 37 bezeichneten hydraulischen Antriebseinheit und einer mit dieser antreibbaren, insgesamt mit 38 bezeichneten Pumpeinheit, die mittels der Antriebseinheit 37 über eine insgesamt mit 39 bezeichnete Getriebeeinheit, die die Einstellung unterschiedlicher Übersetzungsverhältnisse erlaubt, antreibbar ist, derart, dass ein mittels der Pumpeinheit 38 erzeugbarer Ausgangsdruck p2 mit dem Eingangsdruck p1, mit dem die hydraulische Antriebseinheit 37 als Antriebsdruck beaufschlagbar ist, gemäß einer Beziehung der Form

$$p_2 = ü \cdot p_1$$

verknüpft ist, in der mit ü ein Druckübersetzungsverhältnis bezeichnet ist, das durch die Konstruktion der Druckumsetzungseinrichtung und Einstellung der Getriebeeinheit 39 vorgebbar und/oder während des Betriebes der Druckumsetzungseinrichtung 30 bedarfsgerecht z. B. stufenlos veränderbar ist.

Das Druckübersetzungsverhältnis ü, ist im betrachteten Fall eine Funktion der wirksamen Kolbenflächen A1 und A2 von Antriebskolben der Antriebseinheit 37 und Pumpenkolben 42 der Pumpeinheit 38 sowie von Hebelarmlängen eines als zweiarmiger Hebel 43 dargestellten - mechanischen - Kraftübertragungsgliedes, mittels dessen die von der hydraulischen Antriebseinheit 37 erzeugte Antriebskraft auf den zur Druckerzeugung mittels der Pumpeinheit 38 vorgesehenen Pumpenkolben 42 übertragen wird. Mehr im Einzelnen ist die Druckumsetzungseinrichtung 30 gemäß Fig. 2a wie folgt realisiert:

Die Antriebseinheit 37 hat als Antriebskolben 41 einen langgestreckten, zylindrisch-stabförmigen Kolbengrundkörper mit Endabschnitten 41/1 und 41/2, die in miteinander fluchtenden, einander gegenüberliegend angeordneten Antriebskammerbohrungen 44/1 und 44/2 eines lediglich schematisch angedeuteten, insgesamt mit 46 bezeichneten Gehäuses der Druckumsetzungseinrichtung 30 druckdicht verschiebbar aufgenommen sind.

Die beiden Antriebskammerbohrungen 44/1 und 44/2 sind koaxial bezüglich einer gemeinsamen zentralen Längsachse 47 angeordnet.

Innerhalb der Antriebskammerbohrungen 44/1 und 44/2 sind durch die Kolbenendstirnflächen 48/1 und 48/2 des Flächenbetrages A1 Antriebskammern 49/1 und 49/2 der hydraulischen Antriebseinheit 37 axial beweglich begrenzt, durch deren alternierende - ventilgesteuerte - Beaufschlagung mit dem Primärdruck p1 der Antriebskolben 41 zur Ausführung von Hin- und Herbewegungen ansteuerbar ist, die mittels der Getriebeeinheit 39 in damit korrelierte Hin- und Herbewegungen eines seinerseits langgestreckt zylindrisch-stabförmigen Pumpenkolbens 42 umsetzbar sind, der seinerseits mit seinen Endstirnflächen 51/1 und 51/2 die axial beweglichen Begrenzungen von Pumpenkammern 52/1 und 52/2 der Pumpeinrichtung 38 bildet, in denen die Endabschnitte 42/1 und 42/2 des Pumpenkolbens 42 der hydraulischen Pumpeinheit 38 der 30 druckdicht verschiebbar geführt sind.

Die - gemeinsame - zentrale Längsachse 53 der beiden Pumpenkammern 52/1 und 5212 sowie des Pumpenkolbens 42 verläuft parallel zur zentralen Längsachse 47 der hydraulischen Antriebseinheit 37 und in einem Abstand D von dieser, dem der effektive Mindestwert der Länge des zweiarmigen Hebels 43 entspricht, der die Bewegungskopplung des Antriebskolbens 41 und des Pumpenkolbens 42 vermittelt.

Die jeweiligen axial gehäusefesten Begrenzungen der Antriebskammern 49/1 und 49/2 der Antriebseinheit 37 bzw. der Pumpenkammern 52/1 und 52/2 der Pumpeinheit 38 der 30 sind bei dem zur Erläuterung gewählten Ausführungsbeispiel als in die jeweiligen Kammerbohrungen druckdicht eingesetzte, lediglich schematisch angedeutete Stopfen 54/1 und 54/2 bzw. 56/1 und 56/2 ausgebildet, die jeweils von einander gegenüberliegenden Seiten des Gehäuses her in Bohrungsstufen 57/1 und 57/2 bzw. 58/1 und 58/2 einsetzbar sind, deren Durchmesser größer ist als der Durchmesser, der die Antriebskammern 49/1 und 49/2 bzw. die Pumpenkammern 52/1 und 5212 jeweils radial begrenzenden Gehäusebohrungen, damit die Montage der Antriebseinheit 37 und der Pumpeinheit 38 auf einfache Weise möglich ist, wenn, wie dargestellt, die jeweils zwei Kammern begrenzenden Kolben 41 und 42 als einstückige Teile ausgeführt sind, die in die exakt miteinander fluchtenden Bohrungsstufen 44/1 und 44/2 bzw. 55/1 und 55/2 des Gehäuses 46 der Druckumsetzungseinrichtung 30 einsetzbar sein müssen.

Zu diesem Zweck der einfachen Montage kann es allerdings ausreichend sein, wenn ein derartiger, in das Gehäuse einsetzbarer Stopfen lediglich einseitig, d.h. zum axial gehäusefesten druckdichten Abschluss lediglich einer der jeweiligen Bohrungsabschnitte vorgesehen ist und der andere Bohrungsabschnitt in der Art eines Sackloches "blind" im Gehäuse endet.

In der zur Erläuterung gewählten, speziellen Gestaltung der Druckumsetzungseinrichtung 30 ist die kinematische Kopplung des Antriebskolbens 41 mit dem Pumpkolben 42 mittels des zweiarmigen Hebels 43 in der Weise realisiert, dass dieser zweiarmige Hebel 43 mittels eines Festgelenks 61 mit dem Antriebskolben 41 schwenkbar verbunden ist, dessen Gelenkachse 62 senkrecht auf der durch die zentralen Achsen 47 und 53 der Kolben 41 und 42 der Antriebseinrichtung 37 bzw. der Pumpeinrichtung 38 aufgespannten Hebelebene verläuft, während die beiden anderen Gelenke 63 und 64, deren Gelenkachsen 66 bzw. 67 parallel zur Gelenkachse 62 des Festgelenks 61 verlaufen, mit Hilfe schwenkbarer Gleitsteine 68 bzw. 69 realisiert sind, die um die Gelenkachsen 66 und 67 der weiteren Hebelgelenke 63 bzw. 64 drehbar angeordnet sind und zwischen parallelen Schlitzwangen 71 und 72 eines langgestreckten, zentralen Langloches 73 des zweiarmigen Hebels 43 bzw. den parallelen Wangen 74 und 76 eines am gegenüberliegenden Ende des zweiarmigen Hebels 43 angeordneten Langloches 77 des Hebels 43 gleitend verschiebbar geführt sind, wobei diese Gleitsteine um Gelenkzapfen 78 bzw. 79 drehbar angeordnet sind, derart, dass bei Dreh- bzw. Schwenkbewegungen des Hebels 43 Relativbewegungen zwischen diesem und den - schwenkbaren - Gleitsteinen möglich sind.

Der Gelenkzapfen 79 des den Pumpenkolben 42 gelenkig mit dem zweiarmigen Hebel 43 verbindenden Schwenklagers bzw. -gelenks 64 ist fest mit dem Pumpenkolben 42 verbunden, z. B. in eine Querbohrung desselben mit Presssitz eingesetzt, wobei dieses Gelenk "mittig" zwischen den Kolbenendstirnflächen 51/1 und 51/2 angeordnet ist, die die axial beweglichen Begrenzungen der beiden Pumpenkammern 52/1 und 52/2 bilden.

Die beiden jeweils im Bereich der Enden des zweiarmigen Hebels 43 angeordneten Gelenke 61 und 64 sind jeweils "mittig" in zentralen Bereichen des Antriebskolbens 41 bzw. des Pumpenkolbens 42 angeordnet, die in den möglichen Anordnungen dieser Kolben nicht in die Gehäusebohrungen 44/1 und 44/2 bzw. 55/1 und 55/2 eintauchen, welche die radial gehäusefesten Begrenzungen der Antriebskammern bzw. der Pumpenkammern der Druckumsetzungseinrichtung 30 bilden, für die im übrigen - stillschweigend - vorausgesetzt sei, dass in einer Mittelposition der Kolben 41 und 42 die zu deren zentralen Achsen 47 und 53 senkrecht verlaufende, durch die Gelenkachsen 62, 66 und 67 aufgespannte "Gelenk"-Ebene 82, die gleichzeitig auch eine Längsmittelebene des zweiarmigen Hebels 43 ist, rechtwinklig zu den zentralen Achsen 47 und 53 des Antriebskolbens 41 bzw. des Pumpenkolbens 42 verläuft.

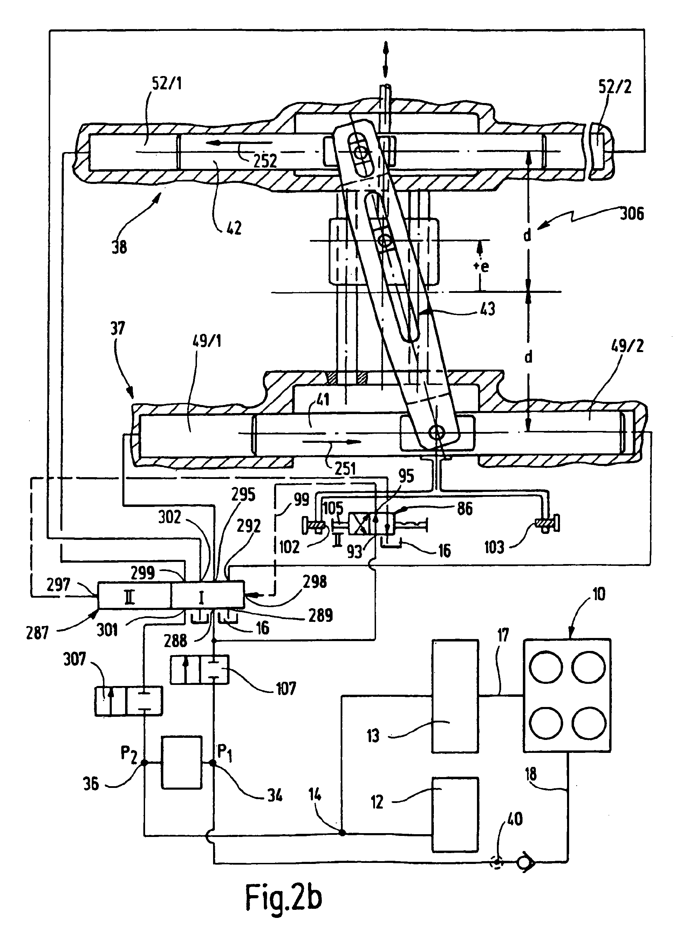

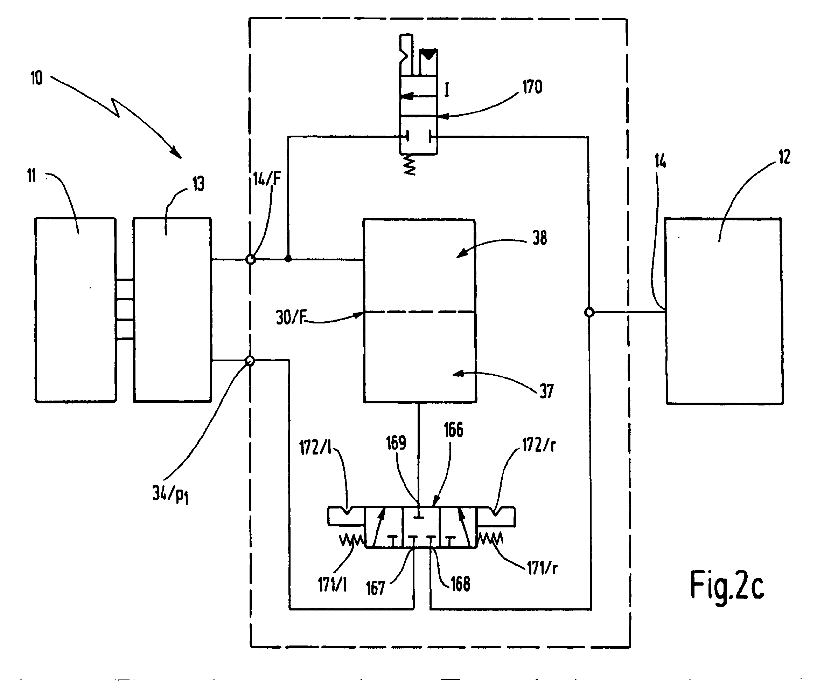

Der Gelenkzapfen 78 des "mittleren" Schwenkgelenks 63, das zwischen den endständigen Schwenkgelenken 61 und 64 der Druckumsetzungseinrichtung 30 angeordnet ist, ragt von einem rechtwinklig zu den Längsachsen 47 und 53 der Antriebs- und der Pumpenkolbenanordnung geführt verschiebbaren Schlitten 83 auf, der an gehäusefesten, "parallelen" Führungselementen 84/1 und 84/2 geführt ist, die sich zwischen den Gehäusebereichen erstrecken, welche jeweils die hydraulische Antriebseinrichtung 37 und die hydraulische Pumpeinrichtung 38 der Einrichtung 30 aufnehmen, wie schematisch der Fig. 2 entnehmbar.

Durch Verschiebung des Schlittens 83 zwischen seinen möglichen, dem Antriebskolben 41 oder dem Pumpenkolben 42 nähen Endpositionen ist das Hebelarmverhältnis des zweiarmigen Hebels 43 einstellbar, dessen Kraftarmlänge (d+e) durch den Abstand des Festgelenks 61 vom mittleren Schwenkgelenk 63 und dessen Lastarmlänge (d-e) durch den Abstand des mittleren Schwenkgelenks 63 von dem pumpenseitigen Schwenkgelenk 64 bestimmt sind.

Hierbei ist mit "d" der halbe Betrag des Abstandes D der zentralen Längsachse 53 der Pumpeinrichtung 38 von der zentralen Längsachse 47 der Antriebseinrichtung 37 der Druckumsetzungseinrichtung 30 bezeichnet und mit "e" der Betrag, um den, je nach der Position des Schlittens 83 der Abstand der Gelenkachse 66 des mittleren Gelenks 63 des zweiarmigen Hebels 43 von der zentralen Achse 62 des Festgelenks 61 unterscheidet, das den zweiarmigen Hebel 43 mit dem Kolben 41 der Antriebseinrichtung 37 koppelt. Dieser Betrag e, die "Exzentrizität" der Anordnung des mittleren Gelenks 63 des zweiarmigen Hebels 43 ist, gleiche Beträge der Kolbenfläche A1 und A2 vorausgesetzt, ein direktes Maß für das Hebelarmverhältnis, bezogen auf die Mittelposition, der Gleichheit der Länge von Kraftarm und Lastarm entspricht.

Je nach Einsatz und Verwendungszweck der Druckumsetzungsreinrichtung 30 kann ein fest vorgegebener Wert dieses Hebelarmverhältnisses genutzt werden, oder es kann, z. B. zu Regelungszwecken, eine einsteuerbare Variation dieses Hebelarmverhältnisses - der Stützenposition - genutzt werden, zu welchem Zweck ein Stellantrieb für den Schlitten 83 vorgesehen ist, der von Hand oder mit Hilfsenergie betätigbar ist und nachfolgend anhand spezieller Gestaltungen noch näher erläutert werden wird.

In einer speziellen Gestaltung ist die Druckumsetzungseinrichtung 30 dahingehend ausgelegt, dass als Grundstellung diejenige Konfiguration der Einrichtung dient, in der der Schlitten 83, der das mittlere Schwenklager 63 trägt, die Position maximalen Abstandes des mittleren Schwenklagers 63 vom Festlager 61 einnimmt, d.h. der Kraftarm des zweiarmigen Hebels seine minimale Länge hat, und der Lastarm, dessen Länge durch den effektiven Abstand der Schwenkachsen 66 und 67 der an den Gleitsteinen angeordneten Schwenklager 63 und 64 bestimmt ist, seine maximale Länge hat.

Davon ausgehend, dass der Schlitten 83, der das mittlere Schwenklager 63 trägt, aus einer Mittelposition, in der die Schwenkachse 66 des mittleren Schwenklagers 63 von der zentralen Längsachse 47 der Antriebseinrichtung 37 und der zentralen Längsachse 53 der Pumpeinrichtung 38 jeweils den selben Abstand d hat, um jeweils den selben Betrag e zur Antriebseinrichtung 37 bzw. zur Pumpeinrichtung 38 hin auslenkbar ist, und innerhalb dieses Auslenkungsbereichs auf beliebige Werte "stetig" einstellbar ist, kann das Hebelübersetzungsverhältnis Lastarm (la) / Kraftarm (lk) zwischen einem Maximalbetrag von (d+ | e | ) / (d- | e | ) und einem Minimalbetrag von (d- | e | ) / (d+e) variieren.

Unter der Voraussetzung, dass die Beträge A1 der mit Druck beaufschlagbaren Flächen des Antriebskolbens 41 und die entsprechenden Flächen A2 des Pumpenkolbens 42 denselben Betrag A haben, entspricht das Verhältnis der Drücke $p_2/p_1$, die im Betrieb der Umsetzungseinrichtung 30 als Ausgangsdruck $p_2$ abgegeben werden, wenn die Antriebseinrichtung 37 mit dem Eingangsdruck $p_1$ beaufschlagt wird, dem Verhältnis der Hebelarmlängen lk/la.

Sind die wirksamen Kolbenflächen A1 des Antriebskolbens 41 und die wirksamen Kolbenflächen A2 des Pumpenkolbens 42 voneinander verschieden, so ist das Übersetzungsverhältnis ü der Drücke $p_1$ und $p_2$ durch die Beziehung

$$\ddot{u} = \frac{p_2}{p_1} = \frac{A_1 lk}{A_2 la} = \frac{A_1(d + e)}{A_2(d - e)}$$

gegeben. Die Lastarmlänge la und die Kraftarmlänge lk können jeweils zwischen den Beträgen d+e und d-e variieren, unter der Nebenbedingung, dass gilt lk+la=D und

$$D=2d.$$

In allgemeiner Form ist das Übersetzungsverhältnis ü der Drücke p2 und p1 durch eine Beziehung der Form

$$\ddot{u} = \frac{p_2}{p_1} = \frac{A_1}{A_2} \cdot \frac{(d+x)}{(d-x)}$$

gegeben, wobei x zwischen e und (-e) variieren kann.

Einen hinreichend weiten Einstellbereich des Hebelverhältnisses Lastarm/Kraftarm des zweiarmigen Hebels 43 vorausgesetzt, eröffnet die Einrichtung 30 die Möglichkeit, einen auf ein relativ hohes Druckniveau aufgeladenen Druckspeicher auch dann weiterhin aufzuladen, wenn der Primärdruck $p_1$, der zum Antrieb der Pumpeinrichtung zur Verfügung steht, relativ niedrig ist; die Druckumsetzungseinrichtung 30 mit der insoweit erläuterten Gestaltung eignet sich daher insbesondere für Speicherladeschaltungen mit hohem Speicherdruckniveau, da sie eine rationelle Druckspeicherung auf dem hohen Druckniveau auch dann ermöglicht, wenn die zur Rekuperation weitere Energie auf relativ niedrigem Primärdruckniveau anfällt.

In einer Gestaltung mit handhebel- oder pedalgesteuerter Einstellbarkeit des Hebelarmverhältnisses ist die Druckumsetzungseinrichtung 30 z. B. als Verzögerungssteuergerät einer hydraulischen Speicherbremsanlage geeignet.

Die Druckumsetzungseinrichtung ist bei dem zur Erläuterung betrachteten Einsatzfall primärseitig über ihren Primäranschluss 34 an den Ausgang 40 (Fig. 2b) der Ventilanordnung 13 angeschlossen, der beim speziellen Einsatzbeispiel durch den gemeinsamen Anschluss der beiden Ausgangsrückschlagventile 35/5 und 35/6 gebildet ist.

Zur Betriebssteuerung der Druckumsetzungseinrichtung 30 ist bei dem Ausführungsbeispiel gemäß Fig. 2a ein mittels eines weggesteuerten Pilotventils 86 druckgesteuertes Umschaltventil 87 vorgesehen, dessen alternative Funktionsstellungen I und II alternativen Bewegungsrichtungen des Antriebskolbens 41 zugeordnet sind, mit denen die ihrerseits "gegenphasig erfolgenden" Hin- und Herbewegungen des Pumpenkolbens 42 korreliert sind.

Das Umschaltventil 87 ist in der speziellen Gestaltung gemäß Fig. 2a als 4/2-Wegeventil ausgebildet, das zum Anschluss an das Druckversorgungsaggregat einen P-Druckversorgungsanschluss 88 und einen T-Rücklaufanschluss 89 hat, sowie einen A-Verbraucheranschluss 91 und einen B-Verbraucheranschluss 92 hat, die mit jeweils einer der Antriebskammern 49/1 bzw. 49/2 der Antriebseinheit 37 kommunizierend verbunden sind. In der mit I bezeichneten Funktionsstellung des Umschaltventils 87 ist dessen A-Verbraucheranschluss 91 mit der gemäß der Darstellung linken Antriebskammer 49/1 der hydraulischen Antriebseinheit 37 und der B-Verbraucheranschluss 92 mit der gemäß der Darstellung rechten Antriebskammer 49/2 der hydraulischen Antriebseinheit 37 verbunden, so dass sich deren Kolben 41, wenn am P-Versorgungsanschluss 88 des Umschaltventils 87 der "Primär"-Druck p1 ansteht, gemäß der Darstellung nach rechts bewegt, wobei aus der dem Volumen nach abnehmenden Kammer 49/2 Druckmedium über das Umschaltventil 87 zum drucklosen Vorratsbehälter 16 hin abströmt. In der hierzu alternativen Funktionsstellung II des Umschaltventils 87 ist der Primärdruck p1 in die rechte Antriebskammer 49/2 der hydraulischen Antriebseinheit 37 eingekoppelt und deren linke Antriebskammer 49/1 mit dem drucklosen Vorratsbehälter 16 verbunden, mit der Folge, dass sich der Kolben 41 der Antriebseinheit 37 nach links bewegt.

Das Pilotventil 86 ist ebenfalls als 412-Wegeventil ausgebildet, das ebenfalls einen mit dem Primärdruck $p_1$ beaufschlagbaren P-Versorgungsanschluss 93 und einen mit dem drucklosen Vorratsbehälter 16 in kommunizierender Verbindung stehenden T-Rücklaufanschluss 94 hat, sowie einen A-Verbraucheranschluss 95 und einen B-Verbraucheranschluss 96, die jeweils einzeln einem der Steueranschlüsse 97 bzw. 98 des druckgesteuerten Umschaltventils 87 zugeordnet sind.

In der Funktionsstellung I ist der P-Versorgungsanschluss des Pilotventils 86 mit dessen A-Verbraucheranschluss 95 verbunden, der seinerseits über eine erste Steuerleitung 99 mit dem - darstellungsgemäß rechten - Steueranschluss 98 des Umschaltventils 87 verbunden ist, während gleichzeitig der zweite "linke" Steueranschluss 97 des Umschaltventils 87 über eine zweite Steuerleitung 101 mit dem B-Verbraucheranschluss 96 des Pilotventils 86 verbunden ist und in dieser Funktionssteuerung I mit dem drucklosen Vorratsbehälter 16 in kommunizierender Verbindung steht.

In dieser Funktionsstellung I des Pilotventils 86 wird somit das druckgesteuerte Umschaltventil 87 in dessen Funktionsstellung I geschaltet bzw. in dieser Stellung gehalten. Wird aus der - dargestellten - Funktionssteuerung I des Pilotventils 86 heraus dieses in seine Funktionsstellung II umgeschaltet, wird der rechte Steueranschluss 98 des Umschaltventils 87 zum drucklosen Vorratsbehälter 16 hin druckentlastet, während, andererseits, nunmehr der "linke" Druckanschluss 97 des Umschaltventils 87 mit dem Primärdruck $p_1$ beaufschlagbar ist, wodurch das Umschaltventil 87 in seine Funktionsstellung II umgeschaltet wird, wodurch sich auch die Bewegungsrichtung des Kolbens 41 der hydraulischen Antriebseinheit 37 umkehrt.

Diese Umschaltvorgänge ergeben sich durch weggesteuerte Umschaltung des Pilotventils, das jeweils in den Enden der Antriebshübe des Antriebskolbens 41 durch Anschlagelemente 102 und 103, welche mit dem Antriebskolben 41 fest verbunden sind und demzufolge dessen hin- und hergerichteten Hübe mit ausführen, durch Einwirkung dieser Anschlagelemente auf Betätigungsstößel 104 bzw. 105 des Pilotventils 86 umgeschaltet wird. Das Pilotventil 86 ist mit einer schematisch angedeuteten Rasteinrichtung 106 versehen, deren Funktion darin besteht, das Pilotventil 86 jeweils in der durch Umschaltung erzielten Funktionsstellung I oder II so lange zu halten, bis die nächste Umschaltung durch das jeweilige Betätigungselement 102 bzw. 103 erfolgt.

Die Zuführung des Primärdrucks $p_1$ zu dem Versorgungsanschluss 88 des Umschaltventils 87 sowie zu dem P-Versorgungsanschluss 93 des Pilotventils 86 erfolgt über das Ein-/Ausschaltventil 107, das bei dem zur Erläuterung gewählten Ausführungsbeispiel als von Hand betätigbares 2/2-Wegeventil ausgebildet ist.

Die Pumpenkammern 52/1 und 52/2 der hydraulischen Pumpeneinheit 38 sind über je ein Eingangsrückschlagventil 108/1 bzw. 108/2 mit dem drucklosen Vorratsbehälter 16 des Druckversorgungsaggregats bzw. der Druckumsetzungseinrichtung 30 und über je ein Ausgangsrückschlagventil 109/1 bzw. 109/2 mit dem Sekundäranschluss 36 der Druckumsetzungseinrichtung 30 kommunizierend verbunden; über die Eingangsrückschlagventile 108/1 und 108/2 kann, je nach Bewegungsrichtung des Kolbens 42, Druckmedium aus dem Vorratsbehälter 16 in die jeweils sich vergrößernde Pumpenkammer 52/1 bzw. 52/2 nachströmen, während über die Ausgangsrückschlagventile 109/1 und 109/2 unter Druck gesetztes Druckmedium zum Sekundärdruckausgang 36 hin alternierend austreten kann, so dass stets ein "gleichmäßiger" Strom unter Druck stehenden Mediums zum Sekundärausgang 36 der Druckumsetzungseinrichtung 30 strömt, so lange diese an den Primäranschluss 34 angeschlossen ist und demgemäß arbeiten kann, solange hier Druck bereitgestellt ist.

Zu einer mehr in die Einzelheiten gehenden Erläuterung der Funktion der insoweit erläuterten Druckumsetzungseinrichtung 30 mit Bezug auf das zur Darstellung gewählten Einsatzbeispiel der Fahrbetriebssteuerung eines hydraulisch angetriebenen (Ultra-)Leichtfahrzeuges sei zunächst unter Bezugnahme auf die Fig. 1 sowie die Fig. 2a und 2b auf typische Fahrsituationen des Fahrzeuges und deren Steuerung durch den/die Fahrer eingegangen:

Ausgehend von der in der in Fig. 1 dargestellten Betriebssituation des Fahrzeuges, in der sämtliche umschaltbaren Ventile 31/1,31/2,32/1 und 32/2 der Steuerventilanordnung 13, das Ein-/Aussteuerventil 107 der Druckumsetzungseinrichtung 30 und auch das Speicherladeventil 22 des Druckversorgungsaggregats 12 ihre - sperrende - Grundstellung einnehmen, d.h. von derjenigen Betriebssituation, in der das Fahrzeug steht und auch nicht durch Betätigung der Pumpe 19 in einen Fahrbetrieb gesteuert werden kann, soll das Fahrzeug zumindest für ein Anfahren mit relativ hoher Beschleunigung vorbereitet werden.

Hierzu wird bei stehendem Fahrzeug, d.h. gesperrten Anschlusssteuerventilen 31/1, 31/2, 32/1 und 32/2 sowie gesperrtem Ein-/Aussteuerventil 107 der Druckumsetzungseinrichtung 30, jedoch geöffnetem Umschaltventil 22 des Druckversorgungsaggregats 12 durch Betätigung der Pumpe 19 im Stillstand des Fahrzeuges der Speicher 21 aufgeladen. Zur Erfassung des Ladezustandes des Speichers 21 ist z. B. ein Monometer 111 vorgesehen, dessen Druckanzeige ein hinreichend genaues Maß für den Ladezustand des Speichers 21 ist, da bei vorgegebener Auslegung des Speichers der Druck im gespeicherten Medium auch ein Maß für das vom Speicher aufgenommene Volumen und insoweit insgesamt auch ein Maß für die im Speicher enthaltende hydraulische Energie ist.

Diese "vorbereitende" Aufladung des Druckspeichers erfolgt nur bis auf ein Druckniveau von z. B. 200 bar, das noch signifikant, z. B. um 10 % - 20 %, niedriger ist als der - einstellbare - Druckschwellenwert, bei dem das Druckbegrenzungsventil 23 öffnen würde.

Durch Öffnen des einen Anschlusssteuerventils 32/1 wird der nunmehr am Druckausgang 14 des Aggregats 12 anstehende Ausgangsdruck über die Versorgungsleitung 17 zu den Hydromotoren 11/1 bis 11/4 - zu deren Vorwärtsanschlussseite - weitergeleitet. Gleichzeitig mit dem Öffnen des Anschlusssteuerventils 32/1 oder geringfügig hiergegen verzögert wird auch das Druckanschlussventil 31/2 in seine Durchflussstellung I umgeschaltet, so dass die Hydromotore 11/1 bis 11/4 anlaufen können und Druckmedium vom Druckausgang 14 über das Anschlusssteuerventil 32/1 zu den Hydromotoren 11/1 bis 11/4 strömen und von diesen weiter über das Anschlusssteuerventil 31/2 zum drucklosen Vorratsbehälter 16 abströmen kann.

Das Fahrzeug befindet sich jetzt in einer Vorwärtsanfahrsituation. Solange das Speicherladeventil 22 geöffnet ist, steht am Ausgang 14 des Druckversorgungsaggregats 12 ein Druck an, der, solange das Umschaltventil 22 offen ist, auch dem im Speicher herrschenden Druck entspricht, der allerdings während des einleitenden Beschleunigens des Fahrzeuges abfallen wird, bis eine auslegungsbedingte Anfahrendgeschwindigkeit von z. B. 35 km/h erreicht hat.

Hält der Fahrer in einer solchen Anfahrphase das Umschaltventil 22 weiterhin in dessen geöffneter Funktionsstellung I, so wird durch die Betätigung der Pumpe 19 sowohl ein der zu den Antriebshydromotoren 11/1 bis 11/4 fließender Ölstrom erzeugt als auch der Speicher 21, zumindest teilweise wieder aufgeladen, nämlich bis auf dasjenige Druckniveau, das erforderlich ist, um bei vorgegebener Fahrbahntopographie, das Fahrzeug mit einer dem Fahrerwunsch entsprechenden Geschwindigkeit zu bewegen.

Von dieser Situation ausgehend, sei nunmehr angenommen, dass eine Aktivierung der Fahrbremseinrichtung des Fahrzeuges erforderlich wird, z. B., weil das Fahrzeug bergab fährt und einer Tendenz zur Geschwindigkeitszunahme entgegengewirkt werden soll, z. B. im Sinne einer Konstanthaltung der Fahrzeuggeschwindigkeit.

Zu diesem Zweck werden das Anschlusssteuerventil 32/1, über das den Antriebsmotoren 11/1 bis 11/4 unter hohem Druck stehendes Druckmedium zuvor zugeführt war, sowie das Anschlusssteuerventil 31/2, über das - gleichsam entspanntes - Druckmedium von den Antriebsmotoren 11/1 bis 11/4 abströmendes Druckmedium zum Vorratsbehälter 16 zurückgeflossen ist, wieder in ihre entsperrenden Grundstellungen 0 zurückgeschaltet, und es wird des Weiteren das Ein-/Ausschaltventil 107 der Druckumsetzungseinrichtung 30 in seine Durchflussstellung I geschaltet, wodurch die Druckumsetzungseinrichtung 30 aktiviert wird.

In dem durch die Ventilumschaltungen eingetretenen Betriebszustand des Antriebsstranges 10 des Leichtfahrzeuges arbeiten dessen Hydromotore 11/1 bis 11/4 als Pumpen, die Druckmedium, das aus dem Vorratsbehälter 16 über die Rückschlagventile und Druckversorgungsleitung 17 den nunmehr als Pumpen arbeitenden Hydromotoren 11/1 bis 11/4 zuströmt, zum Primäranschluss 34 der Druckumsetzungseinrichtung 30 fördern, deren Ein-/Ausschaltventil 107 gleichzeitig mit dem Zurückschalten der Anschlusssteuerventile 32/1 und 31/2 oder hiergegen geringfügig verzögert in seine Durchflussstellung I umgeschaltet worden ist, so dass die Druckumsetzungseinrichtung 30 aktiviert ist und der Druckspeicher 21 über das in der Offenstellung (Funktionsstellung I) verbliebene Umschaltventil 22 aufgeladen wird. Im Falle einer gebremsten Vorwärtsfahrt strömt Druckmedium aus dem Vorratsbehälter 16 zu den Antriebsmotoren über ein parallel zu dem Anschlusssteuerventil 32/2 verlaufenden Strömungspfad, der über das Rückschlagventil 35/3 liegt, das im Falle der ungebremsten, angetriebenen Vorwärtsfahrt verhindert, dass Druckmedium vom Anschlusssteuerventil (32/1 ) "direkt" zum Vorratsbehälter 16 abströmen kann.

Die hierzu analoge Funktion wäre auch dadurch erzielbar, dass im gebremsten Vorwärtsfahrbetrieb das Anschlusssteuerventil 32/2 in seine Durchflussstellung geschaltet wird, was jedoch, verglichen mit dem Einsatz eines Rückschlagventils, zusätzlichen Steuerungsaufwand erfordern würde.

In dem insoweit erläuterten Betriebszustand soll die Druckumsetzungseinrichtung 30 mit einem sehr hohen, in praxi dem höchstmöglichen Wert des Druckübersetzungsverhältnisses arbeiten, damit schon relativ geringe Werte des Druckes p1 am Primäranschluss 34 der Druckumsetzungseinrichtung 30 ausreichend sind, um eine Aufladung des Druckspeichers 21 über das offene Speicherumschaltventil 22 zu ermöglichen.

Davon ausgehend, dass dieser Speicherladebetrieb in einer Grundstellung des Schlittens 83 erfolgt, der einem Maximalwert des Verhältnisses $p_2/p_1$ entspricht, wird in einem solchen Ladebetrieb, wenn er nur hinreichend lange andauert, eine Aufladung des Druckspeichers 21 auf seinen höchstmöglichen Energieinhalt erreicht, der durch die einstellbare Ansprechschwelle des Druckbegrenzungsventils 23 vorgegeben ist.

Sobald dieser Aufladungszustand erreicht ist, ist es zweckmäßig im Verlauf einer "normalen" Fahrt den Speicher solange nicht mehr als Energiequelle zu benutzen, bis die Verkehrssituation ein Anhalten des Fahrzeugs gleichsam erzwingt und es demgemäß eines "vollständig" aufgeladenen Druckspeichers bedarf, um in einem anschließenden Beschleunigungsvorgang - unter Nutzung der Speicherenergie - wieder auf eine dem üblichen Verkehrsfluss entsprechende Geschwindigkeit zu kommen.

Für den statistisch überwiegenden Vorwärtsfahrbetrieb ergibt die geschilderte Art des Fahrzeugbetriebes, dass das Fahrzeug, wenn es aus einer bestimmten Geschwindigkeit heraus zum Stillstand abgebremst worden ist, allein aufgrund des durch die Bremsung erreichten Aufladungsgrades des Druckspeichers 21 wieder auf mindestens diejenige Geschwindigkeit beschleunigt werden kann, aus der es zuvor abgebremst worden ist, selbstverständlich unter Vernachlässigung geringfügiger Verluste und wirkungsgradbedingte Minderungen.

Auch im Rückwärtsfahrbetrieb, der durch Umkehrung der Druckmediumflussrichtung in den Antriebshydromotoren 11/1 bis 11/4 steuerbar ist, ist eine - durch den Maximalwert des Speicherinhalts begrenzte - Energierückgewinnung durch Bremsen möglich.

Wiederum von der - sperrenden - Grundstellung sämtlicher umschaltbarer, jeweils als 2/2-Wegeventile dargestellter Ventile der Steuerventilanordnung 13 ausgehend, wird der Rückwärtsfahrbetrieb dadurch eingesteuert, dass das Anschlusssteuerventil 31/1, über das Druckmedium vom Druckversorgungsaggregat 12 her den Antriebshydromotoren 11/1 bis 11/2 zuleitbar ist, in seine Durchflussstellung I und das Anschlusssteuerventil 32/2, über das aus den Antriebsmotoren 11/1 bis 11/4 abströmendes Druckmedium zum Vorratsbehälter 16 hinab fließen soll, in die Durchflussstellung I umgeschaltet werden; die beiden anderen Anschlusssteuerventile 32/1 sowie 31/2 verharren in ihrer sperrenden Grundstellung, desgleichen - zunächst - das Ein-/Ausschaltventil 107 der Druckumsetzungseinrichtung 30.

Die Druckmediumversorgung des Antriebsstranges erfolgt mittels der Pumpe 19 und/oder aus dem Speicher 21, wie für den Fall der Vorwärtsfahrt schon im Detail erläutert.

Für den Fall einer Bremsung bei Rückwärtsfahrt wird die Betätigung der Pumpe 19 beendet und/oder das Umschaltventil 22 in seine Sperrstellung zurückgeschaltet, damit Druckmedium nicht mehr vom Druckversorgungsaggregat 12 her in den Antriebsstrang einspeisbar ist. Gleichzeitig hiermit oder geringfügig verzögert hiergegen wird das Anschlusssteuerventil 31/1 wieder in seine sperrende Grundstellung Null zurückgeschaltet, desgleichen das Anschlusssteuerventil 32/2, und es wird, da nunmehr die Hydromotore 11/1 bis 11/4 wieder als Pumpen wirken, Druckmedium aus dem Vorratsbehälter 16 zum Primäranschluss 34 der Druckumsetzungseinrichtung 30 gefördert.

Mit dem Zurückschalten der beiden Anschlusssteuerventile 31/1 und 32/2 in deren sperrende Grundstellung werden gleichzeitig das Ein-/Aussteuerventil 107 der Druckumsetzungseinrichtung 30 in dessen Durchflussstellung I und auch das Umschaltventil 22 wieder in dessen Durchflussstellung I umgeschaltet, so dass auch in dem solchermaßen eingeschalteten Bremsbetrieb bei Rückwärtsfahrt des Fahrzeuges der Speicher 21 aufladbar ist, analog zu der für den Bremsbetrieb bei Vorwärtsfahrt schon gegebenen Erläuterung.

Auch in diesem Falle kann der Strömungspfad, der vom Tank 16 zu den Hydromotoren 11/1 bis 11/4 führt, entweder durch Umschalten des Anschlusssteuerventils 31/2 in dessen Durchflussstellung I erfolgen, oder über einen zu diesem Ventil parallelen Nebenstrompfad erfolgen, in dem das Rückschlagventil 35/4 angeordnet ist, das durch relativ höheren Druck im Vorratsbehälter 16 als an dem "Saug"-Eingangsanschluss 112 der Hydromotore herrschenden Druck in Durchflussrichtung beaufschlagt und sonst sperrend ist.

Zur Einstellung des Druckübersetzungsverhältnisses $p_2/p_1$ ist eine Einrichtung 114 vorgesehen, mittels derer das Hebelarmverhältnis des zweiarmigen Hebels 43 dahingehend einstellbar ist, dass das Ausgangsdruckniveau $p_2$ der Pumpeinheit 38 der Druckumsetzungseinrichtung 30 hoch genug ist, Hydraulikmedium in den Speicher 21 hinein - gegen dessen Ladedruck - verdrängen zu können.

Die Stelleinrichtung 114 arbeitet in der Art einer Servosteuerung, bei der z. B. gegen eine nur mäßige Rückstellkraft erfolgende Auslenkungen eines Steuerelements, z. B. des Ventilkolbens 118 des Nachlaufregelventils 117 gegenüber einem schematisch dargestellten Gehäuse 119 des Nachlaufregelventils 117 zu mit den Auslenkungen korrelierten Verschiebungen des Schlittens 83 führen, der das mittlere Schwenkgelenk 63 des zweiarmigen Hebels 43 trägt, wobei der lineare Hydrozylinder 116 als Kraftverstärker wirkt, der die am Schlitten 83 angreifenden Stellkräfte entfaltet.

Der Stellzylinder 116 ist als doppelt wirkender Differentialzylinder mit einseitig aus dem Gehäuse austretender Kolbenstange 121 ausgebildet; er ist so angeordnet, dass seine zentrale Achse 122 parallel zu den zentralen Achsen 123/1 und 123/2 der stab- bzw. säulenförmigen Führungselemente 84/1 und 84/2 des Schlittens 83 verläuft und in derjenigen Mittelebene 124 liegt, die senkrecht zu der durch die beiden zentralen Achsen 123/1 und 123/2 der Führungselemente 84/1 und 84/2 aufgespannten Ebene verläuft.

Je nach Konstruktion der Druckumsetzungseinrichtung 30 kann die zentrale Längsachse 122 des Stellzylinders 116 auch in der Ebene liegen, die durch die zentralen Längsachsen 123/1 und 124/2 der beiden Führungselemente 84/1 und 84/2 aufgespannt ist.

Die Kolbenstange 121 des Stellzylinders 116 ist in Vorschub- und Rückzugsrichtung verschiebefest mit dem Schlitten 83 gekoppelt, z. B. über eine Schubstange 126, die sowohl mit dem freien Ende der Kolbenstange 121 des Stellzylinders 116 als auch mit dem Schlitten 83 der Druckumsetzungseinrichtung 30 gelenkig verbunden sein kann, wie nicht eigens dargestellt.

Innerhalb des lediglich schematisch angedeuteten Gehäuses 128 des Stellzylinders 116 ist durch dessen Kolben 129, von dem einseitig die Kolbenstange 121 ausgeht, ein stangenseitiger Druckraum 131, in den - permanent - derjenige Druck - $p_1$ - eingekoppelt ist, der als Primärdruck auch in die Druckumsetzungseinrichtung 30 eingekoppelt ist, druckdicht gegen einen bodenseitigen Druckraum 132 - beweglich - abgegrenzt, der über das Nachlaufregelventil 117 seinerseits mit dem "Primär"-Druck $p_1$, der in den stangenseitigen Druckraum 131 eingekoppelt ist, beaufschlagbar ist, alternativ dazu, ebenfalls über das Nachlaufregelventil 117 mit dem drucklosen Vorratsbehälter 16 des Druckversorgungsaggregats 12 in Verbindung bringbar ist.

Da die den stangenseitigen Druckraum 131 des Stellzylinders 116 axial beweglich begrenzende Ringfläche 133 des Kolbens 129, deren Betrag mit A3 bezeichnet sei, um den Betrag der Querschnittsfläche A4 der Kolbenstange 121 kleiner ist als der Betrag A5 der Kolbenfläche 134 des Kolbens 129, welche die axial bewegliche Begrenzung des bodenseitigen Druckraumes 132 des Stellzylinders 116 bildet, wird, solange der bodenseitige Druckraum 132 mit dem "vollen" Primärdruck $p_1$ der Duckumsetzungseinrichtung beaufschlagt ist, die Kolbenstange 121 des Stellzylinders 116 "ausgefahren", d.h. im Sinne einer Verschiebung des Schlittens 83 in Richtung auf die Antriebseinheit 37 hin verschoben, d.h. im Sinne einer Verringerung des Verhältnisses $p_2/p_1$.

Bezogen auf das Erläuterungsbeispiel Leichtfahrzeug wird insoweit ein Betriebszustand der Druckumsetzungseinrichtung 30 eingesteuert, dem eine Erhöhung der Bremsverzögerung bzw. der zur Konstanthaltung der Fahrzeuggeschwindigkeit erforderlichen Bremskraft entspricht.

Ist, andererseits, der bodenseitige Druckraum 132 des Stellzylinders 116, mit mehr oder weniger großem Strömungsquerschnitt über das Nachlaufregelventil 117, mit dem drucklosen Vorratsbehälter 16 des Druckversorgungsaggregats 12 kommunizierend verbunden, d.h., der bodenseitige Druckraum 132 in Relation zum stangenseitigen Druckraum 131 des Stellzylinders 116 druckentlastet, wird der Schlitten 83, bedingt durch Ausströmen von Druckmedium aus dem bodenseitigen Druckraum 132 des Stellzylinders 116 im Sinne einer Vergrößerung des Verhältnisses $p_2/p_1$, d.h. im Sinne einer Veränderung des Hebelarmverhältnisses dahingehend angesteuert, dass der am Pumpenkolben 42 angreifende Hebelarm, verglichen mit dem am Antriebskolben 41 angreifenden Hebelarm des zweiarmigen Hebels 43, der Länge nach abnimmt, d.h., das unter hohem Druck in den Speicher 21 eingekoppelte Volumen von Hydraulikmedium relativ zu dem Volumen des zum Antrieb der Antriebseinrichtung 37 erforderlichen Druckmediums zwar kleiner wird, jedoch ein Gleichgewichtszustand erhalten bleibt, der praktisch unter allen denkbaren Druckverhältnissen und auch im Falle einer Bergabfahrt bei konstanter Fahrzeuggeschwindigkeit, einen rekuperierenden Bremsbetrieb ermöglicht.

Zur Implementierung der insoweit erläuterten Funktionen der Druckumsetzungseinrichtung 30, ist das zur Steuerung des "linearen" Stellzylinders 116 vorgesehene Nachlaufregelventil 117 in der zur Darstellung gewählten, speziellen Gestaltung als 3/3-Wegeventil ausgebildet, das zwei Versorgungsanschlüsse hat, nämlich einen Druckanschluss 136, an dem der Primärdruck $p_1$ ansteht, der in die Druckumsetzungseinrichtung 30 eingekoppelt ist, sowie einen Tank (T-)Anschluss 137, der mit dem drucklosen Vorratsbehälter 16 des Druckversorgungsaggregats 12 verbunden ist, und einen Verbraucheranschluss 138, der mit dem bodenseitigen Druckraum 132 des Stellzylinders 116 kommunizierend verbunden ist.

Das Nachlaufregelventil 117 ist konstruktiv mit dem Stellzylinder 116 zu einer Baueinheit zusammengefasst; sein P-Versorgungsanschluss 136 ist beim dargestellten Erläuterungsbeispiel unmittelbar mit dem stangenseitigen Druckraum 131 des Stellzylinders 114 verbunden, der seinerseits mit dem - gemeinsamen - $p_1$- Anschluss 34 (Fig. 1) der Nabenmotore 11/1 bis 11/4 des Fahrzeugfahrwerkes permanent verbunden ist.

Das Nachlaufregelventil 117 ist - zum Zweck der Erläuterung - als ein manuell betätigbares Ventil dargestellt, dessen Betätigung durch Verschieben des Ventilkolbens 118 in einer Gehäusebohrung erfolgt, deren zentrale Achse parallel zur zentralen Achse 122 des Stellzylinders 114 verläuft. Es wird nachfolgend anhand seiner Funktion erläutert, die konstruktiv auf vielfältige Weise implementierbar ist.

Durch die Verschiebung des Kolbens 118 in alternativen Richtungen erfolgt die alternative .Druckbeaufschlagung bzw. -entlastung des bodenseitigen Druckraumes 132 des Stellzylinders 114 mit dem Druck $p_1$ bzw. die Druckentlastung des Druckraumes 132 durch dessen Verbindung mit dem drucklosen Vorratsbehälter 16.

Das Gehäuse 119 des Nachlaufregelventils 117 ist, veranschaulicht durch einen Verbindungssteg 142, verschiebefest mit dem aus dem Zylindergehäuse 128 herausragenden Ende der Kolbenstange 121 verbunden und führt somit die Verschiebungen des Kolbens 129 des Stellzylinders 114 mit aus.

Zur manuellen Betätigung des Ventils 117 ist ein aus dem Gehäuse 119 in axialer Richtung einseitig austretender, stößelförmiger Kolbenfortsatz 158 vorgesehen, durch dessen Zug- oder Schubbetätigung in axialer Richtung das Ventil 117 in seine alternativen Funktionsstellungen I und II steuerbar ist.

Eine Verschiebung des Betätigungsstößels 158 in Richtung des Pfeils 159, gemäß der Darstellung der Fig. 2a "nach unten", hat zur Folge, dass die Kolbenstange 121 des Kolbens 129 ausfährt und den Schlitten 83 der Druckumsetzungseinrichtung 30 im Sinne einer Verringerung des Druckübersetzungsverhältnisses $p_2/p_1$ zur Antriebsseite hin "verschiebt".

Erfährt, andererseits, der Betätigungsstößel 158 eine "Zug"-Verschiebung in Richtung des Pfeils 164, gemäß der Darstellung der Fig. 2a "nach oben", so führt dies, ausgehend von der in der Fig. 2a dargestellten Grundstellung des Ventils 117, dazu, dass das Druckmedium über den Tankanschluss 137 zum drucklosen Vorratsbehälter 16 des Druckversorgungsaggregats 12 hin abströmen kann.

In dieser Funktionsstellung II des Nachlaufregelventils 117 erfährt der Kolben 129 des Stellzylinders 114 eine Verschiebung im Sinne einer Verkleinerung des Volumens des bodenseitigen Druckraumes 132 gemäß der Darstellung der Fig. 2a "nach oben".

Aufgrund der starren Kopplung des Ventilgehäuses 119 mit dem Kolben 129 des Stellzylinders 116 werden Bewegungen des Ventilkolbens 118 in Bewegungen exakt gleicher Auslenkung des Stellzylinderkolbens 129 umgesetzt, "kopiert". Wird das Betätigungselement 158 in einer definierten Position festgehalten, so bleibt auch der Kolben 129 des Stellzylinders 116 in der mit der eingesteuerten Stillstandsposition des Ventilkolbens 118 in eindeutiger Weise korrelierten Position stehen.

Für die anhand von Betriebszuständen, die bei dem gewählten Erläuterungsbeispiel einem Vorwärtsfahrbetrieb des Fahrzeuges entsprechen, insoweit erläuterten Antriebsmotore 11/1 bis 11/4, die zur Klasse der volumetrisch geführten, hydrostatischen Antriebe gehören, ist - stillschweigend - vorausgesetzt, dass sie durch Umkehrung der Hydraulikmediumflussrichtung auch als Rückwärtsfahrantriebe geeignet sind. Die diesbezügliche Umschaltung des Antriebstranges 10 auf Rückwärtsfahrbetrieb ist mittels der Ventilanordnung gemäß Fig. 1 dadurch möglich, dass das Anschlusssteuerventil 32/1, das gemäß der Darstellung der Fig. 1 zwischen den Druckausgang 14 des Druckversorgungsaggregats 12 und die Druckversorgungsleitung 17 geschaltet ist, in seiner Sperrstellung gehalten wird, hingegen das an die Druckversorgungsleitung 17 angeschlossene, weitere Anschlusssteuerventil 32/2 in seine Funktionsstellung I geschaltet wird, in der diese Leitung 17 kommunizierend mit dem Tank 16 verbunden ist. Die Druckzufuhr zu den Antriebsmotoren 11/1 bis 11/4 erfolgt über das in seine Durchflussstellung I geschaltete Anschlusssteuerventil 31/1, so dass über die im Vorwärtsfahrbetrieb als Rücklaufleitung fungierende Leitung 18 den Antriebsmotoren 11/1 bis 11/4 unter hohem Druck stehendes Druckmedium zuströmen kann, wobei in diesem Rückwärtsfahrbetrieb das Anschlusssteuerventil 31/2, das im Vorwärtsfahrbetrieb die Leitung 18 mit dem Tank verbindet, in seiner Sperrstellung gehalten bleibt.

Auch im Rückwärtsfahrbetrieb ist eine Rückgewinnung von "Brems"-Energie möglich, indem das "Rückwärts"-Enttastungsventil 32/2 in seine Sperrstellung "O" umgeschaltet wird, wobei die Druckumsetzungseinrichtung 30 wieder die Speicherladung übernimmt, wie vorausgehend schon erläutert.

Zur Erläuterung eines weiteren Ausführungsbeispiels einer erfindungsgemäßen Druckumsetzungseinrichtung sei nunmehr auf die Fig. 2b Bezug genommen, in der eine mit der Druckumsetzungseinrichtung 30 gemäß Fig. 2a weitgehend baugleiche und funktionsanaloge, über diese hinaus jedoch noch zusätzliche Funktionen vermittelnde Druckumsetzungseinrichtung insgesamt mit 30b bezeichnet ist.

Diese Druckumsetzungseinrichtung 30b, deren Darstellung gegenüber derjenigen der Druckumsetzungseinrichtung 30 weitergehend schematisiert bzw. vereinfacht dargestellt ist, kann hinsichtlich der Linearzylinderanordnungen, die als Pumpeinheit, einerseits, und als Antriebseinheit, andererseits, wirken, einschließlich der Hebelanordnung, welche die Kopplung von Antriebseinheit und Pumpeinheit vermittelt und hinsichtlich des Hebelarmverhältnisses einstellbar ist, in genau derselben Weise realisiert sein, wie anhand der Fig. 2a, für sich gesehen beschrieben, abgesehen lediglich von der hydraulischen Schaltungsperipherie.

Die Druckumsetzungseinrichtung 30b gemäß Fig. 2b ermöglicht durch diese Schaltungsperipherie, neben einem ersten Betriebsmodus, in dem sie die Funktionen des anhand der Fig. 2a erläuterten Ausführungsbeispiels implementiert, z. B. in einem Rekuperationsbetrieb die Aufladung eines Druckspeichers ermöglicht, auch einen zweiten Funktionsmodus, in dem sie, gleichsam in umgekehrter Energieflussrichtung, die Druckspeisung des Verbrauchers aus dem - im ersten Funktionsmodus - aufgeladenen Druckspeicher vermittelt.

Auch beim Ausführungsbeispiel gemäß Fig. 2b wirkt jeweils eine der Untereinheiten 37 und 38 als Antriebseinheit oder als Pumpe, jedoch können diese Funktionen den Zylindereinheiten 37 und 38 nicht mehr in eindeutiger Weise zugeordnet werden, da diese Funktionen beim Ausführungsbeispiel gemäß Fig. 2b "austauschbar" - umkehrbar - sind.

Zum Zweck der Vereinfachung der Erläuterung sei daher bezüglich des Ausführungsbeispiels gemäß Fig. 2b - in Relation zu der Erläuterung des Ausführungsbeispiels gemäß Fig. 2a - die Vereinbarung getroffen, dass die in der Fig. 2b mit 37 bezeichnete, beim Ausführungsbeispiel Fig. 2a als Antriebseinheit bezeichnete hydraulische Zylindereinheit als verbraucherseitige Zylindereinheit bezeichnet sei und die beim Ausführungsbeispiel gemäß Fig. 2a als Pumpeinheit 38 bezeichnete Linearzylindereinheit beim Ausführungsbeispiel gemäß Fig. 2b als versorgungsseitige Linearzylindereinheit bezeichnet sei. Im übrigen soll, soweit für Bauelemente der hydromechanischen Baueinheiten der Druckumsetzungseinrichtungen gemäß den Figuren 2a und 2b jeweils dieselben Bezugszeichen angegeben sind, dies den Hinweis auf die Identität dieser Bauteile und auch den Hinweis auf die diesbezüglichen Beschreibungsteile bedeuten, die der Beschreibung des Ausführungsbeispiels gemäß der Fig. 2a dienen.

Demgemäß kann die Beschreibung des Ausführungsbeispiels gemäß Fig. 2b auf diejenigen Komponenten und deren Funktionen beschränkt werden, die gegenüber dem Ausführungsbeispiel gemäß Fig. 2a zusätzlich vorhanden und/oder anders gestaltet sind als diejenigen Komponenten des Ausführungsbeispiels gemäß Fig. 2a, z. B. des Umschaltventils 287, deren Funktion(en) durch die zweckanalogen Komponenten des Ausführungsbeispiels gemäß Fig. 2b - ebenfalls - implementiert sind.

Die diesbezüglichen Unterschiede erschöpfen sich darin, dass das von dem Pilotventil 86 gesteuerte Umschaltventil 287 eine andere Auslegung hat als das Umschaltventil 87 des Ausführungsbeispiels gemäß Fig. 2a, das lediglich dem einen Betriebsmodus genügen muss, in dem die verbraucherseitige "Antriebs"-Hydraulikeinheit 37 als Antriebseinheit für die als Pumpeinheit 38 wirkende Hydraulikeinheit arbeitet, die dem Druckversorgungsaggregat 12 zugeordnet ist, und dass als zusätzliches Element der hydraulischen Peripherie ein weiteres Ein-/Ausschaltventil 307 vorgesehen ist, durch das der am Ausgang 36 des Druckversorgungsaggregats 12 anstehende Druck $p_2$ als Antriebsdruck in die Druckumsetzungseinrichtung 30b einkoppelbar ist.

Durch den Schaltungszustand der beiden Ein-/Ausschaltventile 107 und 307 der Druckumsetzungseinrichtung 30b wird der Betriebsmodus ausgewählt, in dem die Druckumsetzungseinrichtung 30b arbeiten soll.

Es versteht sich, dass die beiden Ein-/Ausschaltventile, die als "individuell schaltbare" 2/2-Wegeventile dargestellt sind, auch mit höherer Anzahl der Wege realisierbar sind.

Das Umschaltventil 287, das mittels des Pilotventils 86 - weggesteuert - umschaltbar ist, ist als 2-Stellungsventil ausgebildet, das in seinen beiden alternativen Funktionsstellungen I und II die folgenden hydraulischen Verbindungen vermittelt:

Zur diesbezüglichen Erläuterung sei - ohne Beschränkung der Allgemeinheit - davon ausgegangen, dass diejenige Untereinheit 37, die den die beiden Druckkammern 49/1 und 49/2 jeweils axial beweglich begrenzenden Kolben 41 umfasst, mit dem die beiden Anschlagelemente 102 und 103 fest verbunden sind, die zur Umschaltbetätigung des Pilotventils 86 dienen, verbraucherseitig angeordnet ist, d.h. entweder zur Druckeinspeisung in einen - lediglich schematisch angedeuteten - Verbraucher dient, oder, für den Fall, dass aus dem Verbraucher zurückströmendes Druckmedium, das unter Druck steht, für einen Rekuperationsbetrieb genutzt werden soll, durch den z. B. der Druckspeicher 21 des Druckversorgungsaggregats 12 aufgeladen werden soll, und demgemäß die andere Doppelzylindereinheit 38, deren Kolbeneinheit mittels des zweiarmigen Hebels 43 mit dem Doppelkolben 41 der verbraucherseitigen Doppelzylindereinheit 37 bewegungsgekoppelt ist, als Pumpeinheit 38 genutzt ist, die Druckmedium auf einem Druckniveau, das durch das Hebelarmverhältnis des zweiarmigen Hebels 43 und im allgemeinen Falle auch durch das Flächenverhältnis der Kolben 41 und 42 bestimmt ist, in den Speicher 21 zu dessen Aufladung verdrängt.

In diesem Betrieb fällt der Druck $p_1$, der zum Antrieb der Druckumsetzungseinrichtung genutzt wird, an dem Primäranschluss 34 der Druckumsetzungseinrichtung 30b an, der mit dem Rücklaufanschluss 40 des Verbrauchers 10 verbunden ist.

Zur Einkopplung dieses Druckes $p_1$ in die Druckumsetzungseinrichtung 30b wird das Ein-/Ausschaltventil 107 in seine Durchflussstellung I geschaltet, in der der Primäranschluss 34 der Druckumsetzungseinrichtung 30b mit dem P-Versorgungsanschluss 93 des Pilotventils 86, einerseits, verbunden ist und, andererseits, auch mit einem P-Druckversorgungsanschluss 288 des Umschaltventils 287 verbunden ist.

Für das Pilotventil 86 sei angenommen, dass es sich in seiner Funktionsstellung I befinde, in welcher der P-Versorgungsanschluss 93 mit dem Ausgangsanschluss 95 des Pilotventils 86 verbunden ist, der über die Steuerleitung 99 mit demjenigen Steueranschluss 298 des Umschaltventils 287 verbunden ist, durch dessen Druckbeaufschlagung das Umschaltventil 287 in seine Funktionsstellung 1 gedrängt wird, in welcher der P-Druckversorgungsanschluss 288 über einen Funktionsanschluss 295 des Umschaltventils 287 mit der gemäß der Darstellung der Fig. 2b linken Druckkammer 49/1 der "verbraucherseitigen" 2-Zylindereinheit 37 verbunden ist, und deren andere, "rechte" Druckkammer 49/2 mit einem Funktionsanschluss 292 des Umschaltventils 287 verbunden ist, der mit einem Tankrücklaufanschluss 289 des Umschaltventils verbunden ist, der mit dem gleichsam "aufgelöst" in Tei-lbehälter dargestellten Vorratsbehälter 16 des Druckversorgungsaggregats kommunizierend verbunden ist. Des Weiteren ist der gemäß der Darstellung der Fig. 2b "linke" Steueranschluss 297 in der Funktionsstellung 1 des Pilotventils 86 über einen zweiten Durchflusspfad desselben ebenfalls mit dem Tank 16 des Druckversorgungsaggregats verbunden, so dass das Umschaltventil 287 in dem gegebenen Funktionszustand des Pilotventils 86 "stabil" in seiner Funktionsstellung 1 gehalten wird, in der sich der Kolben 41 gemäß der Darstellung nach rechts bewegt und somit Druckmedium aus der rechten Druckkammer 49/2 verdrängt wird und über das Umschaltventil 287 zurück zum drucklosen Tank 16 des Druckversorgungsaggregats abströmt.

Während sich der Kolben 41 der Doppelzylindereinheit 37 - in der erläuterten Betriebsphase - in Richtung des Pfeils 251 "nach rechts", im Sinne einer Verkleinerung der rechten Antriebskammer 49/2 der Doppelzylindereinheit 37 bewegt, erfährt der Kolben 42 der "oberen" Doppelzylindereinheit 38, der mit dem Kolben 41 der Antriebseinheit 37 über den zweiarmigen Hebel 43 bewegungsgekoppelt ist, eine Verschiebung in Richtung des Pfeils 252 "nach links", wodurch Druckmedium aus der linken Druckkammer 52/1, die hier die Funktion einer Pumpenkammer hat, verdrängt wird. Diese Druckkammer 52/1 ist über den weiteren Funktionsanschluss 299, der in der Funktionsstellung I des Umschaltventils 287 mit dessen versorgungsseitigem Anschluss 301 verbunden ist, auch an das weitere Ein-/Ausschaltventil 307 angeschlossen, mittels dessen dieser versorgungsseitige Anschluss 301 des Umschaltventils mit dem Druckausgang 14 des Druckversorgungsaggregats 12 verbindbar, alternativ gegen diesen absperrbar ist, wobei der Druckausgang 14 in dem betrachteten Betriebszustand der Druckumsetzungseinrichtung 30b als Druckeingang für die Aufladung des Druckspeichers 21 des Druckversorgungsaggregats 12 wirkt.

Der vierte Funktionsanschluss 302 des Umschaltventils 287 ist mit der rechten Kammer 52/2 der als Pumpeinheit wirkenden Doppelkolbeneinheit 38 verbunden, in die in der Funktionsstellung 1 des Umschaltventils Druckmedium aus dem Tank 16 über den genannten Funktionsanschluss 302 nachströmt.

Gelangt im Zuge der Bewegung des Kolbens 41 der Antriebseinheit 37 in Richtung des Pfeils 251 das "linke" Anschlagelement 102 in Anlage mit dem Betätigungsstößel 105, wodurch letztlich das Pilotventil 86 in seine Funktionsstellung II umgeschaltet wird, so führt dies auch zur Umschaltung des Umschaltventils 287 in dessen Funktionsstellung II, da nunmehr - über das Pilotventil 86 - der linke Steueranschluss 297 des Umschaltventils unter dem erhöhten Druck $p_1$ steht und der rechte Steueranschluss 298 des Umschaltventils 287 zum drucklosen Tank 16 des Druckversorgungsaggregats 12 hin druckentlastet ist. In der nunmehr eingenommenen Funktionsstellung II des Umschaltventils 287 bewegen sich die Kolben 41 und 42 der Antriebseinheit 37 und der Pumpeinheit 38 jeweils in der zu den Pfeilen 251 und 252 entgegengesetzten Richtungen; in der Schaltstellung II des Umschaltventils 287 ist dessen Versorgungsanschluss 301, welcher über das weitere Umschaltventil 307 mit dem Ausgang 14 des Druckversorgungsaggregats 12 verbindbar ist, mit dem vierten Funktionsanschluss 302 des Umschaltventils 287 verbundenen, der mit der, gemäß der Darstellung "rechten" Druckkammer 52/2 der "oberen" Doppelkolbeneinheit 38 in kommunizierender Verbindung steht, der mit der "linken" Druckkammer 52/1 dieser Doppelkolbeneinheit 38 Funktionsanschluss 299 des Umschaltventils 287 ist in der Funktionsstellung II mit dem drucklosen Tank 16 verbunden; der P-Druckversorgungsanschluss 288 des Umschaltventils 287 ist in der Funktionsstellung II des Umschaltventils 287 mit der gemäß der Darstellung der Fig. 2b rechten Druckkammer 49/2 der "unteren" Doppelkolbeneinheit 37 verbunden, und deren "linke" Druckkammer 49/1, die mit dem Funktionsanschluss 295 verbunden ist, ist über das Umschaltenventil 287 mit dem drucklosen Tank 16 verbunden, so dass Druckmedium, je nach den maßgeblichen Druckverhältnissen aus der "linken" Kammer 49/1 zum Tank 16 zurückströmen kann oder aus dem Tank 16 gleichsam angesaugt werden kann, um die "linke" Druckkammer 49/1 der "unteren" boppelkolbeneinheit 37 zu füllen.

In dem insoweit erläuterten Betriebsmodus der Druckumsetzungseinrichtung 30b vermittelt deren Umschaltventil 287 sowohl die Funktionen des Umschaltventils 87 gemäß Fig. 2a als auch diejenigen der Rückschlagventile 108/1, 108/2 sowie 109/1 und 109/2 des Ausführungsbeispiels gemäß Fig. 2a.

Die Gestaltung der Druckumsetzungseinrichtung 30b gemäß Fig. 2b ermöglicht auch einen Betriebsmodus derselben, in welchem die Funktionen der beiden Doppelzylindereinheiten 37 und 38 gleichsam vertauscht sind, d.h. die gemäß der Darstellung der Fig. 2b "obere" Doppelzylindereinheit 38 als Antriebseinheit nutzbar ist und die andere, "untere" Doppelzylindereinheit 37, deren Kolben 41 auch die Umschaltung des Pilotventils 86 steuert, als Pumpeinheit benutzt wird.

Dieser Betriebsmodus, in dem die Umsteuerung der Bewegungsrichtungen des Kolbens 42 und der nunmehr als Antriebseinheit wirkenden Doppelzylindereinheit 38, und, damit einhergehend, des Kolbens 41 der Pumpeinheit 37 ebenso wie in dem vorausgehend geschilderten Betriebsmodus durch die anschlagbetätigte Umschaltung des Pilotventils 86 erfolgt, ist dadurch auswählbar, dass über das in seine Durchflussstellung geschaltete zweite Ein-/Ausschaltventil 307 der am Sekundäranschluss 36 anstehende Druck an den Versorgungsanschluss 301 des Umschaltventils 287 angelegt wird und auch das Ein-/Ausschaltventil 107 in seine Durchflussstellung I geschaltet wird, so dass Druckmedium aus der linken Antriebskammer 49/1 der nunmehr als Pumpe wirkenden Doppelzylindereinheit 37 abströmen und über die Steuerventileinheit 13 in den Verbraucher 10 eingekoppelt werden kann und im übrigen die Ansteuerung der nunmehr als Antriebseinheit wirkenden Doppelkolbeneinheit 38 analog zu der Ansteuerung der Antriebseinheit 37 gemäß Fig. 2a implementiert ist.

Auch die anhand der Fig. 2a vorwiegend mit Bezug auf den Rekuperationsbetrieb bei Bremsungen erläuterte Druckumsetzungseinrichtung 30 ist, gleichsam in umgekehrter Funktion, auch zur Steuerung des Fahrbetriebes des Fahrzeuges mit verschiedenen Geschwindigkeiten und/oder in Anpassung an topografische Gegebenheiten einsetzbar, wobei die Druckumsetzungseinrichtung 30 die Funktion eines Getriebes mit im wesentlichen stufenloser Änderung des Übersetzungsverhältnisses vermitteln kann.

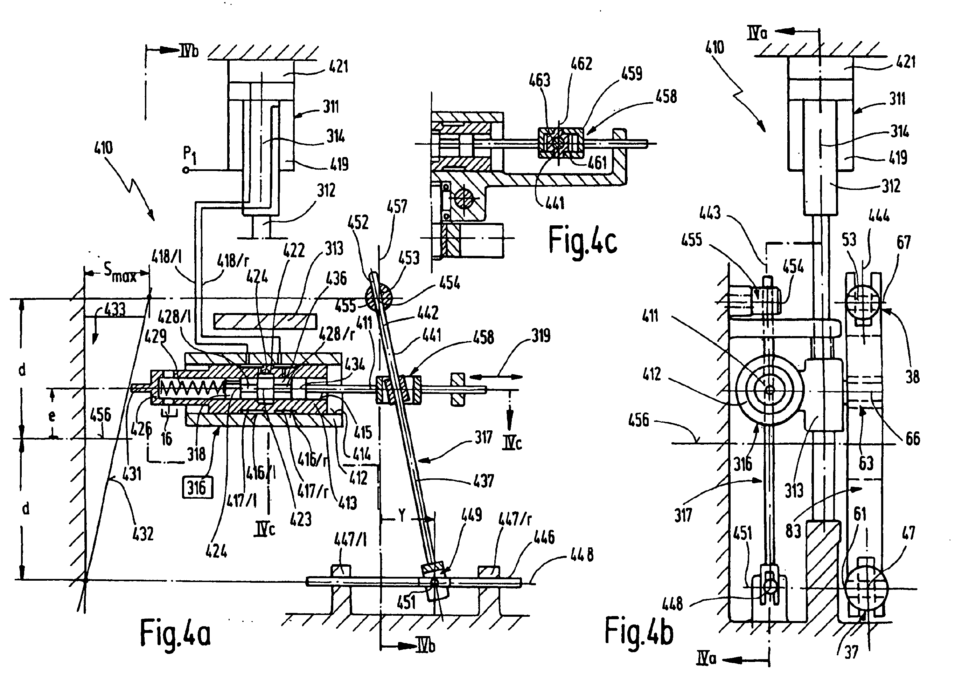

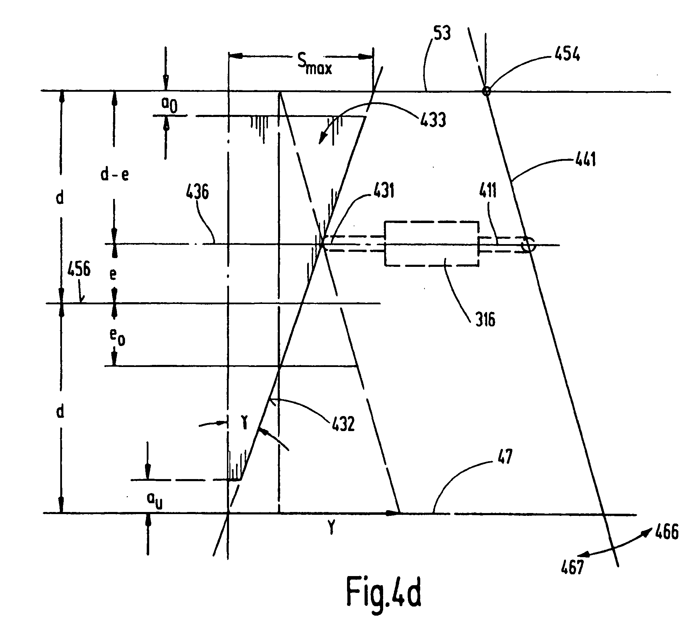

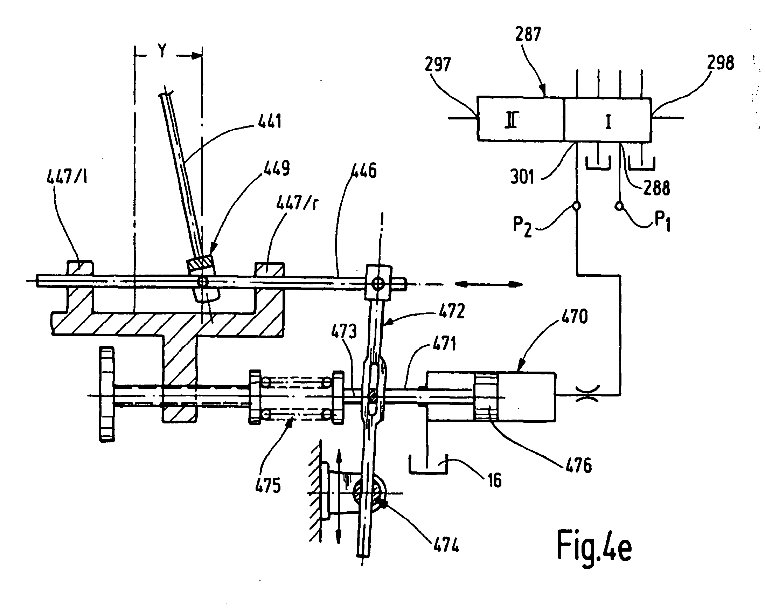

Zur diesbezüglichen Erläuterung sei auf das schematisch vereinfachte Blockschaltbild der Fig. 4 Bezug genommen, durch die wiederum - analog zur Darstellung der Fig. 1 - ein Leichtfahrzeug repräsentiert ist, bei dem wiederum eine Druckumsetzungseinrichtung 30, wie anhand der genannten Figuren erläutert, vorgesehen ist, um die Versorgung des Antriebsstranges eines Leichtfahrzeuges, aus einem hydraulischen Druckversorgungsaggregat und Energierückgewinnung aus verschiedenen Betriebszuständen des Fahrzeuges zur Aufladung eines Druckspeichers des Versorgungsaggregats 12 zu vermitteln.

In Anbetracht der weitgehenden Analogie des Ausführungsbeispiels gemäß Fig. 4 mit dem Ausführungsbeispiel, wie anhand der Fig. 1 und 2a erläutert, soll durch die Verwendung jeweils identischer Bezugszeichen auf die Baugleichheit oder Äquivalenz identisch bezeichneter Elemente hingewiesen werden und die nachfolgende Erläuterung im wesentlichen auf die Behandlung unterschiedlicher bzw. ergänzender Elemente beschränkt werden, durch die zusätzliche Funktionen erfüllbar sein sollen.

Für den Antriebsstrang 10 des Fahrzeuges sei derselbe Aufbau vorausgesetzt, wie anhand der Fig. 1 und 2a erläutert, desgleichen für das Druckversorgungsaggregat 12.

Dasselbe gilt weiter sinngemäß für den mechanischen Aufbau der Druckumsetzungseinrichtung als Pumpeinrichtung, die über einen zweiarmigen Hebel mit verstellbarem Hebelverhältnis mittels der Antriebseinrichtung 37 antreibbar ist. Hierfür sei ein Aufbau vorausgesetzt, wie anhand der Fig. 1 und 2a im einzelnen erläutert.

Für den Antriebsstrang 10 einschließlich seiner Steuerventilanordnung 13 sei der schon erläuterte Aufbau vorausgesetzt, d.h. durch Druckzufuhr am Versorgungsanschluss 14/F erfolgt die Druckzufuhr für den Fahrbetrieb in beiden Richtungen, während am Primäranschluss $34/P_1$ im Rekuperationsbetrieb des Fahrzeuges auftretender Druck als Primärdruck in die Druckumsetzungseinrichtung 30/F eingekoppelt wird.

Unter diesen Voraussetzungen ist die Druckumsetzungseinrichtung 30/F zur Steuerung sowohl des Fahrbetriebes als auch eines Brems- und eines Rekuperationsbetriebes geeignet, sofern die nachfolgend erläuterten, vergleichsweise geringfügigen ergänzenden Modifikationen implementiert sind.

A) Der Verstellbereich des Hebelarmverhältnisses ist dahingehend getroffen - "symmetrisiert" -, dass das Hebelarmverhältnis $l_a/l_k$ zwischen 1/H und H veränderbar ist, wobei mit $l_k$ die Länge des Kraftarmes und mit $l_a$ die Länge des Lastarmes des zweiarmigen Hebels 43 bezeichnet sind, der die mechanische Kopplung zwischen dem Hydraulikantrieb 37 und der Hydraulikpumpe 38 der Druckumsetzungseinrichtung 30/F vermittelt;

B) Der Variationsbereich "H" des Hebelarmverhältnisses, innerhalb dessen näherungsweise ein linearer Zusammenhang zwischen der Auslenkung des Schlittens 83 (Fig. 2a) aus einer neutralen Mittelposition, in der das Verhältnis $l_a/l_k$ den Wert 1 hat, und den vorgenannten Grenzwerten der Kraftumsetzungsverhältnisses besteht, sollte einen Wert von mindestens 5 haben, was in Anbetracht der zu berücksichtigenden Winkelvariationen in einem für die Praxis ausreichendem Maße ohne nennenswerte Aufwendungen zur Kompensation von Nichtlinearitäten möglich ist, andererseits jedoch auch in guter Näherung durch "linearisierende" Lenkermehrecke möglich ist, die mit vergleichsweise geringem technischem Aufwand realisierbar sind.

C) Die Druckumsetzungseinrichtung 30/F ist - eingangsseitig - von einer Primärdruckversorgung über den Ausgang 34/$p_1$ der Steuerventilanordnung 13, die einem Rekuperationsbetrieb zugeordnet ist, auf eine Druckversorgung über den Druckanschluss 14 des Druckversorgungsaggregats 12 umschaltbar, die dem Fahrbetrieb des Fahrzeuges, beginnend mit dem Anfahren mit vergleichsweise hoher Beschleunigung bis zu den Fahrbetriebssituationen mit relativ hoher Fahrzeuggeschwindigkeit, jedoch vernachlässigbarer Beschleunigung zugeordnet ist.

Zur diesbezüglichen Umschaltung ist bei dem zur Erläuterung gewählten Ausführungsbeispiel ein von Hand betätigbares Umschaltventil 166' vorgesehen, mittels dessen die Antriebseinheit 37 der Druckumsetzungseinrichtung von Druckversorgung aus dem Fahrzeug (Rekuperationsbetrieb) auf Druckversorgung aus dem Druckversorgungsaggregat 12 (Vorwärts- und Rückwärtsfahrbetrieb) umschaltbar ist.

Das Umschaltventil 166 hat demgemäß zwei Versorgungsanschlüsse, nämlich einen dem Druckausgang 34/$p_1$ der Steuerventilanordnung 13 des Fahrzeuges zugeordneten $p_1$-Versorgungsanschluss 167 und einen dem Druckversorgungsaggregat 12 zugeordneten P-Versorgungsanschluss 168. Es hat nur einen Verbraucheranschluss 169, der dem Druckversorgungseingang der Antriebseinheit 37 der Druckumsetzungseinrichtung 30 entspricht, die somit alternativ dem Ausgangsdruck des Druckversorgungsaggregats 12 oder dem "Rekuperations"-Druck im Bremsbetrieb ausgesetzt ist.

Das Umschaltventil 166 ist als 3/3-Wegeventile ausgebildet, das eine durch in entgegengesetzter Richtung wirkende Ventilfedern 171/r und 171/l federzentrierte Sperrstellung als Grundstellung "0" hat, in der sämtliche Ventilanschlüsse 167, 168 und 169 gegeneinander abgesperrt sind, und durch manuelle Betätigung in alternative Funktionsstellungen 1 und II schaltbar ist, deren eine - die Funktionsstellung 1 - dem Rekuperationsbetrieb zugeordnet ist, in der der Druckausgang 34/$P_1$ der Steuerventilanordnung 13 des Antriebsstranges 10 mit dem Verbraucheranschluss 169 des Umschaltventils verbunden ist, und in deren anderer, der Funktionsstellung II, der Druckausgang des Druckversorgungsaggregats mit dem Verbraucheranschluss 169 kommunizierend verbunden, jedoch gegen den anderen Versorgungsanschluss abgesperrt ist.

Das Umschaltventil 166 ist in den jeweiligen Funktionsstellungen I und II mittels schematisch angedeuteter Rastvorrichtungen 172/r und 172/l in üblicher Weise lösbar fixierbar.

Für den Fall einer Steuerung des Fahrbetriebes durch die Druckumsetzungseinrichtung 30/F, kann es zweckmäßig sein, das Druckversorgungsaggregat 12 direkt mit dem Versorgungsanschluss 14/F, gleichsam unter Umgehung der Druckumsetzungseinrichtung, zu verbinden, d.h. einen Nebenschlusspfad zur Versorgung zu benutzen, der mittels eines als 2/2-schlusspfad zur Versorgung zu benutzen, der mittels eines als 2/2-Wegeventil dargestellten Umschaltventils 170 bedarfsweise freigebbar bzw. absperrbar ist, das in einem normalen Fahrbetrieb seine sperrende Grundstellung einnimmt und z. B. zum Zweck einer bedarfsweisen, raschen Beschleunigung in seine Durchflussstellung I schaltbar ist, z. B. dadurch, dass das Ventil 170 als druckgesteuertes Ventil ausgebildet ist, das auf einen Druckanstieg auf der Druckerzeugungsseite mit einem Durchschalten in die Durchflussstellung reagiert. Zweckmäßigerweise ist dieses Abschaltventil 170 auch manuell betätigbar, um in jedem Falle eine bedarfsgerechte Druckeinkopplung in das Fahrwerk des Fahrzeuges zu ermöglichen.

Die Funktion des Ventils 170 ist im wesentlichen die eines Sicherheitsventils, das im Bedarfsfall ein rasches Beschleunigen des Fahrzeuges aus dem Speicherinhalt ermöglichen helfen soll.

Für den Fall einer Steuerung der Fahrzeuggeschwindigkeit über die Druckumsetzungseinrichtung gemäß Fig. 2c erfolgt das Auswählen der Funktionen Bremsen oder Beschleunigen mit dem Umschaltventil 166. Der Bremsmodus wird ausgewählt durch Betätigung des gemäß der Darstellung "linken" Betätigungselements 172/l, der Beschleunigungsmodus wird ausgewählt durch Betätigen des "rechten" Betätigungselements 172/r.

Beim Bremsen ergibt sich der minimale Bremsdruck (Anschluss- 34/$p_1$) bei Positionen des Schlittens 83, die bei kleinen Werten des Verhältnisses $l_A/l_K$, d.h. des Verhältnisses Lastarm zu Kraftarm des zweiarmigen Hebels 43 gegeben sind. Das mittlere Gelenk des zweiarmigen Hebels 43 befindet sich in diesem Fall in einem der Pumpeinheit 38 angenäherten Position.

Der maximale Bremsdruck ergibt sich in Gelenkmittellage (e = 0, d.h. $l_A/l_K$ = 1).

Beim Beschleunigen ergibt sich der minimale Beschleunigungsdruck, der am Anschluss 14/f ansteht, bei Positionen des Schlittens 83, die bei großen Werten des Verhältnisses $l_A/l_K$ des zweiarmigen Hebels 43 gegeben sind. Das mittlere Gelenk des zweiarmigen Hebels 43 befindet sich in der der Antriebseinheit angenäherten Position. Der maximale Beschleunigungsdruck ergibt sich in Gelenkmittellage (e = 0).

Eine dem Stillstand des Fahrzeuges zugeordnete Sperrstellung eines Ventils, z. B. des Umschaltventils 166 gemäß Fig. 2c, kann zur Festsetzung des Fahrzeuges im Stillstand benutzt werden, der jedoch durch zusätzliche, nicht dargestellte mechanische Komponenten zu sichern ist, damit in einem hydraulischen System unvermeidbare Undichtigkeiten nicht über längere Zeiträume hinweg zu einer Bewegung des Fahrzeuges Anlass geben können.

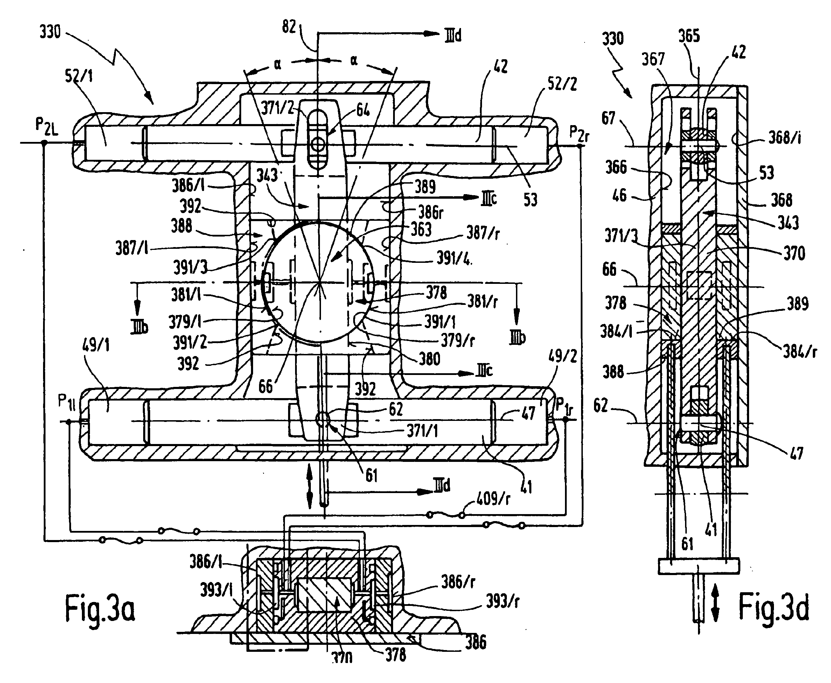

Zur Erläuterung eines weiteren Ausführungsbeispiels einer den Erfindungsgedanken unterfallenden Druckumsetzungseinrichtung sei nunmehr auf die Fig. 3a bis 3d Bezug genommen, in denen Einzelheiten einer insgesamt mit 330 bezeichneten - erfindungsgemäßen - Druckumsetzungseinrichtung dargestellt sind, die sich durch eine besonders reibungsarme Gestaltung auszeichnet und demgemäß mit einem besonders hohen Wirkungsgrad nutzbar ist.

In konstruktiver Hinsicht unterscheidet sich die Druckumsetzungseinrichtung 330 gemäß den Fig. 3a bis 3d von der Druckumsetzungseinrichtung 30 gemäß den Fig. 2a und 2b im wesentlichen nur durch die spezielle Gestaltung des mittleren Gelenks 363 des zweiarmigen Hebels. 343 der Druckumsetzungseinrichtung 330, dessen gelenkige Verbindung mit den Doppelkolben 41 und 42 der Druckumsetzungseinrichtung 330 über ein Festgelenk 61 und ein weiteres Gelenk 64 in genau derselben Weise implementiert ist, wie für die Druckumsetzungseinrichtung 30 anhand der Fig. 2a beschrieben.

Soweit in den Fig. 2a, 2b und 3a jeweils dieselben Bezugszeichen verwendet sind, soll dies auf die Baugleichheit bzw. -analogie der identisch bezeichneten Bau- und Funktionselemente hinweisen und auch den Verweis auf die hierzu anhand der Fig. 2a und 2b erfolgte Beschreibung beinhalten um Wiederholungen zu vermeiden.

Zum Zweck der Erläuterung sei wiederum davon ausgegangen, dass die Gelenkebene 82 in der die Gelenkachsen 62 und 67 der den zweiarmigen Hebel 343 gelenkig mit den Kolben 41 und 42 verbindenden Gelenke 61 und 64 sowie die Gelenkachse 66 des "mittleren" Schwenkgelenks 363 des zweiarmigen Hebels, das hinsichtlich seiner Position zwischen den beiden anderen Gelenken veränderbar ist, diejenige Mittelebene des zweiarmigen Hebels 343 ist, welche senkrecht zu der durch die zentralen Längsachsen 47 und 53 der beiden Doppelkolben 41 und 42 aufgespannten Ebene verläuft, die in der Fig. 3d mit 365 bezeichnet ist, und gemäß der Darstellung der Fig. 3d die eine Symmetrieebene der Schlitten-/Hebelanordnung bildet, die gemäß dieser Figur zwischen der Bodenfläche 366 einer "flachen" Vertiefung 367 des Gehäuses 46 der Druckumsetzungseinrichtung 330 und einer Deckplatte 368 angeordnet ist, mittels derer diese flache Vertiefung 367 flüssigkeitsdicht abgeschlossen ist.

In dieser Mittelebene 365 liegen auch die parallel zueinander verlaufenden zentralen Längsachsen 47 und 53 der beiden Doppelkolben 41 und 42 der Druckumsetzungseinrichtung 330.

Zur schwenkbaren Lagerung des zweiarmigen Hebels 343 an dem zur Veränderung des Hebelarmverhältnisses im Bereich zwischen den Doppelkolben 41 und 42 hin- und herverschiebbaren, insgesamt mit 388 bezeichneten Schlitten ist eine "dicke" Kreisscheibe 378 vorgesehen, die funktionell dem Gleitstein sowie dem Lagerzapfen des mittleren Gelenk 63 des Ausführungsbeispiels gemäß Fig.2a entspricht. Die Kreisscheibe 378 ist, in Richtung der Schwenkgelenkachse 66 des mittleren Gelenks 363 gesehen, sowohl an der Bodenfläche 366 der Vertiefung 367 des Gehäuses 46 als auch an der Innenseite 368/i der die Vertiefung 367 nach außen dicht abschließenden Deckplatte 368 gleitend abgestützt und insoweit auch geführt.

Der zur Variation des Hebelarmverhältnisses vorgesehene Schlitten 388 hat die Grundform einer quadratischen oder nahezu quadratischen Platte mit vier rechteckig aneinander anschließenden, "schmalen" Begrenzungsflächen und zwei größerflächigen, einander gegenüberliegenden, nahezu quadratischen Begrenzungsflächen, die, gesehen im fertig montieren Zustand der Druckumsetzungseinrichtung 330, gleitfähig an dem Boden 366 der Vertiefung einerseits, und der Innenseite der Deckplatte 368, andererseits, anliegen.

Des Weiteren ist der Schlitten 388 mit zwei seiner schmalen Begrenzungsflächen 387/r und 387/l gleitfähig an einander gegenüberliegenden, parallel zueinander und rechtwinklig zu den zentralen Längsachsen 47 und 53 der Doppelkolben 41 und 42 verlaufenden, senkrecht von der Bodenfläche 366 der Vertiefung 367 aufragenden Begrenzungswänden 386/r und 386/l abgestützt, die gehäusefeste Gleitführungsflächen für den Schlitten 388 bilden.

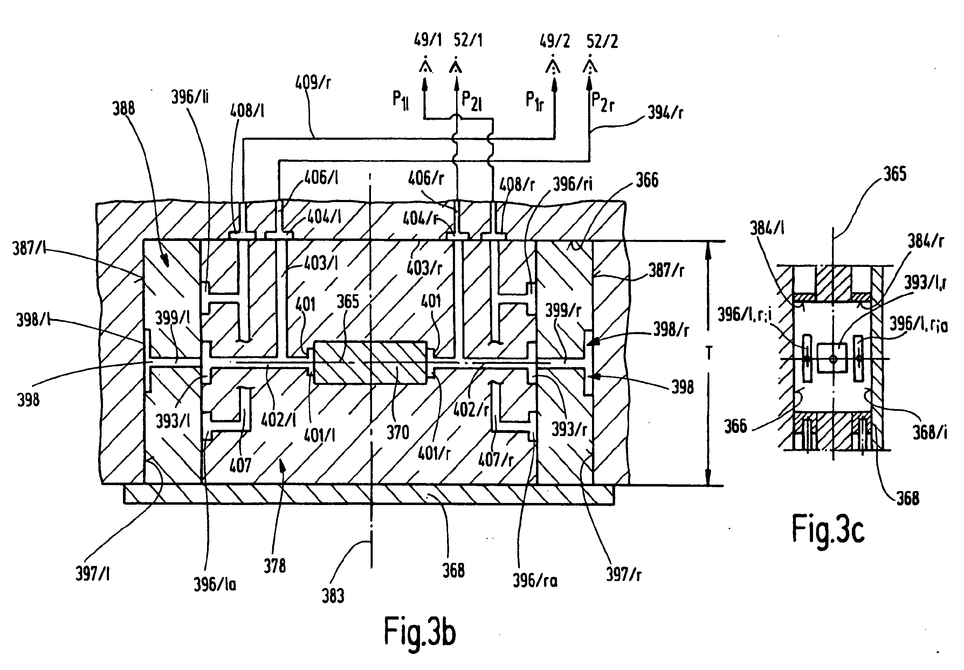

Die Kreisscheibe 378 ist von einer zentralen Bohrung 389 des plattenförmigen Schlittens 388 aufgenommen, die an schmalen, zylindrischen Ringbereichen, die rechtwinklig an den Boden 366 der Vertiefung 367 bzw. der Innenseite der Deckplatte 368 anschließen, einen flüssigkeitsdichten Kontakt zwischen der Kreisscheibe 378 und dem Block des Schlittens 388 vermitteln. Diese Ringbereiche sind in den Fig. 3c und 3d mit 384/l bzw. 384/r bezeichnet.

Zur Bildung der beiden Hebelarme des zweiarmigen Hebels 343 dient ein insgesamt mit 370 bezeichneter Flachstab, der zwischen sich nach außen trapezförmig verjüngenden Endabschnitten 371/1 und 371/2, innerhalb derer die Schwenkgelenke 61 und 64 angeordnet sind, einen langgestreckten Mittelabschnitt 371/3 hat, auf dessen gesamter Länge die Querschnittsabmessungen des Flachstabes 370 konstant sind. Die Dicke T der Kreisscheibe 378 ist signifikant größer als die Dicke t des Flachstabes 370 und entspricht etwa deren doppeltem Wert. Die Kreisscheibe 378 hat einen zentral, in der Fig. 3a gestrichelt eingezeichneten Durchtrittskanal 380, dessen lichter Querschnitt im wesentlichen dem Querschnitt des Mittelabschnitts 371/3 des Flachstabes 370 entspricht, der durch den Durchtrittskanal 380 der Kreisscheibe 378 hindurchtritt, wobei flüssigkeitsdichter Gleitsitz im Sinne leichtgängiger Verschiebbarkeit der Kreisscheibe gegenüber dem Flachstab gegeben ist. Der Flachstab 370 und die Kreisscheibe 378 sind, gesehen in der Ansichtsdarstellung der Fig. 3a, symmetrisch bezüglich der gemeinsamen Mittelebene 82 ausgebildet, die beim dargestellten Ausführungsbeispiel durch die Gelenkachsen der Gelenke 61, 363 und 64 aufgespannt ist.

Auch der Schlitten 388 ist, gemäß in der Darstellung der Fig. 3a symmetrisch bezüglich einer Mittelebene 383 (Fig. 3b) ausgebildet, die parallel zu den Gleitführungsflächen 386/r und 386/l, mittig zwischen diesen verläuft und auch symmetrisch bezüglich der Symmetrieebene 365 (Fig. 3c), die zwischen der Bodenfläche 366 der Gehäusevertiefung 367 und der Innenseite 368/i der Deckplatte 368 verläuft. Des Weiteren ist der Schlitten 388 auch symmetrisch bezüglich derjenigen - schlittenfesten - Mittelebene 383 (Fig. 3b), die sich zwischen seinen beiden schmalen Begrenzungsflächen 387/r und 387/l erstreckt und senkrecht zur Bodenfläche 366 der Vertiefung 367 des Gehäuses 46 verläuft und die Drehachse 66 des mittleren Hebelgelenkes 363 enthält.

Wird für die Druckumsetzungseinrichtung 330 gemäß Fig. 3a, ungeachtet der schematisch stark vereinfachten Darstellung, Maßstäblichkeit derselben wenigstens so weit unterstellt, dass realistische Bedingungen hinsichtlich der möglichen Schwenkauslenkungen des zweiarmigen Hebels sowie der Änderungsmöglichkeiten des Hebelarmverhältnisses Lastarm/Kraftarm des zweiarmigen Hebels 343 angenommen werden können, so ist erkennbar, dass für mögliche Schwenkwinkel des zweiarmigen Hebels, bezogen auf die zwischen den Führungsflächen 386/l und 386/r verlaufende Mittelebene Beträge um 20°, d.h. ein Gesamtschwenkwinkel von 40°, realistisch sind, wobei Auslenkungshübe der Kolben 41 und 42 zwischen ihren extremalen Auslenkungspositionen in der Größenordnung des extremalen Verschiebehubes des Schlittens 388 möglich erscheinen und die Variation des Hebelarmverhältnisses zwischen minimalem und maximalem Wert zwischen 1 und 1/10 betragen kann, wobei natürlich bei extremen Werten des Hebelarmverhältnisses die Schwenkauslenkungen des zweiarmigen Hebels auf geringere Winkelbeträge beschränkt sind.

Die Kreisscheibe 378, die gleichsam die sich drehende Lagerwelle des Schwenklagers 363 des 2-armigen Hebels 343 bildet, steht über schmale äußere Zylindermantelflächen 379/l und 379/r in gleitfähigformschlüssigem Eingriff mit den zugeordneten, geschlossen-mantelförmigen Bereichen 384/i und 384/a der zentralen Bohrung 389 des plattenförmigen Grundkörpers des Schlittens 388.

Des Weiteren ist die Kreisscheibe 378 auch an inneren, sektorförmigen "konkaven' Gegenflächen 381/l und 381/r der Schlittenbohrung 389 formschlüssig drehbar gelagert, die bezüglich der Mittelebene 82 symmetrisch ausgebildet sind, die parallel zu und zwischen den Gleitflächen 386/l und 386/r der Gehäusevertiefung 367 verläuft, an denen der Schlitten 388 an den von der Vertiefung 367 aufragenden Seitenwänden des Gehäuses abgestützt ist. Die gekrümmten Gleitflächen des Schlittens 388 erstrecken sich über Sektorbereiche von jeweils etwa 90°. Diese sektorförmigen, gekrümmten Gleitflächen 381/l und 381/r schließen über Kanten 391/1 bis 391/4, die parallel zur Schwenkachse 66 des zentralen Hebelgelenks 363 verlaufen, mit der aus der Figur 3a ersichtlichen Orientierung an gestrichelt eingezeichnete, ebene, paarweise V-förmig zueinander verlaufende, Anschlagflächen 392 an, die zumindest in extremalen Positionen des Schlittens 388 den Schwenkwinkel des 2-armigen Hebels 343 begrenzen.

Aufgrund des insoweit erläuterten formschlüssigen Eingriffs des 2-armigen Hebels 343 mit dem Schlitten 388 werden im Betrieb der Druckumsetzungseinrichtung 330 über das zentrale Schwenkgelenk 363 erhebliche Querkräfte auf den Schlitten 388 ausgeübt, was - ohne Gegenmaßnahmen - zu erheblichen Reibungsverlusten und einer erheblichen Reduzierung des Wirkungsgrades der Druckumsetzungseinrichtung 330 führen könnte.

Zu einer Reduzierung der auftretenden Querkräfte, im wesentlichen durch eine Kompensation solcher Kräfte sind bei dem dargestellten, speziellen Ausführungsbeispiel gemäß den Figuren 3a bis 3d mehr im einzelnen die folgenden Maßnahmen getroffen:

Die Kreisscheibe 378, die in den konkaven, sich jeweils über einen Kreissektor erstreckenden Gleitbereichen 381/l und 381/r des Schlittens drehbar gleitend gelagert ist, ist in denjenigen, ihrerseits sektorförmigen Bereichen ihrer im wesentlichen zylindermantelförmigen Gleitflächen, die, unabhängig davon, welche Schwenklage der zweiarmige Hebel 343 momentan einnimmt, stets innerhalb der konkaven, sektorförmigen Gleitflächen 381/l und 381/r des Schlittens 388 angeordnet sind, mit geschlossen berandeten flachnutförmigen Vertiefungen versehen; diese Vertiefungen sind durch die konkaven Gleitflächen 381/l und 381/r der Schlittenbohrung flüssigkeitsdicht abgedeckt sind und bilden zusammen mit diesen nach außen dicht abgeschlossene "Kompensations"-Kammern, durch deren Druckbeaufschlagung auf die Kreisscheibe 378 wirkende, durch die Drücke, welche in der jeweils druckbeaufschlagten Antriebskammer 49/1 oder 49/2 der Antriebseinrichtung 37 und in der Ausgangsdruckkammer 52/2 oder 52/1 der Pumpeinrichtung herrschen, bedingte Kräfte, die die Kreisscheibe gemäß schen, bedingte Kräfte, die die Kreisscheibe gemäß der Darstellung der Fig. 3a und 3b nach links (Index "l") oder nach rechts (Index "r") drängen, zumindest zu einem großen Anteil kompensierbar sind, wodurch Minderungen des Wirkungsgrades der Druckumsetzungseinrichtung klein gehalten werden können.

Mehr im Einzelnen ist das zu diesem Zweck vorgesehene System von Kompensationskammern bei dem zur Erläuterung gewählten Ausführungsbeispiel wie folgt ausgebildet:

Gesehen in der Ansichtsdarstellung der Fig. 3a und in der Schnittdarstellung der Fig. 3b ist die Kreisscheibe 378 sowohl in ihrem linken gleitfähig gelagerten Sektorbereich als auch in ihrem rechten Sektorbereich mit einer zentralen flachen Vertiefung 393/l bzw. 393/r versehen (Fig. 3b), die jeweils mit der bezüglich der Mittelebene 82 (Fig. 3a) der Druckumsetzungseinrichtung 330 auf der gegenüberliegenden Seite der Druckumsetzungseinrichtung angeordneten Ausgangsdruckkammer 52/2 bzw. 52/1 der Pumpeinrichtung 38 der Druckumsetzungseinrichtung 330 kommunizierend verbunden ist, wobei Abschnitte der jeweiligen Verbindungsströmungspfade durch flexible Leitungen 394/r bzw. 394/l gebildet sind, die zur Implementierung der Schwenkbarkeit des zweiarmigen Hebels 343 erforderlich sind.

Die effektiven Beträge der Querschnittsflächen dieser flachen Vertiefungen 393/l bzw. 393/r, durch deren Beaufschlagung mit den in den jeweils angeschlossenen Druckkammern 52/1 bzw. 52/2 der Pumpeinheit 38, betriebs-bedingt, herrschenden Drücken $p_2$/l bzw. $p_2$/r den Lastkräften entgegengesetzt gerichtete Kompensationskräfte erzeugbar sind, sind dem Betrage nach annähernd gleich den Querschnittsflächen des Kolbens 42 der Pumpeinheit 38 der Druckumsetzungseinrichtung 330, jedoch etwas kleiner als diese Flächen.

Gesehen in den Schnittdarstellungen der Figuren 3b und 3c sind jeweils beidseits der zentralen flachen Vertiefungen 393/l und 393/r in einer bezüglich der Mittelebene 365 (Fig. 3c) symmetrischen Anordnung und Ausbildung zwei weitere flache Vertiefungen 396/ra und 396/ri bzw. 396/la und 396/li vorgesehen, die - paarweise seitenbezogen - mit den Drücken $p_1$r bzw. $p_1$l beaufschlagbar sind, die im Betrieb der Druckumsetzungseinrichtung 330 in der rechten Antriebsdruckkammer 49/2 bzw. linken Antriebsdruckkammer 49/1 der Antriebseinrichtung 37 alternierend eingekoppelt werden, wenn die Druckumsetzungseinrichtung 330 in Betrieb ist, d.h. im Speicherladebetrieb benutzt wird.

Um auf eine analoge Weise eine leichtgängige Verschiebbarkeit des Schlittens 388 zwischen den vom Boden 366 der Vertiefung 367 aufragenden parallelen Wänden 387/l und 387/r zu erzielen, ist auch der Schlitten 388 an seinen einander abgewandten, den aufragenden Wänden 387/l und 387/r zugekehrten, "äußeren" Gleitflächen 397/l und 397/r mit flachen, nutförmigen Vertiefungen 398/l bzw. 398/r versehen, die wiederum "zentral", d.h. mittig zwischen dem Boden der Vertiefung und der Innenseite der Deckplatte 368 angeordnet sind, derart, dass die Mittelebene 365 des Schlittens auch Mittelebene dieser nutförmigen Vertiefung 398/l und 398/r ist. Zusammen mit den gehäusefesten Gleitflächen 387/l und 387/r bilden diese Vertiefungen wiederum Ausgleichskammern 398, die innerhalb des möglichen Schwenkbereiches der Kreisscheibe bzw. der zentralen Vertiefungen 393/l und 393/r derselben mit diesen Kammern durch je einen schlittenfesten, Kanal 399/l bzw. 399/r in kommunizierender Verbindung stehen, so dass diese äußeren Ausgleichskammern 398 im Betrieb jeweils mit demselben Druck beaufschlagt sind, der auch in den zentralen Kammern 393/l bzw. 393/r momentan herrscht.

Zur Verminderung der Gleitreibung zwischen dem Flachstab 370 und der Kreisscheibe 378 sind an deren dem Flachstab 370 zugewandten schmalen Begrenzungsseiten zu den äußeren Ausgleichskammern 398 analoge "innere" Ausgleichskammern 401 vorgesehen, die in symmetrischer Anordnung bezüglich der Mittelebene 383 des Schlittens 388 und des den zweiarmigen Hebel bildenden Flachstabes 370 realisiert sind. Auch hier sind die Ausgleichskammern durch flache, nutförmige Vertiefungen 401/l, r gebildet, die in symmetrischer Anordnung bezüglich der Mittelebene 383 bezüglich der rechtwinklig zu dieser verlaufenden Mittelebene 365 auch symmetrisch ausgebildet sind. Diese Ausgleichskammern stehen über je einen zentralen Längskanal 402/l bzw. 402/r mit den mittigen, äußeren Ausgleichskammern 393/l bzw. 393/r in kommunizierender Verbindung und stehen demgemäß jeweils unter demselben Druck wie die Ausgleichskammern 393 und 398.

Im Betrieb der Druckumsetzungseinrichtung 330 werden die gemäß der Darstellung der Fig. 3b linken Ausgleichskammern 393/l, 398/l und 401/l, die über die Längskanäle 399/l und 402/l in kommunizierender Verbindung miteinander stehen über einen in den Längskanal 402/l der Kreisscheibe 378 mündenden Querkanal 403/l, der innerhalb einer kreissektorförmig verlaufenden Anschlussnut 404/l des Gehäuses - in jeder der möglichen Schwenklagen der Kreisscheibe 378 - mündet, mit einem Festanschluss 406/l des Gehäuses verbunden, der über die flexible Leitung 394/r und teilweise fest verlegte Leitungsabschnitte mit dem rechten Ausgangsdruckraum 52/2 der Pumpeinrichtung 38 verbunden ist.

Analog sind die "rechten", zentralen Ausgleichskammern 401/r und 393/r der Kreisscheibe 378 und die weitere Ausgleichskammer 398 des Schlittens 388 über einen Querkanal 403/r und eine funktionsentsprechende Gehäusenut 404/r sowie über die erwähnte flexible Leitung 394/l mit dem gemäß der Fig. 3a linken Ausgangsdruckraum 52/1 der Pumpeinrichtung 38 kommunizierend verbunden. Der Wechsel von Druckbeaufschlagung und Druckentlastung dieser Kammern erfolgt durch die schon erläuterte Steuerventilanordnung.

Entsprechendes gilt sinngemäß für die beidseits der zentralen Ausgleichskammern 393 angeordneten Ausgleichskammern 396: Die gemäß der Fig. 3b linken Ausgleichskammern 396/li und 396/la sind jeweils an einen weiteren Querkanal 407 der Kreisscheibe 378 angeschlossen, der wiederum in eine Sektornut 408/l mündet, welche unter anderem über einen weiteren flexiblen Leitungsabschnitt 409/r (Fig. 3a) mit dem "rechten" Antriebsdruckraum 49/2 der Antriebseinrichtung 37 in kommunizierender Verbindung steht.

Entsprechend sind die gemäß Fig. 3b rechten Ausgleichskammern 396/ra und 396/ri mit einem weiteren Querkanal 407/r verbunden, der in eine kreissektorförmig verlaufende Nut 408/r mündet, die ihrerseits mit einem Festanschluss 406/r des Gehäuses verbunden ist, der über die gemäß Fig. 3b "linke" flexible Leitung mit dem gemäß Fig. 3a linken Antriebsdruckraum 49/1 der Antriebseinrichtung 37 kommunizierend verbunden ist. Die Druckbeaufschlagung und Druckentlastung der linken bzw. der rechten Entlastungskammer erfolgt ventilgesteuert nach Maßgabe der Druckentlastung und Druckbeaufschlagung der jeweils auf der Gegenseite angeordneten Druckkammern der Antriebseinheit und der Pumpeinheit der Druckumsetzungseinrichtung 330.

Alternativ zu der Druckversorgung- und -entlastung über flexible Leitungsabschnitte können die kreissektorförmigen Nuten des Gehäuses durch funktionsentsprechende Nuten an der Kreisscheibe ersetzt werden, mit der Folge, dass die Festanschlüsse auch über fest verlegte Leitungen mit den Druckkammern der Antriebseinheit 37 und/oder der Pumpeinheit 38 verbunden werden können. Möglich ist auch eine Druckversorgung und Entlastung über gehäusefeste Anschlusskanäle, die in entsprechend dem Verschiebeweg des Schlittens verlängerte Nuten 398 des Schlittens 388 münden, die dann allerdings symmetrisch in dem Sinne angeordnet werden müssen, dass einseitig auf die Scheibe 378 wirkende Kräfte vermindert, d.h. kompensiert werden.

Die Druckumsetzungseinrichtung 30 A und 30 B, wie anhand der Fig. 2a und 2b unter besonderer Berücksichtigung eines Einsatzes einer solchen Einrichtung zur Rückgewinnung von Energie beim Bremsen eines Fahrzeuges beschreiben, dient der Umwandlung seiner kinetischen Energie in - speicherbare - potentielle Energie, was in dem betrachteten Fall durch Aufladung eines hydraulischen Druckspeichers erfolgt, der ein definiertes Volumen unter hohem Druck stehenden Hydraulikmediums aufnimmt. Die Druckumsetzungseinrichtung 30 vermittelt hierbei die Funktion einer besonderen Art von Drucktransformator, der in der Lage ist, einen auf niedrigem Druckniveau anfallenden Volumenstrom von Hydrauliköl in einen kleineren Volumenstrom jedoch höheren Druckes umzuwandeln, um einen schon auf relativ hohem Druckniveau stehenden Hydraulikspeicher noch weiter aufladen zu können.

Sowohl bei dem Ausführungsbeispiel der Einrichtung 30b gemäß Fig. 2b als auch bei der Umsetzungseinrichtung 30 gemäß Fig. 2a ist die Abhängigkeit des Umsetzungsverhältnisses $p_2/p_1$ von dem Verhältnis der Hebelarmlänge nicht linear in dem Sinne, als dieses Verhältnis, das durch die Beziehung

$$p_2 / p_1 = \frac{d + e}{d - e} \equiv \frac{1 + e/d}{1 - e/d} \qquad (1)$$

gegeben ist, nicht linear ist, wobei in dieser Bezeichnung mit d die Hälfte des Abstandes D der zentralen Längsachsen der Pumpeinheit 38 und der Antriebseinheit 37 bezeichnet ist und mit e die Auslenkung des Schlittens 83 aus seiner Mittelstellung, um einen erwünschten Wert des Übersetzungsverhältnisses $p_2/p_1$ einzustellen.

Die anhand des speziellen Einsatzfalles, Fahrtbetriebssteuerung bei einem hydraulisch angetriebenen Leichtfahrzeug, erläuterte Druckumsetzungseinrichtung ermöglicht, verallgemeinernd ausgedrückt, auf einfache Weise die Vorgabe bzw. veränderbare Einstellung der Energieflussrichtung innerhalb eines hydraulischen Systems, das mehrere Teilsysteme umfassen kann; sie ist daher sowohl zur Steuerung oder Regelung eines Druckes in einem Teilsystem eines komplexeren, mehrere Untereinheiten umfassenden Hydrauliksystems, im Sinne einer gezielten Veränderung des Druckes, als auch zu einer geregelten Konstanthaltung eines Druckes in einem solchen Teilsystem geeignet, z. B. für den Fall, dass in der Druckversorgung des Gesamtsystems beabsichtigt oder zufällig Änderungen bzw. Schwankungen auftreten.

In Frage kommen auch Anwendungen der genannten Druckumsetzungseinrichtung zur

- Konstanthaltung der Spannkraft bei hydraulisch spannbaren Werkzeughaltern,

- Positionierungssteuerung und -regelung bei Hebebühnen sowie

- Steuerung von Vorschub- und Rückzugshüben hydraulischer Differentialzylinder, die bei Bearbeitungsmaschinen zum Positionieren von Werkzeugen oder Arbeitsköpfen dienen.

Die in den Figuren 4a bis 4c insgesamt jeweils mit 40 bezeichnete Stelleinrichtung für die Einstellung des Hebelarmverhältnisses $l_k/l_a$ des zweiarmigen Hebels 43 der jeweils betrachteten Druckumsetzungseinrichtung 30 umfasst in der zur Erläuterung gewählten speziellen Realisierung einen hydraulischen Stellzylinder 311 mit einseitig aus dem Gehäuse austretender Kolbenstange 312, mit der verschiebefest der das mittlere Schwenkgelenk des stange 312, mit der verschiebefest der das mittlere Schwenkgelenk des zweiarmigen Hebels tragende Schlitten 313 verbunden ist, für den eine wie anhand der Figuren 2a bis 3d erläuterte Gestaltung und Lagerung vorausgesetzt sei, auf die insoweit Bezug genommen wird.

Für die durch die Stelleinrichtung 40 repräsentierte Druckumsetzungseinrichtung sei, lediglich zum Zweck der Erläuterung und ohne beschränkende Allgemeinheit, eine "stehende" Anordnung vorausgesetzt, derart, dass die Antriebseinrichtung 37 und die Pumpeinrichtung 38 derart "übereinander" angeordnet sind, dass die durch ihre zentralen Längsachsen aufgespannte Ebene vertikal verläuft, und dass der Stellzylinder 311 oberhalb dieser Antriebs-/Pumpeinheit 37, 38 mit vertikalem Verlauf seiner zentralen Längsachse 314 angeordnet sei, d.h. die Einstellung des Hebelarmverhältnisses durch vertikale Auf- und Abbewegungen des Schlittens 313 erfolgt.

Zur Steuerung dieser Bewegungen und damit zur Einstellung der genannten Hebelarmverhältnisse ist ein insgesamt mit 316 bezeichnetes Nachlaufregelventil vorgesehen, das mit mechanischer Sollwertvorgabe und mechanischer Istwertrückmeldung arbeitet.

"Sollwert" ist im betrachteten Fall die Position der zentralen Schwenkachse 66 zwischen den zentralen Längsachsen 47 und 53 der Antriebseinrichtung 37 und der Pumpeinrichtung 38 bzw. der in vertikaler Richtung gemessene Abstand der Gelenkachse 66 des zentralen Schwenkgelenks 63 des zweiarmigen Hebels von der Gelenkachse 67 des oberen Schwenkgelenks 64 bzw. der Gelenkachse 62 des unteren Schwenkgelenks 61 des zweiarmigen Hebels 83, deren Summe dem Wert D entspricht (Fig. 2a).

Zur diesbezüglichen "Positions"-Sollwertvorgabe, ist ein insgesamt mit 317 bezeichnetes Betätigungsgestänge vorgesehen, mittels dessen der insgesamt mit 318 bezeichnete Kolben des Nachlaufregelventils 316 in alternativen Richtungen, repräsentiert durch den Doppelpfeil 319 der Fig. 4a, verschiebbar ist, wobei die Verschieberichtung des Kolbens 318 des Nachlaufregelventils 316 parallel zu den möglichen Verschieberichtungen der Kolbenanordnungen der Antriebseinheit 37 und der Pumpeinheit 38 verläuft. Das Nachlaufregelventil 316 ist an dem Schlitten 313 zusammen mit diesem auf- und abverschiebbar angeordnet, wobei seine zentrale Längsachse 411 bei dem dargestellten, speziellen Ausführungsbeispiel in Höhe der Schwenkachse 63 des zweiarmigen Hebels 83 angeordnet ist.

Gesehen in der Darstellung der Fig. 4b, die einer Gestaltung der Druckumsetzungseinrichtung wie in der Fig. 2a dargestellt, entspricht, ist das Nachlaufregelventil 316 an der dem zweiarmigen Hebel 43 abgewandten Seite des Schlittens 313 angeordnet und mit seinem Gehäuse 412 an diesen auf nicht näher dargestellte Weise fest anmontiert.

In einer beim dargestellten, speziellen Ausführungsbeispiel als durchgehende zylindrische Bohrung dargestellten Ventilbohrung 414 ist eine der Grundform nach rohrförmige Ventilhülse 413 druckdicht verschiebbar angeordnet, die ihrerseits eine als Sackbohrung ausgebildete Bohrung 415 hat, in der der Ventilkolben 318 des Nachlaufregelventils 316 druckdicht verschiebbar angeordnet ist.

Durch radial äußere flache Ringnuten 416/l und 416/r der Ventilhülse 413 sind innerhalb der durchgehenden Ventilbohrung 414 des Ventilgehäuses 412 zwei in einem axialen Abstand voneinander angeordnete, radial äußere Ringräume 417/l und 41/r gebildet, deren einer - gemäß Fig. 4a der rechte - über eine abschnittsweise flexible Leitung 418/r mit dem stangenseitigen Druckraum 419 des hydraulischen Antriebszylinders 311 kommunizierend verbunden ist, und dessen zweiter, gemäß der Darstellung der Fig. 4a linker, Ringraum 417/l über die weitere abschnittsweise flexible gestaltete Leitung 418/l mit dem bodenseitigen Druckraum 421 des hydraulischen Stellzylinders 401 kommunizierend verbunden ist.

In Richtung der zentralen Längsachse 411 des Nachlaufregelventils 316 gesehen, ist zwischen den radial äußeren Ringräumen 417/l und 417/r durch eine radial innere flache Ringnut 422 der Ventilhülse und einen zentralen Kolbenflansch 423 des Ventilkolbens 318, gesehen dessen Gleichgewichtsposition, ein innerer zentraler Ringraum 424 des Nachlaufregelventils 316 begrenzt, der mit dem einen, äußeren, Ringraum 417/l, der mit dem bodenseitigen Druckraum 421 des Stellzylinders 311 kommunizierend verbunden ist, über einen kurzen radialen Kanal in ständig kommunizierender Verbindung steht.

An der Innenseite des Bodens 426, der die die Ventilbohrung 415 der Hülse bildende Sackbohrung abschließt, und einem Führungsflansch 427 des Ventilkolbens 318, der mit dessen zentralem Kolbenflansch 423 über ein kurzes stangenförmiges Zwischenstück 428/l verbunden ist, ist eine Ventilfeder 429 angeordnet, die unter einer mäßigen Federvorspannung steht und den Kolben 318 insgesamt gemäß der Darstellung der Fig. 4a nach rechts drängt, bzw., falls der Kolben 318 festgehalten wird, die Ventilhülse 413 in die Gegenrichtung, nach links "drängt" und ein stabförmiges Endstück 431 der Ventilhülse 413 in gleitfähiger Anlage mit einer Schrägfläche 432 einer in der Ansichtsdarstellung der Fig. 4a keilförmigen Rampe 433 hält. Hierdurch erfährt die Ventilhülse 413, wenn der Schlitten auf- oder abwärts bewegt wird, Auslenkungsbewegungen in alternativen Richtungen, d.h. nach "links" oder "rechts", wodurch die Positionsrückmeldung über die Schlittenposition erzielt wird.

Auf der dem Führungsflansch 427 gegenüberliegenden Seite des zentralen Kolbenflansches 423 des Ventilkolbens 318 ist, von dem zentralen Kolbenflansch 423 durch ein kurzes stabförmiges Zwischenstück 428/r mit diesem verbunden, ein äußerer Kolbenflansch 434 angeordnet, der in der zentralen Ventilbohrung 415 druckdicht gleitfähig geführt ist. Dieser äußere Kolbenflansch 434 und der zentrale Kolbenflansch 423 bilden die jeweils axialen beweglichen Abgrenzungen eines Ringraumes 436, der über einen kurzen Querkanal mit dem äußeren flachen Ringraum 417/r des Nachlaufregelventils kommunizierend verbunden ist, der seinerseits über die hydraulische Verbindungsleitung 418/r mit dem stangenseitigen Druckraum 419 des Steilzylinders 311 in ständig kommunizierender Verbindung steht.

Im Betrieb der Druckumsetzungseinrichtung ist der Primärdruck $p_1$, der in einem normalen Betrieb in die Antriebseinrichtung 37 eingekoppelt wird, auch in den stangenseitigen Druckraum 419 des Stellzylinders 311 und über diesen in den gemäß der Darstellung gem. Fig. 4a rechten, flachen äußeren Ringraum 417/r und über diesen auch in den äußeren Ringraum 436 eingekoppelt, der durch den äußeren Kolbenflansch 434 und den zentralen Flansch 424 in axialer Richtung begrenzt ist.

Der durch den zentralen Kolben einseitig beweglich begrenzte Sackbohrungsabschnitt der zentralen Ventilbohrung 415 Ventilhülse 413 ist permanent kommunizierend mit dem drucklosen Vorratsbehälter der Druckumsetzungseinrichtung verbunden, da der Führungsflansch mit einem axialen Kanal versehen ist, der den Ringraum 428, mit dem die Ventilfeder 423 aufnehmenden Bereich dieses Raumes kommunizierend verbunden ist.

Die in der Fig. 4a dargestellte Konfiguration des Nachlaufregelventils und der durch dieses gesteuerten Stelleinrichtung entspricht einer nach Sollwertvorgabe mittels des Betätigungsgestänges 317 erreichten Gleichgewichtslage, mit der ein definiertes Hebelarmverhältnis des zweiarmigen Hebels 43 der Druckumsetzungseinrichtung verknüpft ist. In diesem Zustand ist der bodenseitige Druckraum 421 des Stellzylinders 311 sowohl gegen den auf dem Druckniveau des Vorratsbehälters stehenden Teil der Ventilbohrung 414 als auch gegen den unter dem hohen Druck $p_1$ stehenden äußeren Ringraum 436 abgesperrt und damit der Kolben des Stellzylinders in seiner Position fixiert, desgleichen der Schlitten 313 in der dem genannten Hebelarmverhältnis entsprechenden Position.

Tritt in dieser Situation eine Störung auf, die zu einer Relativbewegung der Ventilhülse 413 gegenüber dem Kolben 318 nach rechts führt, was im Normalfall mit einer Aufwärtsbewegung der Ventilhülse 413 und damit auch des Ventils selbst und des Schlittens verknüpft wäre, so führt diese Störung dazu, dass die beiden flachen Ringräume 416/l und 416/r miteinander in kommunizierende Verbindung gelangen, mit der weiteren Folge, dass damit der im stangenseitigen Druckraum 419 herrschende Druck auch in den bodenseitigen Druckraum 421 des Stellzylinders 311 eingekoppelt wird, was nunmehr dazu führt, dass der Kolben des Stellzylinders 311 sich "nach unten" bewegt und die an der Schrägfläche 432 abgestützte Ventilhülse sich wieder nach links zur Rückkehr in die Gleichgewichtsposition bewegen kann, die stabilem Zustand entspricht.

Ist andererseits eine Störung gegeben, die mit einem Ausweichen der Ventilhülse nach links verknüpft wäre, was einer Abwärtsbewegung des Nachlaufregelventils entspräche, wobei in diesem Fall der zentrale Ringraum 424, in dem zunächst der im bodenseitigen Druckraum 421 des Stellzylinders 311 herrschende Druck ebenfalls herrscht, mit dem drucklosen Bereich der zentralen Ventilbohrung in kommunizierende Verbindung gelangt, so hat dies zur Folge, dass der Druck im bodenseitigen Druckraum 421 des Stellzylinders abfällt und der im stangenseitigen Druckraum 419 herrschende Druck auf den Kolben eine nach oben gerichtete Kraft entfaltet und somit der Schlitten sich wieder nach oben bewegt.

Dieses Spiel ergibt sich in jeder der möglichen Gleichgewichtslagen, die mittels des zur Sollwertvorgabe vorgesehenen Betätigungsgestänges 317 vorgebbar sind.

Das zur Einstellung eines Sollwertes des Verhältnisses $p_2/p_1$ des Betriebsdruckes $p_1$, mit dem die Antriebseinrichtung 37 betrieben wird, zum Ausgangsdruck $p_2$ der Pumpeinrichtung 38 vorgesehene Betätigungsgestänge 317 und die Istwertrückmeldeeinrichtung des Nachlaufregelventils 316, die im wesentlichen die bewegliche Ventilhülse 413 und die Gleitrampe 432 umfasst, sind dahingehend aufeinander abgestimmt, dass dieses Verhältnis $P(y)=p_2/p_1$ eine lineare Funktion einer Steuergröße y ist und mit dieser gemäß der Beziehung

$$P(y) = A + B \cdot y \qquad\qquad (2)$$

verknüpft ist, in der mit A und B konstante Größen bezeichnet sind, die durch konstruktiv bedingte, geometrische Größen der Stelleinrichtung 40 vorgegeben sind und - nachfolgend - anhand vereinfachter Annahmen noch abgeleitet werden.

Zur diesbezüglichen Einstellung der Position des mittleren Hebelgelenks 63 ist ein schwenkbarer Einstellhebel 441 der Stelleinrichtung 40 vorgesehen, dessen zentrale Längsachse 442 in einer Ebene 443 (Fig. 4b) schwenkbar ist, die parallel zu der Achsebene 444 verläuft, welche durch die zentrale Achse 47 der Antriebseinrichtung 37 und die zentrale Achse der Pumpeinrichtung 38 der Druckumsetzungseinrichtung 40 aufgespannt ist.

In der solchermaßen definierten Schwenkebene 443 des schwenkbaren Stellhebels 441 verläuft auch - parallel zu den zentralen Längsachsen 47 und 53 der Antriebseinrichtung 37 bzw. der Pumpeinrichtung 38 - die zentrale Längsachse 411 des Nachlaufregelventils 316, die am Ende des Ventilhülsenstützfortsatzes 431 auf die Schrägfläche 432 der Gleitrampe 433 der Istwertrückmeldeeinrichtung trifft.

Der schwenkbare Stellhebel 441 ist gelenkig mit einem Schubstab 446 verbunden, der in zwei Gleitlagerböcken 447/l und 447/r gleitend verschiebbar geführt ist, wobei die zentrale Achse 448 dieses Schubstabes 446 in Höhe der zentralen Längsachse 47 der Pumpeinrichtung 37 und parallel zu dieser verläuft.

Das den schwenkbaren Stellhebel 441 mit dem Schubstab 446 koppelnde, insgesamt mit 449 bezeichnete Gelenk ist als "Fest"-Gelenk ausgebildet, "fest" in dem Sinne, dass seine Gelenkachse 451, die senkrecht auf der Schwenkebene 443 der Betätigungseinrichtung steht, sowohl gegenüber dem Schubstab 446 als auch gegenüber dem schwenkbaren Stellhebel 441 unverrückbar ist.

Für den langgestreckten schwenkbaren Stab 437 sei, zum Zweck der Erläuterung, eine Ausbildung als kreiszylindrischer Stab mit vergleichsmäßig kleinem Querschnitt vorausgesetzt.

Der schwenkbare Einstellhebel 441 (Längsachse 437) tritt mit seinem von dem Festgelenk 449 entfernt, d.h. jenseits des Nachlaufregelventils 316 verlaufenden, "freien" Endabschnitt 452 durch eine Bohrung 453, deren lichter Querschnitt, abgesehen von einem kleinen Übermaß, dem Querschnitt des Einstellhebels 441 entspricht, eines drehbaren Schwenklagerelements 455 hindurch, das um eine Achse 454 drehbar gelagert ist, die gehäusefest angeordnet ist und senkrecht zu der Ebene 444 verläuft, die durch die zentralen Längsachsen 47 und 52 der Antriebseinrichtung 37 bzw. der Pumpeinrichtung 38 aufgespannt ist, wobei diese Drehachse 454 des drehbaren Schwenklagerelements 455 in Höhe der zentralen Längsachse 53 der Pumpeinrichtung, d.h. in einem "vertikalen" Abstand von der zentralen Längsachse 47 der Antriebseinrichtung 37 der Druckumsetzungseinrichtung verläuft, der den Betrag D = 2d hat.

Diese Art der Lagerung des schwenkbaren Einstellhebels 441 bedingt, dass bei einer Verschiebung des Schubstabes 446 dessen freier Endabschnitt 452 in der Bohrung 453 gleiten kann, während sich die geometrische Distanz des Festgelenks 449 von der Drehachse des drehbaren Schwenklagerelements 453 verändert und dieses dadurch gleichzeitig eine Drehung um die Achse 454 erfährt, die gehäusefest angeordnet ist, d.h. in einer festen räumlichen Relation zu der Gleitrampe 432 gehalten ist.

In zweckmäßiger Gestaltung der Stelleinrichtung 40 ist diese so ausgelegt, dass einer Position des schwenkbaren Einstellhebels 441, die z. B. minimalem Abstand des Festgelenks 449 von der Drehachse 454 des drehbaren Schwenkgelenkelements 455 entspricht, diejenige Position des Nachlaufregelventils 316 d.h. "Höhe" der zentralen Längsachse 411 des Nachlaufregelventils 316 zugeordnet ist, die z. B. dem maximalen Wert des Verhältnisses $p_2/p_1$ entspricht, d.h. derjenigen Position zugeordnet ist, in der das Nachlaufregelventil 316 gemäß der Darstellung der Fig. 4a seinen größtmöglichen "vertikalen" Abstand von der zentralen Achse der Antriebseinheit 37 bzw. der zentralen Achse 446 des Schubstabes 446 hat.

Dies entspräche in der Darstellung der Fig. 4a einer Position des Nachlaufregelventils, in der dessen zentrale Längsachse in Höhe der zentralen Längsachse 53 der Pumpeinheit 38 verliefe, was in praxi nicht sein kann, jedoch näherungsweise implementierbar ist.

In der realistischen Auslegung der Stelleinrichtung 40 gemäß den Figuren 4a bis 4c ist der Bereich, innerhalb dessen Einstellpositionierungen des Schlittens 313 und des von diesem getragenen Nachlaufregelventils 316 möglich sind, dahingehend beschränkt, dass diejenige Extremalposition des Nachlaufregelventils, die dem größten, einstellbaren Wert des Verhältnisses $p_2/p_1$ entspricht, diejenige Position ist, in der die zentrale Längsachse 411 des Nachlaufregelventils 316 von der zentralen Längsachse 53 der Pumpeinrichtung 38 einen vertikalen Abstand $d_{min}$ hat, der etwa 1/10 des Abstandes D der zentralen Längsachsen 53 und 47 der Pumpeinrichtung 38 und der Antriebseinrichtung 37 entspricht, und dass auch der minimale Abstand der zentralen Längsachse 411 des Nachlaufregelventils von der zentralen Längsachse 47 der Antriebseinrichtung 37 etwa D/10 beträgt, d.h. der Einstellbereich des Verhältnisse $p_2/p_1$ auf einen Einstellbereich der Anordnung des Schlittens 313 beschränkt ist, der symmetrisch bezüglich derjenigen "Mittellage" des Schlittens 313 ist, die dem Verhältnis $p_2/p_1 = 1$ entspricht und in den Figuren 4a und 4b durch die "Mittel"-Ebene 456 repräsentiert ist.

Zum Zweck der Vereinfachung der Erläuterung sei, ohne Beschränkung der Allgemeinheit, vorausgesetzt, dass als Grundstellung der Stelleinrichtung 40 und ihres Betätigungsgestänges 317 diejenige Konfiguration gewählt sei, in welcher die zentrale Längsachse 442 des schwenkbaren Einstellhebels 441 "senkrecht", d.h. in einer Referenzebene 457 verläuft, welche senkrecht zu der durch die zentralen Längsachse 47 und 53 der Antriebseinrichtung 37 bzw. der Pumpeinrichtung 38 aufgespannten Ebene 444 verläuft und die Drehachse 454 des drehbaren Schwenklagerelements 455 enthält; für diese Position sei der Betrag "0" des y-Sollwertes vorausgesetzt.

Weiter sei für die Gleitrampe 433 eine Anordnung und Gestaltung dahingehend vorausgesetzt, dass ihre schräge Gleitfläche 432, an der die Ventilhülse des Nachlaufregelventils 316 leichtgängig gleitend abgestützt ist, mit der Referenzebene 457 den Winkel $\alpha_{max}$ einschließt, der, der Einfachheit halber, in der Fig. 4a als derjenige Winkel dargestellt ist, den die Gleitfläche 432 mit einer parallel zur Referenzebene 457 verlaufende Ebene 457/p einschließt.

Der vorausgehend definierten Grundstellung der Stelleinrichtung bzw. ihres Betätigungsgestänges 317 entspricht diejenige Konfiguration der Stelleinrichtung 40, in der, gemäß der Darstellung der Figuren 4a und 4b der Abstand der zentralen Längsachse 411 des Nachlaufregelventils 316 von der zentralen Längsachse 47 der Antriebseinheit seinen minimalen Wert hat.

Zur Einstellung größerer Werte des genannten Verhältnisses $p_2/p_1$ bedarf es demgemäß einer Verschiebung des Schlittens 313 in Richtung auf die Pumpeinrichtung 38, gemäß den Darstellungen in den Figuren 4a und 4b "nach oben", was gemäß der vorausgegangenen Erläuterung der Funktion des Nachlaufregelventils 316 eine Sollwertvorgabe durch Verschiebung des Ventilkolbens 318 des Nachlaufregelventils 316 "nach rechts", d.h. im Sinne einer Vergrößerung des y-Sollwertes $\alpha$ zwischen der Referenzebene 457 und der zentralen Achse 442 des schwenkbaren Einstellhebels 441, d.h. eine Einstellbewegung des Schubstabes 446 "nach rechts"; im Sinne einer Vergrößerung des Auslenkungshubes erfordert.

Ausgehend von der als Grundstellung unterstellten Konfiguration der Stelleinrichtung erfordern die weiteren möglichen Betriebseinstellungen eines definierten Druckumsetzungsverhältnisses eine Vergrößerung des y-Sollwertes bis zu demjenigen Wert, der dem erwünschten Verhältnis $p_2/p_1$ entspricht, der somit durch eine Verschiebung des Schubstabes 446 "nach rechts" einstellbar ist.

Die diesbezügliche Korrelation zwischen Betätigungsauslenkung des Schubstabes 446 und mit dieser gleichsinniger Auslenkung - in Richtung des Doppelpfeils 319 - des Ventilkolbens 318, vermittelt ein insgesamt mit 458 bezeichnetes Koppelgelenk, das im Falle einer Schwenkbetätigung des schwenkbaren Einstellhebels 441 durch Verschiebung des Schubstabes 446 eine hierzu proportionale Auslenkung des Ventilkolbens 318 in Richtung des Doppelpfeils 319 der Fig. 4a vermittelt.

Zur Erläuterung der Funktion dieses Koppelgelenks 458, das auf vielfältige Weise realisierbar ist, z. B. analog zu der Realisierung des zentralen Gelenks des zweiarmigen Hebels 43 der Druckumsetzungseinrichtung gemäß den Figuren 2a und 2b, sei nunmehr auch auf die Darstellung der Fig. 4c Bezug genommen, anhand derer in Verbindung mit der Darstellung der Fig. 4a eine spezielle Gestaltung dieses Koppelgelenks erläutert werden soll, die sich als besonders zweckmäßig erwiesen hat:

Das Koppel- oder Mitnahmegelenk 458 ist so gestaltet, dass es eine der Auslenkung des Schubstabes 446 proportionale - dazu parallele - Auslenkung des Ventilkolbens 318 und gleichzeitig auch eine dazu rechtwinklig verlaufende Folgebewegung des Nachlaufregelventils 316 und damit des Schlittens 313 dahingehend erlaubt, dass die der "horizontalen" Auslenkung entsprechende, dazu rechtwinklig erfolgende - vertikale "Nachlaufbewegung" des Nachlaufregelventils 316 möglich ist.

Zu diesem Zweck geeignet wäre eine Gestaltung des schwenkbaren Einstellhebels 441 in Analogie zu dem zweiarmigen Hebel 43, der die Bewegungskopplung des Kolbens der Antriebseinrichtung mit dem Kolben der Pumpeinrichtung der jeweiligen Druckumsetzungseinrichtung vermittelt, wobei die Möglichkeit der Relativbewegung zwischen Gelenkelementen durch Langlöcher im Bereich der Gelenke 63 und 64 implementiert ist.

Im gegebenen Fall ist, hiervon abweichend, das dem mittleren Gelenk 63 des zweiarmigen Hebels gemäß den Figuren 2a und 2b funktionell entsprechende Koppelgelenk 458 der Einrichtung gemäß den Figuren 4a und 4b wie folgt ausgebildet, wobei zur diesbezüglichen Erläuterung des Koppelgelenks 458 auch auf die Schnittdarstellung der Fig. 4c Bezug genommen sei:

Der Ventilkolben 318 des Nachlaufregelventils 316 ist - außerhalb des Gehäuses des Nachlaufregelventils - fest mit einem gemäß der Darstellung der Fig. 4c als geschlossenes Rechteckhohlprofil gestalteten Käfig 459 verbunden, in dem ein zum drehbaren Schwenklagerelement des oberen Schwenklagers analoges Lagerelement 461 um eine Achse 462 dreh- bzw: schwenkbar gelagert ist, die parallel zu der Drehachse des "oberen" Gleitdrehlagerelements 455 verläuft.

Auch dieses Drehlagerelement 461 ist mit einer zentralen Bohrung 463 versehen, durch die der kreiszylindrisch-stabförmige, schwenkbare Einstellhebel 441 gleitfähig hindurchtritt. In den möglichen Betriebspositionen des Einstellhebels 441 sind daher die diesbezüglichen Bohrungen 453 und 463 der jeweiligen Lagerelemente miteinander fluchtend ausrichtbar, so dass bei einer Einstellbewegung des Schubstabes 446 sowohl die "horizontalen' Auslenkbewegungen des Ventilkolbens 318 als auch die "vertikalen' Nachlaufbewegungen des Schlittens 313 - zur Einstellung des erforderlichen Druckverhältnisses $p_2/p_1$ - möglich sind.

Es versteht sich, dass die insoweit erläuterte - erfindungsgemäße - Druckumsetzungseinrichtung zahlreicher Abwandlungen fähig ist, die im Äquivalenzbereich der speziell erläuterten Ausführungsbeispiele liegen und unter Einbeziehung des Fachwissens auf dem einschlägigen technischen Gebiet der Hydraulik als durch die speziellen Ausführungsbeispiele mit offenbart angesehen werden sollen.

Ausgehend von dem zur Erläuterung gewählten Realisierungsbeispiel einer erfindungsgemäßen Druckumsetzungseinrichtung sei zur Bestimmung der in der Beziehung (1) genannten Konstanten A und B das Folgende ausgeführt, wobei diesbezüglich auch auf die schematisch vereinfachte Darstellung der Fig. 4d Bezug genommen sei, in welcher die Antriebseinrichtung 37 und die Pumpeinrichtung 38 lediglich durch ihre zentralen Achsen 47 und 53 repräsentiert sind, desgleichen das Nachlaufregelventil durch seine zentrale Längsachse 411 und auch der Schwenkhebel 441 durch seine zentrale Längsachse 442 repräsentiert ist; die Rampe, die das Widerlager für die Ventilhülse 413 des Nachlaufregelventils 316 bildet, ist lediglich durch den Verlauf ihrer schrägen Fläche 432 repräsentiert, die sich hier nicht über den vollen Abstand 2d der beiden zentralen Achsen 47 und 53 der Antriebseinrichtungen 37 und der Pumpeinrichtung 38 erstreckt, sondern von diesen jeweils mit einem vertikalen Abstand $a_u$ und $a_o$ endet, die dem Betrage nach als gleich vorausgesetzt werden können, wobei diese Schrägfläche 432 sich über den überwiegenden, Teil z. B. 85%, des max. Abstandes D=2d erstrecken möge.

Des Weiteren sei angenommen, dass der Einstellbereich des Schlittens 313, der seinerseits durch die Anordnung der zentralen Längsachse 411 des Nachlaufregelventils 316 (Fig. 4b) repräsentiert ist, der Höhe nach, in einer Anfangsposition, die durch den Punkt $S_0$ repräsentiert ist, beginne.

Hierfür ist gemäß Fig. 4d diejenige Position angenommen, in der die zentrale Längsachse 442 des Stellhebels 441 parallel zur Referenzebene 457 der Stelleinrichtung 40, gemäß der Darstellung der Fig. 4d rechtwinklig in den neutralen Längsachsen 47 und 53 der Antriebsvorrichtung 37 bzw. der Pumpeinrichtung 38, verläuft.

Wird, von dieser Anfangsposition $S_0$ ausgehend, der Einstellhebel 441 in Richtung des Pfeils 466 der Fig. 4d, d.h. im Gegenuhrzeigersinn bezüglich seines "oberen" Fixpunktes, der durch die Gelenkachse 454 markiert ist, geschwenkt, so führt dies aufgrund der geschilderten Kinematik des Betätigungsgestänges 317 bzw. des Nachlaufregelventils 316 zu einer Aufwärtsbewegung des Schlittens 313, bis schließlich die zentrale Längsachse 411 des Nachlaufregelventils ihre vertikale Endposition erreicht, die, gemäß der Darstellung der Fig. 4d, dem Abstand $a_0$ der Ventilachse von der Schwenkachse 454 des Einstellhebels 441 entspräche.

Die diesbezüglichen Anschlagbegrenzungen können durch die Gleitlagerböcke 4471, r vermittelt sein, welche beidseits der Grundstellung, der der Punkt $S_0$ entspricht, die Schwenkhübe des Einstellhebels 441 begrenzen.

Wird, gemäß der Darstellung der Fig. 4d, davon ausgegangen, dass die Schrägfläche 432 der Rampe 433 mit der senkrecht zur Zeichenebene verlaufenden Grundstellungsebene 468 den Winkel y einschließt, so ergibt sich für den y-Sollwert, um den das Gelenk 449, über das der Stellhebel 441 mit dem zur Einstellung vorgesehenen Schubstab 446 verbunden ist, verschoben werden muss, damit der Schlitten 313 aus der Position $S_0$ in die höhere Lage $S_K$ angehoben wird und die damit verknüpfte "horizontale" Auslenkung $S_B$ des Kolbens 318 des Nachlaufventils 316 der folgende unmittelbar ersichtliche Zusammenhang:

$$\frac{y}{2d} = \frac{S_B}{d-e} \qquad\qquad (3)$$

wobei mit "e" der Abstand des Schlittens bzw. der zentralen Längsachse 436 des Nachlaufregelventils 316 in der Mittellage (e = 0) bezeichnet ist, mit dem das Druckübersetzungsverhältnis $\frac{p_2}{p_1}$ durch die Bezeichnung

$$p_2 / p_1 = \frac{d+e}{d-e}$$

verknüpft ist.

Weiter ist aus der Darstellung gemäß Fig. 4d unmittelbar ersichtlich, dass für die -"horizontale"- Auslenkung $S_B$ der Ventilhübe 413 gegenüber der "Grund"-Stellung $S_0$ und die damit verknüpfte "Höhen"-Verschiebung der Achse 411 des Nachlaufregelventils 316 sowie des Schlittens die Beziehung

$$\frac{S_{max}}{2d} = \frac{S_B}{e+e_0} \qquad\qquad (4)$$

gilt, wobei mit $e_0$ der Anfangsabstand der mittleren Schwenkachse des 2-armigen Stellhebels 441 bzw. des Nachlaufregelventils 316 und des Schlittens von der Mittellage 456 und mit $S_{max}$ die - theoretisch - maximale Auslenkung dieser Schwenkachse bezeichnet sind, die sich ergäbe, wenn der Hub des Schlittens sich über den gesamten Abstand D (D=2d) der zentralen Längsachsen 47 und 53 der Antriebseinrichtung 37 und der Pumpeinrichtung 38 erstrecken würde.

Aus (3) und (4) folgen die Beziehungen

$$S_B = \frac{y(d-e)}{2d} \qquad\qquad (3a)$$

wie

$$S_B = \frac{(e+e_0)}{2d} \cdot S_{max} \qquad\qquad (4a)$$

und hieraus durch Vergleich unter Elimination von $S_B$:

$$e = \frac{d \cdot y - e_0 S_{max}}{y + S_{max}} \qquad (5)$$

Unter Berücksichtigung von (5) ergibt sich sodann aus (1) für das Druckübersetzungsverhältnis $p_2/p_1$ die Beziehung

$$\frac{p_2}{p_1} = \frac{d - e_0}{d + e_0} + \frac{2d}{(d + e_0)S_{max}} \cdot y \qquad (6)$$

und aus dem Vergleich dieser Beziehung (6) mit der Beziehung (2) für die Konstanten A und B die Beziehungen

$$A = \frac{d - e_0}{d + e_0}$$

und

$$B = \frac{2d}{(d + e_0)S_{max}}$$

in denen sich die konstruktive Auslegung der Druckumsetzungseinrichtung und deren Stelleinrichtung widerspiegelt.

Ausgehend von einer Stelleinrichtung 40, wie anhand der Fig. 4a bis 4d im Detail erläutert, ist auf einfache Weise auch eine Regelungseinrichtung implementierbar, mittels derer z. B. der Ausgangsdruck $p_2$ einer Druckumsetzungseinrichtung 30b, wie anhand der Fig. 2b erläutert, auf einen konstanten Wert regelbar ist.

Zur Erläuterung des Grundaufbaus einer solchen Regelungseinrichtung sei nunmehr ergänzend auf die Fig. 4e Bezug genommen.

Ohne Beschränkung der Allgemeinheit seien die genannten Druckumsetzungs- bzw. Stelleinrichtungen vorausgesetzt, wobei die Stelleinrichtung 40 durch den Einstellhebel 441, den Schubstab 446, die Gleitlagerblöcke 447/l und 447/r sowie das Festgelenk 448, das den Einstellhebel 441 mit der Schubstange 446 gelenkig verbindet, repräsentiert ist und die Druckumsetzungseinrichtung 30b durch ihr Umschaltventil 287 repräsentiert wird.

Soweit in der Fig. 4e Bezugszeichen angegeben sind, die durch diese bezeichneten Elemente jedoch nicht eigens benannt sind, soll diese Angabe der Bezugszeichen den Verweis auf die Beschreibung in den Fig. 4a bis d bzw. 2b identisch bezeichneter Elemente bedeuten.

Zur Erfassung des Istwertes des Druckes $p_2$ sowie zur Ansteuerung des Einstellhebels 441 mittels dessen das Nachlaufregelventil der Druckumsetzungseinrichtung ansteuerbar ist, ist ein Differentialzylinder 470 vorgesehen, dessen einseitig aus dem Gehäuse austretende Kolbenstange 471 über einen zweiarmigen Hebel 472 mit dem Schubstab 446 gelenkig verbunden ist, dessen zentrale Achse 448 parallel zur zentralen Achse 473 des Differentialzylinders verläuft; das Hebelarmverhältnis des zweiarmigen Hebels 472 ist durch Verschieben eines gehäuseseitigen Festgelenks 474 veränderbar und dadurch die Regelverstärkung einstellbar.

Die Vorgabe des Drucksollwertes erfolgt durch Einstellung der Vorspannung einer Reglerfeder 475, über die der Kolben 476 des Differentialzylinders an dem lediglich schematisch angedeuteten Gehäuse der Druckumsetzungseinrichtung bzw. der Stelleinrichtung 40 abgestützt ist.

Sinkt aus irgendeinem Grund der Druck $p_1$ ab, so sinkt auch der Druck $p_2$ ab und unterschreitet den Sollwert. Die Feder 475 entspannt sich, die Stellauslenkung y vergrößert sich und der Druck $p_2$ steigt wieder auf den Sollwert an. Zur Stärkung des Reglers kann durch Steigerung der Vorspannung oder Erniedrigung der Vorspannung der Reglerfeder verändert werden.

Bei dem insoweit erläuterten Leichtfahrzeug ist die Möglichkeit, unterschiedliche Geschwindigkeitsfahrstufen wählen zu können, die in Kombination mit einer Einstellung der Pumpenfördermenge den Bereich "multiplikativ" erweitern, innerhalb dessen zumindest auf ebener Fahrbahn nutzbare Fahrgeschwindigkeiten variierbar sind, dadurch implementierbar, dass die Nabenmotore 11/1 und 11/2 der Vorderräder ein anderes Schluckvolumen, vorzugsweise ein größeres haben als diejenigen der Hinterräder, und dass der Antriebsstrang 10 z. B. sowohl auf ausschließlichen Vorderachsantrieb als auch auf alleinigen Hinterachsantrieb umschaltbar ist, und dass gegebenenfalls auch ein Mittelwert der Schluckvolumina von Vorderachs- und Hinterachsnabenmotoren zur Geschwindigkeitsumschaltung nutzbar ist, derart, dass in einem Diagonalantrieb jeweils ein Vorderrad und ein Hinterrad gemeinsam zum Fahrzeugantrieb genutzt werden.

Als Beispiel sei eine Auslegung der Nabenmotore 11/1 bis 11/4 dahingehend betrachtet, dass das Schluckvolumen der den Vorderrädern zugeordneten hydraulischen Antriebsmotore 11/1 und 11/2 den doppelten Betrag des Schluckvolumens der Hinterradantriebsmotore 11/3 und 11/4 habe.

Werden bei dieser Auslegung des Antriebsstranges zum Antrieb lediglich die Hinterräder benutzt, so ist in diesem Fall bei vorgegebener Fördermenge des Druckversorgungsaggregats die doppelte Fahrzeugggeschwindigkeit erreichbar, verglichen mit dem Fall, dass allein die Vorderräder zum Antrieb ausgenutzt werden, und im Falle des Allradantriebes reduziert sich die Fahrgeschwindigkeit auf 1/3 des bei alleinigem Hinterachsantrieb erreichbaren Wertes.

Sind die Motore 11/1 bis 11/4 einzeln mit Druck beaufschlagbar, so lässt sich durch kombinierte Druckbeaufschlagung eines Vorderrades und eines Hinterrades auch ein Schluckvolumen realisieren, das zwischen demjenigen der Vorderradmotore und demjenigen der Hinterradmotore liegt, so dass Geschwindigkeitsumschaltungen im Verhältnis 2/1,5/1 erzielbar sind.

Eine Veränderung der Fahrzeuggeschwindigkeit kann - selbstverständlich - auch durch die Art der Betätigung der Pumpeinrichtung des Druckversorgungsaggregats 12 erfolgen, wobei es sich versteht, dass dieser Art der Geschwindigkeitssteuerung relativ enge Grenzen gesetzt sind, es andererseits jedoch auch im Bereich des Druckversorgungsaggregats möglich ist, durch Änderung von Übersetzungsverhältnissen die Fördermenge zu verändern, die mittels des Druckversorgungsaggregats 12 in den Antriebsstrang einspeisbar ist.

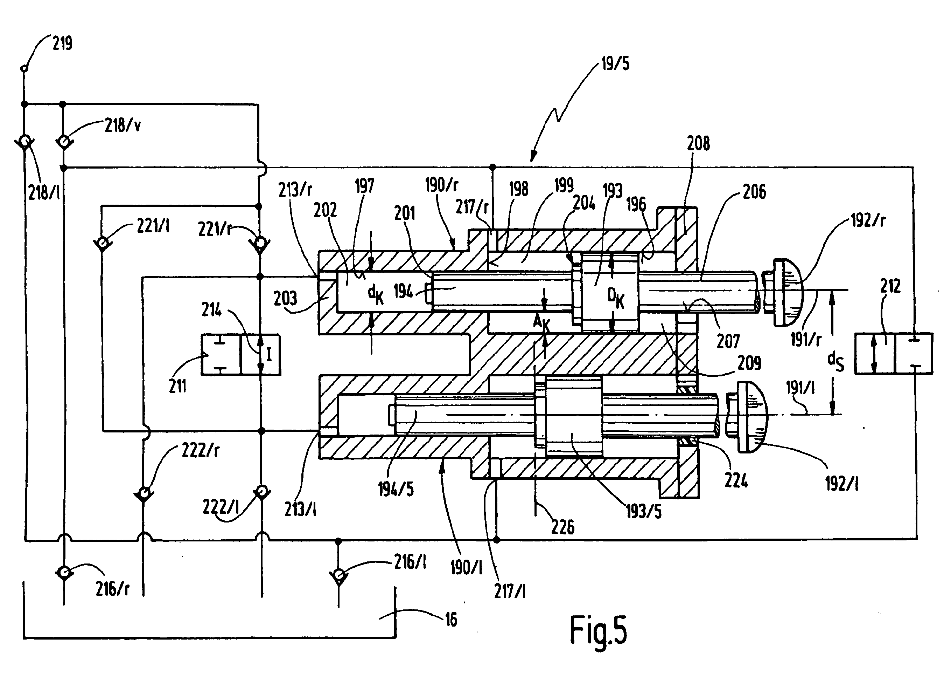

Zur Erläuterung einer diesbezüglich geeigneten Gestaltung des Druckversorgungsaggregats sei nunmehr auf die Fig. 5 Bezug genommen, die eine spezielle Gestaltung der innerhalb eines Druckversorgungsaggregats vorgesehenen Hochdruckpumpe 19 zeigt.

Die Hydraulikpumpe 19/5 gemäß Fig. 5 ist als eine Zweizylinderpumpe ausgebildet, die zwei - lineare - Pumpzylinder 190/l und 190/r umfasst, die pedalbetätigt - alternierend zur Ausführung von Füll- und Förderhüben betätigbar sind.

Die beiden "linearen" Pumpenzylinder 190/l und 190/r sind in einem solchen seitlichen Abstand $d_s$ ihrer zentralen Achsen 191/l und 191/r, die, parallel zueinander verlaufen und zusammen eine im wesentlichen horizontale Ebene aufspannen, angeordnet, dass eine bequeme Betätigung der beiden Kolbenpumpen 190/l und 190/r durch den jeweiligen Fahrer oder Beifahrer des Fahrzeuges mittels zweier Pedale 192/l und 192/r möglich ist.

Hierzu kann es, abweichend von der zur Erläuterung gewählten Darstellung der Pumpe 19/5, erforderlich sein, dass die beiden Pumpenzylinder 190/l und 190/r in einem deutlich größeren Abstand voneinander angeordnet sind als es - maßstäbliche Darstellung vorausgesetzt - der Darstellung entspräche, und es kann daher auch zweckmäßig sein, die Pumpenzylinder als individuelle Baueinheiten zu realisieren, deren Anordnung zueinander - aus ergonomischen Gründen - einstellbar ist.

Die beiden Pumpenzylinder 190/r und 190/l sind als Stufenzylinder ausgebildet, die eine dem Durchmesser nach größere Kolbenstufe 193 und eine dem Durchmesser nach kleinere Kolbenstufe 194 haben, die in Bohrungsstufen 196 bzw. 197 jeweils entsprechenden Durchmessers druckdicht gleitend verschiebbar sind; die beiden Bohrungsstufen schließen über eine Ringfläche 198, zu der die jeweilige zentrale Längsachse des che 198, zu der die jeweilige zentrale Längsachse des jeweiligen Pumpenzylinders senkrecht verläuft, "radial" aneinander an.

Diese Ringfläche 198 bildet die gehäusefeste axiale Begrenzung eines von der kleineren Kolbenstufe 194 axial durchsetzten ringzylindrischen Druckraumes 199, dessen axial bewegliche Begrenzung durch die der Ringfläche 198 gegenüberliegend angeordnete Stirnseite der größeren Kolbenstufe 193 gebildet ist, deren wirksame, d.h. einem in dem ringzylindrischen Raum 199 herrschenden Druck ausgesetzte, Ringfläche durch die Differenz der lichten Querschnittsfläche der größeren Bohrungsstufe 196 und der Querschnittsfläche der kleineren Bohrungsstufe 194 bzw. der lichten Querschnittsfläche der kleineren Bohrungsstufe 197 ist.

Die Endstirnfläche 201 der kleineren Kolbenstufe 194 bildet die axial bewegliche Begrenzung eines zylindrischen Druckraumes 202, dessen axial gehäusefeste Begrenzung durch die die kleinere Bohrungsstufe 197 abschließende Endstirnwand 203 des dem jeweiligen Pumpenzylinder 190 l bzw. 190 r zugeordneten Teilgehäuses gebildet ist, das die jeweiligen Bohrungsstufen 196 und 197 umfasst.

Der insgesamt jeweils mit 204 bezeichnete Stufenkolben hat an der der kleineren Kolbenstufe 194 gegenüberliegenden Seite der größeren Kolbenstufe 193 einen zur Einleitung von Betätigungskräften dienenden, stangenförmigen Fortsatz 206, an dessen freiem aus dem Gehäuse herausragenden Ende das jeweilige Pedal 192/r/l angeordnet ist, mittels dessen die Betätigungskräfte auf den stangenförmigen Fortsatz ausübbar sind.

Der stangenförmige Fortsatz tritt jeweils durch eine Führungsbohrung 207 einer Abschlussplatte 208 hindurch, welche eine gehäusefeste Abdeckung des jeweiligen pedalseitigen Ringraumes 209 des betrachteten Pumpenzylinders 190/l bzw. 190/r bildet, der drucklos gehalten - belüftet - ist und mit einem - nicht dargestellten - Leckölabfluss zum Vorratsbehälter 16 hin versehen ist.

Es versteht sich, dass die Kolbendimensionen dahingehend ausgelegt sind, dass in der größtem Volumen des Druckraumes 202 des kleineren Durchmessers entsprechenden Kolbenposition die dem Durchmesser nach kleinere Kolbenstufe 194 noch hinreichend tief in die kleinere Bohrungsstufe 197 hineinragt, dass diese in dieser Endstellung des Kolbens noch gut gegen den ringzylindrischen Raum 199 abgedichtet ist.

Die Pumpe 19/5 ist so konzipiert, dass sie mit zwei signifikant verschiedenen hubbezogenen Fördervolumina betrieben werden kann, wobei das Verhältnis dieser Fördervolumina durch das Verhältnis der die axial beweglichen Begrenzungen der Druckräume 119 und 202 bildenden wirksamen Kolbenflächen der größeren Kolbenstufe 193 und der kleineren Kolbenstufe 194 gegeben ist.

Diese Wahlmöglichkeit ist bei der Pumpe 19/5 dadurch implementiert, dass entweder die größere Kolbenstufe zur Erzeugung des Arbeitsdruckes in dem jeweiligen Ringraum 199 ausgenutzt ist und die von der kleineren Kolbenstufe verdrängte Flüssigkeitsmenge in denjenigen Druckraum 202 des anderen Pumpenzylinders verdrängt wird, dessen Kolben in seine Grundstellung zurückgeschoben wird, aus der heraus dann wieder der Druckaufbaubetrieb erfolgen kann, oder zur Erzeugung des Arbeitsdruckes die kleinere Kolbenstufe benutzt wird und demgemäß die aus dem Ringraum 199 dieses im Förderbetrieb arbeitenden Pumpenzylinders verdrängbare Flüssigkeitsmenge in den Ringraum 199 desjenigen Pumpenzylinders hinein verdrängt wird, der den Füllhub ausführt, in dem Druckmedium aus dem Vorratsbehälter 16 in den sich vergrößernden zylindrischen Druckraum 202 dieses Pumpenzylinders nachströmt.

Zur Einstellung der Pumpe 19/5 auf die jeweils gewünschte Betriebsart sind bei dem zur Erläuterung gewählten Ausführungsbeispiel zwei Umschaltventile 211 und 212 vorgesehen, die manuell, zweckmäßigerweise gemeinsam, umschaltbar sind und in ihrer jeweils gewählten Funktionsstellung verharren, d.h. zum Wechsel der Schaltstellung betätigt werden müssen.

In der dargestellten Funktionsstellung (l) der beiden Umschaltventile 211 und 212 sind die Pumpenanschlüsse 213/l und 213/r der den Querschnittsdimensionen nach kleineren Pumpenkammern 202 der Zweizylinderpumpe 19/5 über einen Durchflusspfad 214 des einen Schaltventils 211 unmittelbar kommunizierend miteinander verbunden, so dass Arbeitsmedium zwischen diesen Druckräumen ungehindert hin- und herströmen kann, derart, dass aus dem zylindrischen Druckraum 202 desjenigen Pumpenzylinders, der im Förderhub arbeitet, verdrängtes Druckmedium direkt in den Druckraum 202 des anderen Pumpenzylinders verdrängt werden kann, der dadurch seinen Füllhub ausführen kann, durch den in den Ringraum 199 dieses Pumpenzylinders Druckmedium aus dem Vorratsbehälter 16 über ein Eingangsrückschlagventil 216/l bzw. 216/r nachströmen kann, das zwischen den Vorratsbehälter 16 und den jeweiligen Druckmediumanschluss 217/l bzw. 217/r des Ringraumes 199 des jeweiligen Pumpenzylinders 190/l bzw. 190/r geschaltet ist.

Die Druckmediumanschlüsse 217/l und 217/r der ringzylindrischen Druckräume 199 sind desweiteren über je ein Ausgangsrückschlagventil 218/l bzw. 218/r an den Hochdruckausgang 219 der Pumpe 19/5 angeschlossen, an dem somit alternierend der hohe Ausgangsdruck ansteht, der von dem im Förderhub befindlichen Pumpenzylinder 190/l oder 190/r abgegeben wird.

Dieser Ausgangsdruck $P_h$ ist in erster Näherung, d.h. unter Vernachlässigung marginaler Verluste, durch die Beziehung

$$P_h = F_{Ped}/A_K \qquad\qquad (5)$$

gegeben, in der mit $F_{Ped}$ die Pedalkraft bezeichnet ist, mit der ein Fahrer oder Passagier, der die Pumpe 19/5 betätigt, auf das jeweilige Pedal 192/l bzw. 192/r einwirkt, um den jeweiligen Pumpenkolben 204 im Sinne des Förderhubes des jeweiligen Pumpenzylinders zu verschieben, und mit $A_K$ der Betrag der wirksamen Ringfläche des jeweiligen Kolbens bezeichnet ist, welche die bewegliche Begrenzung des ringförmigen Druckraumes 199 bildet, wobei diese Fläche $A_K$ ihrerseits durch die Beziehung

$$A_K = \pi(D_k^2 - d_k^2)/4 \qquad\qquad (6)$$

gegeben ist, in der mit $D_k$ der Durchmesser der größeren Bohrungsstufe 196 und mit $d_k$ der Durchmesser der kleineren Bohrungsstufe 197 des jeweiligen Pumpenzylinders 190/l bzw. 190/r bezeichnet sind.

Die "Polung" der Rückschlagventile in der Hydraulikanordnung gemäß Fig. 5 ist so getroffen, dass die Eingangsrückschlagventile 216/l und 216/r sperrend sind, wenn die Ausslassrückschlagventile 218/l und 218/r in Öffnungsrichtung beaufschlagt sind, d.h. der jeweils angeschlossene Pumpenzylinder im Förderbetrieb arbeitet.

Auch die Druckmediumanschlüsse 213/l und 213/r sind über je ein Ausgangsrückschlagventil 221/l bzw. 221/r an den Druckausgang 219 der Pumpe 19/5 angeschlossen. Diese beiden Ausgangszuschlagventile 221/l und 221/r sind in demjenigen Betriebsmodus, in dem die kleineren Pumpenstufen über das Umschaltventil 211 kommunizierend miteinander verbunden sind, durch den Ausgangsdruck der Ringkammern 199 im sperrenden Zustand gehalten.

Des weiteren sind die Druckmediumanschlüsse 213/l und 213/r der kleineren Pumpenstufen über je ein Eingangsrückschlagventil 222/l bzw. 222/r mit dem Vorratsbehälter 16 verbunden, so dass über diese Eingangsrückschlagventile Druckmedium in den dem Querschnitt nach kleineren Druckraum 202 jeweils desjenigen Pumpzylinders nachströmen kann, dessen Kolben 204 den Füllhub ausführt.

Als Auslegungsbeispiel davon ausgehend, dass der Durchmesser $D_k$ der größeren Kolbenstufe dem doppelten Wert des Durchmessers $d_k$ der kleineren Bohrungsstufe 197 entspricht, folgt für den Ausgangsdruck $P_h$ gemäß der Beziehung (1) der Wert

$$P_h = 4F_{Ped}/3\pi d_k^2 \qquad\qquad (7).$$

Der zu dem insoweit geschilderten alternative Betriebsmodus der Pumpe 19/5 wird eingeschaltet, indem das zwischen die kleineren Pumpenstufen geschaltete Umschaltventil 211 in seine Sperrstellung umgeschaltet wird und das zwischen die Druckmediumanschlüsse 217/l und 217/r der größeren Pumpenstufen geschaltete Umschaltventil 212 in die zu seiner Sperrstellung alternative Durchflussstellung geschaltet wird, in der die beiden Druckmediumanschlüsse 217/r und 217/l der größeren Pumpenstufen unmittelbar kommunizierend miteinander verbunden sind.

In dem hierdurch gewählten Betriebsmodus der Pumpe 19/5 sind die kleineren Pumpenstufen zur Druckerzeugung ausgenutzt, während das aus den ringzylindrischen Druckräumen 199 verdrängbare Druckmedium jeweils zur Kolbenverschiebung des den Füllhub ausführenden Pumpenkolbens genutzt wird, mit der keine nennenswerte Druckentfaltung verknüpft ist.

Der in diesem Betriebsmodus bei vorgegebener Betätigungskraft F(Ped) erzielbare Ausgangsdruck $P_H$ der Pumpe 19/5 ist dann durch die Beziehung

$$P_H = F_{Ped}/\pi d_k^2 \qquad\qquad (8)$$

gegeben und hat damit beim gewählten Erläuterungsbeispiel den dreifachen Betrag des im anderen Betriebsmodus erzielbaren Pumpenausgangsdruckes.

In Kombination mit den erwähnten Möglichkeiten einer stetigen Änderung des Druckumsetzungsverhältnisses sind somit insgesamt extreme Variationen dieses Druckumsetzungsverhältnisses und damit praktisch allen Anforderungen genügende Anpassungsmöglichkeiten des Fahrzeuges an vorgegebene topografische Bedingungen möglich.

In einer zweckmäßigen Gestaltung der insoweit erläuterten Zweizylinderpumpe 19/5 sind deren Pumpenkolben wie für den gemäß Fig. 5 "unteren" Pumpenzylinder schematisch dargestellt, zweiteilig ausgebildet, derart, dass die kleinere - zylindrische - Kolbenstufe 194/5 und die größere Kolbenstufe 193/5 als separate Teile ausgeführt sind, die, abgesehen von einer gegebenenfalls vorgesehenen, ein kleines axiales Spiel erlaubenden, nicht dargestellten axialen Fesselung, axial lediglich aneinander abgestützt sind, derart, dass sie "laterale" Relativbewegungen kleiner Auslenkungsbeträge ausführen können, wobei die Auslenkungen im wesentlichen rechtwinklig zu der zentralen Längsachse 191/l bzw. 191/r erfolgen. Dies ist in der Fig. 5 durch eine Trennebene 226 veranschaulicht, zu der die zentrale Längsachse 191/l bzw. 191/r senkrecht verläuft.

Durch diesen Bewegungsfreiheitsgrad in lateraler bzw. radialer Richtung der Teilkolben 194/5 und 193/5 relativ zueinander, wobei die Auslenkungen ein Mehrfaches der Fertigungstoleranzen betragen können, wird im Ergebnis eine drastische Vereinfachung der Herstellung des Gehäuses und der Teilkolben eines Pumpenzylinders erreicht, da der Forderung, dass die Dichtigkeit der Druckkammern 202 und 199 allein durch die Fertigungspräzision der Kolben und der die Kolben aufnehmenden Gehäusebohrungen erreicht werden soll, d.h. ohne elastische Dichtungselemente, sondern allein durch die geringe Spaltweite der Ringspalte zwischen den Kolbenelementen und den Gehäusebohrungen, sehr viel einfacher zu erfüllen ist, wenn die genannten Kolbenelemente jeweils nur bezüglich der ihnen zugeordneten Bohrungsabschnitte des Gehäuses mit geringstmöglicher Toleranz zentrierbar sein müssen, als wenn die Gehäuseabschnitte und die Kolbenteile bezüglich einer gemeinsamen zentralen Längsachse genau zentriert sein müssen.

In praxi bedeutet dies, dass die zentralen Längsachsen der kleineren Bohrungsstufe und der größeren Bohrungsstufe einen lateralen Versatz von z. B. 1/100 bis 1/10 mm haben dürfen, ohne dass hierdurch die Funktionsfähigkeit des Pumpenzylinders 190/l bzw. 190/r insgesamt in Frage gestellt wäre; Voraussetzung hierfür ist lediglich, dass z. B. der Durchmesser der größeren Kolbenstufe 193 und der Durchmesser der diese aufnehmenden Gehäusebohrungsstufe 196 sich allenfalls im mm-Bereich, z. B. um 1/1000 mm unterscheiden dürfen und desgleichen natürlich auch der Durchmesser der - kleineren - zylindrischen Kolbenstufe 194 ebenfalls nur um entsprechende Beträge kleiner sein darf als der sie aufnehmende Bohrungsabschnitt 197 der kleineren Bohrungsstufe 197.

Bei der geschilderten Bau- und Funktionsweise der linearen Pumpe 19/5, ist stets gewährleistet, dass unter den herrschenden Druckverhältnissen axiale Abstützung der Kolbenelemente 194 und 193 aneinander gegeben ist, natürlich unter der Voraussetzung, dass auch der Durchmesser der zur Betätigung dienenden Fortsätze 191/l oder 191/r der größeren Kolbenstufen 193 um einen erforderlichen Betrag kleiner ist als der Durchmesser der Bohrungen 207 des Gehäusedeckels 209, was konstruktiv und funktionell problemlos ist, da der Raum 209 nicht mit Druckmedium verfüllt ist, sondern zweckmäßigerweise über eine axiale Bohrung des Gehäusedeckels 208 ständig belüftet - druckentlastet - ist. Ein geeignetes Übermaß dieser Bohrung 207 kann ohne weiteres so gewählt werden, dass geringfügige Fertigungstoleranzen der Gehäusebohrung 196 und des Durchmessers der größeren Kolbenstufe 193 deutlich überschritten werden können, ohne dass hierdurch die Führungsfunktion dieser Bohrung, die lediglich zum Zweck der Verhinderung eines Kippens der größeren Kolbenstufe 193 erforderlich ist, beeinträchtigt werden könnte.

Bei dem zur Erläuterung gewählten Gestaltungsbeispiel ist wie lediglich für den "linken", gemäß der Darstellung unteren Teilzylinder 190/l dargestellt, der Durchmesser dieser "Führungsbohrung" durch eine Kunststoffhülse 224 definiert, in der der Kolbenfortsatz 206 leichtgängig gleitend geführt ist, wobei diese Hülse, die in den Gehäusedeckel 208 integriert ist, ihrerseits als Montagehilfe genutzt sein kann.

Die Teilung des Kolbens 204 in die Abschnitte 194/5 und 193/5 kann zweckmäßigerweise so getroffen sein, dass sich die beiden Kolbenteile mit sphärischen Flächen geringfügig verschiedenen Krümmungsradius aneinander abstützen.

Durch die erläuterte "Toleranz" der zweiteiligen Kolbenkonstruktion gegenüber Abweichungen der Koaxialität der zentralen Achsen der einander benachbarten Gehäusebohrungsabschnitte 196 und 197 eines Pumpenelements wird im Ergebnis eine deutliche Reduzierung der Herstellungskosten gegenüber einer Pumpe 19/5 mit einstückigen Kolben 204 erzielt. Die Funktion der Pumpe 19/5 bleibt auch bei zweiteiliger Ausführung der Pumpenkolben erhalten. da unter den im Betrieb herrschenden Druckverhältnissen die beiden Kolbenteile ständig in Anlage aneinander gedrängt werden.

Es versteht sich, dass die Möglichkeit eines kleinen lateralen Versatzes der Kolbenelemente gegeneinander, auch dadurch gewährleistet werden kann, dass die Kolbenelemente 194/5 und 193/5 mit einem "kleinen" Spiel in axialer und radialer Richtung aneinander gefesselt sind, derart, dass in beiden Richtungen Relativbewegungen innerhalb vorgebbarer Toleranzen möglich sind.

Günstige Eigenschaften der "linearen" Zweizylinderpumpe 19/5 sind zumindest die folgenden:

Verglichen mit einem Kettenantrieb eines Fahrrades, bei dem zur Einleitung der vom Fahrer aufzubringenden Fußkraft in den Antriebsstrang ein Kettenrad mit Tretkurbel vorgesehen ist, was notwendigerweise mit einem sinusoidalen Verlauf der auf die Kette wirkenden Zugspannungen einhergeht, hat die Kraft- bzw. die Druckentfaltung mittels zweier hydraulischer Linearzylinder 190/l und 190/r den Vorteil, dass Totpunkte der Kraftübertragung beim Fahrradkettenantrieb, z. B. diejenigen Pedalstellungen, in denen das Gewicht des Fahrers nicht in Vortriebskraft umsetzbar ist, vermeidbar sind, so dass die in Vortrieb umsetzbare Kraft stets zwischen einem Maximalwert und einem von diesem nicht nennenswert verschiedenen Wert bleibt und ein "Umsteigen" von dem einen linearen Antriebszylinder auf den anderen, der im Druckaufbaubetrieb arbeitet, nicht mit einer Verlustzeitspanne behaftet ist, in der prinzipiell keine Kraft übertragen werden kann, wie es bei Kurbeltrieben in den oberen und den unteren Totpunkten der Pedalbewegungen der Fall ist.

Im idealisierten Grenzfall, dass der Fahrer jeweils am Ende des Arbeitshubes vom einen auf das andere Pedal umsteigt, wirkt stets die volle Gewichtskraft auf eines der Pedale, so dass die Kraftausnutzung bei linearen Pumpzylindern signifikant höher ist als bei rotatorischen Kraftumsetzungsgetrieben.

Ein mit Linearzylinderpumpen betriebenes, erfindungsgemäßes Leichtfahrzeug ist daher, verglichen mit einem konventionellen Fahrrad, zumindest auf ebener Strecke bei vorgegebener Leistungsentfaltung durch den Fahrer mit vergleichsweise höherer Geschwindigkeit bewegbar, dies ungeachtet eines höheren Gewichts, das mit gängigen technischen Mitteln ohne weiteres unter einem Betrag von z. B. 60 kp gehalten werden kann.

Weitere, für das erfindungsgemäße Leichtfahrzeug charakteristische Eigenschaften, sind zumindest die Folgenden:

In einer Auslegung als Zweipersonenfahrzeug mit zwei Pumpen, so dass die von zwei Passagieren entfaltbaren Kräfte in Antriebskraft umgesetzt werden können, lässt sich bei einem solchen Fahrzeug aufgrund der für seinen Antriebsstrang charakteristischen Eigenschaft einer algebraischen Addition der Quellenkräfte sowohl ein höheres Beschleunigungsvermögen des Fahrzeuges als auch eine höhere Spitzengeschwindigkeit eines solchen erreichen und, was für die Nutzung des Fahrzeuges besonders wichtig ist, eine signifikant erhöhte Dauergeschwindigkeit, die mit einer vorgegebenen Anstrengung, d. h. einer nicht als mühsam empfundenen Kraftentfaltung, über längere Zeit aufrecht erhalten werden kann.

Für das erfindungsgemäße Leichtfahrzeug ist charakteristisch, dass mit zunehmender Zahl von Passagieren, die an der Antriebskraftentfaltung beteiligt werden können, das personenbezogene Leistungsgewicht des Fahrzeuges sinkt; es ist daher ab einer Mindestgröße des Fahrzeuges auch möglich, Mehrpersonenfahrzeuge von einem geschulten Fahrer steuern zu lassen, der einen Fahrbetrieb im Sinne einer optimierten Fahrstrategie d. h. Wechsel von Fahrbetrieb und Speicherladung steuern kann.

Hierbei kann es auch zweckmäßig sein, das Fahrzeug so auszulegen, dass verschiedene Typen von Pumpen vorgesehen sind, z. B. Pumpen mit besonders hohen Ausgangsdrücken und relativ kleiner Fördermenge, die zur Speicherladung eingesetzt werden, sowie Pumpen mit vergleichsweise niedrigem Ausgangsdruck jedoch größerer Fördermenge, die beispielsweise vorwiegend für einen Fahrbetrieb bei ebenem Fahrbahnverlauf einsetzbar sind.

In einem "großen" Fahrzeug mit einer Mehrzahl von Passagierplätzen kann es auch zweckmäßig sein, nicht nur fussbetätigte Pumpen sondern auch manuell betätigbare Pumpen zu installieren, um in jedem Falle die für verschiedene Passagiere unterschiedlichen ergonomisch optimalen Betriebsbedingen bereit zu halten.

Das erfindungsgemäße Leichtfahrzeug ist insbesondere als Stadtfahrzeug geeignet, da es dank seiner geringen räumlichen Abmessungen mit kleinsten Parkplatzflächen auskommt, erforderlichenfalls mittels geeigneter am Fahrzeugheck befindlicher Stützen "senkrecht" auf kleinster Fläche abgestellt werden kann, oder, da es von zwei Passagieren ohne große Mühe getragen werden kann, auf Flächen abgestellt werden kann, die nicht angefahren werden können.

Um solche Fahrzeuge im "normalen" Straßenverkehr, d.h. auch bei Dunkelheit, fahren zu können, kann eine Beleuchtungsanlage vorgesehen sein, die als Stromquelle 231 einen Niederspannungsakkumulator umfasst, der auf einem Spannungsniveau von z. B. 24 V eine Kapazität von einigen Amperestunden hat. Verwendbar ist z. B. ein Akkumulator, wie bei Elektrowerkzeugen allgemein üblich, wobei zur Aufladung eines solchen Akkumulators eine "kleine" Lichtmaschine vorgesehen sein kann, die mittels eines der Fahrzeugräder antreibbar ist. Hierzu kann eine einfache Kupplungsreinrichtung vorgesehen sein, mittels derer die Antriebskopplung mit dem antreibenden Fahrzeugrad ein- und abschaltbar ist.

Als weiteres elektrisches Zusatzaggregat kann eine elektrisch antreibbare Ladepumpe vorgesehen sein, die aus dem Niederspannungsakkumulator gespeist werden kann.

Zur Aufladung des elektrischen Akkumulators kann, alternativ oder zusätzlich, auch eine "kleine" Photovoltaikanlage vorgesehen sein, die - bei Tagfahrt - eine mindestens teilweise Aufladung des elektrischen Akkumulators ermöglicht, ohne dass ein mit einer Bremswirkung behafteter Betrieb der Lichtmaschine erforderlich wird.

Unter Nutzung der vorgenannten Ergänzungseinrichtungen ist ein "Not"-Fahrbetrieb des Fahrzeuges für eine begrenzte Zeitspanne dadurch möglich, dass die elektrisch antreibbare Ladepumpe gleichsam als Fahrpumpe benutzt wird, so dass das Fahrzeug insoweit ohne Einsatz von Muskelkraft manövrierfähig ist.

Je nach der Speicherkapazität eines elektrischen Akkumulators und der Ladeleistung der Photovoltaikanlage ist für kurze Fahrstrecken und größere Zeitabstände der Fahrzeugbenutzung ein Betrieb des Fahrzeuges allein mit "Fremd"-Energie möglich, die durch Aufladung des Akkumulators gewonnen wird und durch Wandlung in hydraulische Energie mittels der Ladepumpe als Antriebsenergie für das Fahrzeug nutzbar wird.

Natürlich versteht es sich, dass der Hilfsenergiebetrieb in erster Linie für topografische Bedarfsfälle wie kurze Steigungen gedacht ist, auf ebener Fahrbahn jedoch das Fahrzeug mit Muskelkraft bewegt werden sollte.

Gleichwohl ist das erfindungsgemäße Leichtfahrzeug auch einem Dauerbetrieb mit Fremdenergie zugänglich, der auf einfache Weise z. B. dadurch implementierbar ist, dass ein zusätzliches, entweder im Fahrzeug fest installiertes oder im Fahrzeug mitführbares Druckversorgungsaggregat vorgesehen ist, das eine z. B. von einer kleinen Brennkraftmaschine angetriebe Hochdruckpumpe umfasst, die direkt an den zentralen Verbraucheranschluss des Fahrzeuges, z. B. über eine flexible, druckfeste, in der Art einer Bremsleitung ausgeführte kurze Druckleitung anschließbar ist.

Ein solches Aggregat könnte auch auf einem Anhänger montiert sein, der über geeignete Kupplungen, wie im Nutzfahrzeugbereich üblich, elektrisch und hydraulisch an das Leichtfahrzeug ankoppelbar ist.

In den vorgenannten Ausstattungen ist das Fahrzeug gleichsam unbeschränkt mit Fremdenergie betreibbar, wobei jedoch, verglichen mit einem "normalen, von einer Brennkraftmaschine angetriebenen Fahrzeug, der "thermische" Energieverbrauch nur einem kleinen Bruchteil entspricht.

Zur Abschätzung fahrdynamischer Eigenschaften des erfindungsgemäßen Leichtfahrzeuges sei eine Ausführung desselben als zweisitziges Vierradfahrzeug angenommen, dessen den Rädern einzeln zugeordnete "Naben"-Motore 11/1 bis 11/4 ohne Beschränkung der Allgemeinheit, d.h. lediglich zum Zweck der Erläuterung als Radialkolbenmotore vorausgesetzt sind, bei denen das Motorgehäuse, mit dem die Radfelge unmittelbar verbunden ist, drehbar an einem die Kolben tragenden zentralen Antriebs- und Steuerteil gelagert ist, das seinerseits an dem die Aufbauten tragenden Fahrgestell montiert ist.

Für Rotationshydromotore dieses Typs und weiterer hydrostatischer Hydromotore, bei denen Verdrängerelemente rotierend angeordnet sind, ist das Abtriebsmoment $M_D$ durch eine Beziehung der folgenden Form gegeben:

$$M_D = \frac{10 \cdot V_{th} \cdot \Delta p}{2\pi \cdot 100} \cdot \eta_h \qquad (1)$$

in welcher mit $V_{th}$ das Schluckvolumen des Motors pro Umdrehung und mit $\Delta p$ der Druckabfall über dem Motor zwischen Hochdruckzuführungsseite und abflussseitigem Tankanschluss bezeichnet sind und $\eta_h$ einen hydraulischen Wirkungsgrad um 0,95 bezeichnet, der nachfolgend insoweit vernachlässigt wird als sein Wert als "1" angenommen wird.

Wird hierbei das Schluckvolumen in $cm^3$ und der Druckabfall in bar gemessen, so liefert die Beziehung (1) das Motorabtriebsmoment $M_D$ in Nm.

Ausgelegt auf ein Schluckvolumen des jeweiligen Motors von z. B. 6 $cm^3$/Umdrehung ist ein Radialkolbenmotor des vorgenannten Typs mit z. B. fünf bis zehn in radialer Richtung in einem zentralen Block bewegbaren, sternförmig angeordneten Kolben mit einer Gesamtmasse, d.h. einschließlich eines Steuerventils, von weniger als 4 kg realisierbar, so dass bei dem zur Abschätzung betrachteten Leichtfahrzeug pro Rad von einer Masse von etwa 5 kg ausgegangen werden kann. Desweiteren benötigt das Fahrzeug zwei Pumpen, die je für sich in der Lage sein müssen, den Schluckvolumenstrom der vier Motoren insgesamt zu decken.

Derartige Versorgungspumpen des Druckversorgungsaggregats 12 können mit einfachem Aufbau, z. B. als Axialkolbenpumpen, erforderlichenfalls als Verstellpumpen oder als Zahnradpumpen oder auch als "lineare" Zweizylinderpumpen ausgebildet sein, die zum angegebenen Zweck mit einem Gewicht bzw. einer Masse ca. 2 kg pro Pumpe realisierbar sind.

Für eine Rahmenkonstruktion, an der das im wesentlichen durch die Fahrzeugräder einschließlich ihrer Nabenmotore 11/1 bis 11/4 gebildete Fahrwerk, sowie die von zwei Passagieren betätigbaren Druckversorgungspumpen montiert sind, wird vorausgesetzt, dass diese in einer geeigneten Verbundbauweise aus stabilen Bewehrungselementen und leichten Kunststofftrageteilen ebenfalls mit einer Masse von höchstens 20 kg realisierbar ist, so dass der konstruktive Massenbedarf für das Leichtfahrzeug mit insgesamt 55 kg abgeschätzt werden kann, was etwa dem dreifachen Gewicht eines modernen Fahrrades entspricht, mit dem ein sportlich trainierter Mensch über mindestens eine Stunde hinweg eine Durchschnittsgeschwindigkeit von 25 km/h und kurzzeitig Spitzengeschwindigkeiten um 40 km/h erreichen kann.

Hiermit sind die mit einem erfindungsgemäßen Leichtfahrzeug erreichbaren dynamischen Werte hinsichtlich Dauergeschwindigkeit, Höchstgeschwindigkeit und insbesondere Beschleunigungsvermögen zu vergleichen:

Aus der Drehmomentbeziehung (1) ergibt sich für die Kraft $F_v$, die mittels eines einzigen Fahrzeugmotors auf das Fahrzeug ausübbar ist, die Beziehung

$$F_v = M_D/r_{Rad} \ [N] \qquad (2),$$

in der mit $r_{Rad}$ der Radius des angetriebenen Fahrzeugrades bezeichnet ist, gemessen als Abstand der Raddrehachse von der Aufstandsfläche des Fahrzeugrades.

Für eine Anfahrphase, die unter einer gleichförmigen Beschleunigung $a_F$ erfolge, gilt sodann die Beziehung

$$a_F = \frac{F_v}{m_F} \qquad (3)$$

in der mit $m_F$ die Fahrzeugmasse bezeichnet ist, die beschleunigt werden muss, d.h. die konstruktive Fahrzeugmasse zuzüglich der Masse der Passagiere, wofür insgesamt ein Wert von 200 kg für die Beispielsabschätzung angesetzt sei.

Bei dem angenommenen Wert von 6 $cm^3$ pro Umdrehung für das Schluckvolumen des jeweiligen Radmotors sowie eines Betrages von 200 bar für den Betriebsdruck und einem Raddurchmesser von 40 cm, d.h. von 0,2 m für den Radius des jeweiligen Fahrzeugrades, ergibt sich für die Fahrzeugbeschleunigung $r_{Rad}$, die erreichbar wäre, wenn das Fahrzeug nur mit einem Motor angetrieben wäre, ein Wert von 0,5 $ms^{-2}$.

Mittels der vier Antriebshydromotore 11/1 bis 11/4 des erfindungsgemäßen Leichtfahrzeugs lässt sich somit durch deren additives Zusammenwirken eine Fahrzeugbeschleunigung $a_F$ von 2 $ms^{-2}$ allein durch Speisung der Motore mit einem vom Speicher 21 des Druckversorgungsaggregats 12 bereitgestellten Betriebsdruck von 200 bar erzielen.

Weitgehende Gleichförmigkeit dieser Beschleunigung vorausgesetzt, bedeutet dies, dass das Fahrzeug innerhalb von 5 Sekunden auf eine Geschwindigkeit von 10 $ms^{-1}$ beschleunigbar ist, was 36 km/h und somit etwa der Durchschnittsgeschwindigkeit des rollenden Verkehrs in einem innerstädtischen Bereich entspricht.

Soll diese Geschwindigkeit allein durch eine Nutzung gespeicherter Energie erfolgen, die dem Speicher 21 des Druckversorgungsaggregats 12 entnehmbar sein soll, so ist es ausreichend, wenn der Speicher 480 cm$^3$ Druckmedium enthält, das auf dem nutzbaren Druckniveau von 200 bar bereitgestellt ist.

Ein Speicher dieser Kapazität kann ohne weiteres in konstruktiv dafür vorgesehene Hohlräume von Rahmenteilen des Fahrgestells integriert sein, so dass sein diesbezüglicher Beitrag zur Fahrzeugmasse bzw. dem Fahrzeuggewicht vernachlässigbar ist und lediglich die Masse des - flüssigen - Druckmediums additiv zu berücksichtigen ist, die im angenommenen Fall gegenüber einer Fahrzeuggesamtmasse von 200 kg jedoch unbedeutend ist.

## Patentansprüche

**1.** Leichtfahrzeug für die Beförderung von mindestens zwei Personen, das durch Muskelkraft antreibbar ist, zu deren Umwandlung in Vortriebs-oder Verzögerungskräfte eine von dem/den Fahrzeuginsassen betätigbare Umsetzungseinrichtung vorgesehen ist, mittels derer Betätigungskräfte in hiermit korrelierte Raddrehmomente umsetzbar sind, wobei

a) das Fahrzeug einen hydraulischen Antriebsstrang hat, der als Antriebselemente den Fahrzeugrädern einzeln zugeordnete rotatorische Hydromotore (11/1 - 11/4) umfasst, des weiteren

b) als hydraulische Energiequelle eine Pumpeinrichtung vorgesehen ist, die den möglichen Fahrzeuginsassen einzeln zugeordnete Hydraulikpumpen umfasst, die von den Fahrzeuginsassen einzeln oder zu mehreren betätigbar sind;

c) mittels der Pumpeinrichtung wenigstens ein Druckspeicher (21) einer Druckversorgungseinheit (12) aufladbar ist, dem ventilgesteuert hydraulische Energie zur Fahrbetriebssteuerung der Hydromotore (11/1 - 11/4) entnehmbar ist;

d) die Antriebsmotore (11/1 - 11/4) in einem zur Rekuperation nutzbaren Bremsbetriebsmodus des Fahrzeuges; durch die Räder angetrieben, ihrerseits als Pumpen arbeiten, wobei

e) die Umsetzungseinrichtung (30) eine von den Radpumpen speisbare hydraulische Antriebseinrichtung (37) umfasst, die ihrerseits eine auf hohes Ausgangsdruckniveau ausgelegte Pumpeinrichtung (38) antreibt, die als an den Speicher (21) anschließbare Ladepumpe arbeitet;

f) die Ladepumpe als Verstellpumpe ausgebildet ist, deren auf einen Pumpenzyklus, Umdrehung oder periodische Hin- und Herbewegung, bezogenes Fördervolumen definiert veränderbar ist, und

g) die hydraulische Antriebseinrichtung (37) der Druckumsetzungseinrichtung (30) auf verschiedene Werte des Schluckvolumens einstellbar, vorzugsweise stufenlos veränderbar ist,

**dadurch gekennzeichnet, dass** die Antriebseinrichtung (37) als ein doppelt wirkender hydraulischer Linearzylinder ausgebildet ist, dessen Kolben ventilgesteuert in alternativen Richtungen erfolgende Hübe ausführt, wobei Endflansche des Zylinderkolbens bewegliche, druckdichte Abgrenzungen von Antriebskammern (49/1, 49/2) bilden, die alternierend mit Antriebsdruck beaufschlagbar bzw. zum Vorratsbehälter des Druckversorgungsaggregats (12) hin entspannbar sind, die Antriebskammem der hydraulischen Antriebseinrichtung gehäusefest durch längs einer gemeinsamen zentralen Achse im Abstand voneinander angeordnete Bohrungen von Gehäuseelementen begrenzt sind, in denen Kolbenelemente (41/1 und 41/2) druckdicht verschiebbar gelagert sind, die durch ein Verbindungselement starr miteinander bewegungsgekoppelt sind, das zwischen Kammern frei sich erstreckend mit einer Betätigungseinrichtung zur Umschaltung eines Steuerventils (86) versehen ist, das die Bewegungsumkehr der Antriebseinrichtung in deren Hubendstellungen vermittelt, dass auch die Pumpeinrichtung (38) zwei lineare Kolbenpumpen umfasst mit alternierend zur Ausführung des Füll- oder des Förderhubes antreibbaren Kolben, die in koaxialen Bohrungsstufen, die entlang der gemeinsamen zentralen Achse (53) gesehen, in einem Abstand voneinander angeordnet sind, druckdicht verschiebbar sind und durch ein im wesentlichen außerhalb der Bohrungsstufen verlaufendes Verbindungszwischenstück zug- und schubfest miteinander bewegungsgekoppelt sind, dass die zentralen Achsen (47 und 53) der Antriebseinrichtung und der Pumpeinrichtung in einem Abstand D voneinander parallel zueinander verlaufen, und dass die Kolbenanordnungen der Antriebseinrichtung und der Pumpeinrichtung durch ein Getriebe mit veränderbarem Hubumsetzungsverhältnis, vorzugsweise formschlüssig, miteinander bewegungsgekoppelt sind, derart, dass ein im wesentlichen permanent fließender Hydraulikmediumstrom erzeugt wird, und dass die Speicherkapazität der Druckversorgungseinrichtung (12) auf das zulässige Gesamtgewicht des Fahrzeuges dahingehend abgestimmt ist, dass der Energieinhalt des vollständig aufgeladenen Druckspeichers (21) dafür ausreicht, das Fahrzeug mit einem Mindestbetrag der Beschleunigung auf eine Mindestgeschwindigkeit zu bringen, die mit einem im normalen Straßenverkehr üblichen Betrag der Geschwindigkeit korreliert ist, z. B. einem Betrag um 40 km/h.

**2.** Leichtfahrzeug nach Anspruch 1, **dadurch gekennzeichnet, dass** das Umschaltventil (86) als durch Anschlagwirkung mechanisch betätigtes 2-Steilungsventil ausgebildet ist, das nach einer Umschaltung durch kraft-formschlüssiges Einrasten in der jeweiligen Funktionsstellung verharrt, bis ein Anschlagelement, durch die Kolbenbewegung, die in der eingeschalteten Funktionsstellung erfolgt, zur Anlage an dem Betätigungselement kommt, das die Umschaltbewegung des Ventils vermittelt, wobei die kolbenfesten Anschlagelemente an einander gegenüberliegend angeordneten Seiten des Ventilkolbens angreifen, der entlang einer zur Längsachse (47) der Antriebseinrichtung (37) parallelen Achse verschiebbar ist.

**3.** Leichtfahrzeug nach Anspruch 1,oder Anspruch 2 **dadurch gekennzeichnet, dass** das die Bewegungskopplung der Antriebs- und der Pumpenkolben vermittelnde Getriebe als ein Lenkergetriebe mit positionsveränderlichen Gelenkachsen ausgebildet ist, wobei die Gelenkachsen senkrecht zu der durch die Längsachsen (47 und 53) der Antriebseinrichtung (37) und der Pumpeinrichtung (38) aufgespannten Ebene verlaufen.

**4.** Leichtfahrzeug nach einem der Ansprüche 1 bis 2, **dadurch gekennzeichnet, dass** zur Bewegungskopplung der Antriebskolben und der Pumpenkolben ein zweiarmiger Hebel (43) vorgesehen ist, dessen Kraftarm-/Lastarm-Längenverhältnis einstellbar, vorzugsweise stufenlos veränderbar, ist,

**5.** Leichtfahrzeug nach Anspruch 4, **dadurch gekennzeichnet, dass** der zweiarmige Hebel (43) mittels eines Festgelenks mit dem Zwischenstück der Antriebskolbenanordnung oder dem Zwischenstück der Pumpenkolbenanordnung gelenkig verbunden ist und mit einem zwischen Schlitzwangen des freien Hebelendes geführt verschiebbaren Gleitstein in Eingriff steht, der seinerseits über ein Festgelenk mit dem Zwischenteil der Pumpenkolbenanordnung bzw. der Antriebskolbenanordnung schwenkbar verbunden ist, und dass das Mittelgelenk des zweiarmigen Hebels (43) mit einem zwischen Schlitzwangen eines Mittelebschnitts des Hebels geführt verschiebbaren Gleitstein in Eingriff steht, der seinerseits über ein Festgelenk mit einem zwischen den Kolbenanordnungen im wesentlichen rechtwinklig zu den zentralen Achsen der Kolbenanordnungen hin und her verschiebbaren Schlitten (83) schwenkbar verbunden ist

**6.** Leichtfahrzeug nach Anspruch 5, **dadurch gekennzeichnet, dass** der das mittlere. Schwenkgelenk (63) des zweiarmigen Hebels (43) tragende Schlitten (83) zur Einstellung des Hebelarmverhältnisses mittels eines ventilgesteuerten Hydraulikantriebes in alternativen Richtungen verschiebbar und in einer gewählten Position arretierbar ist.

**7.** Leichtfahrzeug nach Anspruch 6, **dadurch gekennzeichnet, dass** der zur Verschiebung des Schlittens (83) vorgesehene Hydraukantrieb einen doppelt wirkenden Linearzylinder (114) umfasst, dessen Kolben zug- und schubfest mit dem Schlitten (83) gekoppelt ist, und zur Bewegungssteuerung ein Nachlaufregelventil sein kann, das mit mechanischer Positionssollwertvorgabe und mit mechanischer Positionsistwertrückmeldung arbeitet.

**8.** Leichtfahrzeug nach Anspruch 7, **dadurch gekennzeichnet, dass** das Nachlaufregelventil (14) als lineares Schieberventil ausgebildet ist, dessen zentrale Längsachse parallel zur zentralen Längsachse des Stellzylinders des Schlittens (83) verlaufend angeordnet ist, wobei das Gehäuse des Nachlaufregelventils verschiebefest mit dem Schlitten (83) verbunden ist und die Positionssteuerung durch Verschiebung des Ventilkolbens erfolgt.

**9.** Leichtfahrzeug nach einem der Ansprüche 1 bis 8, **gekennzeichnet durch** eine Gestaltung und Auslegung der Druckumsetzüngseinrichtung (30/F), dahingehend, dass sie sowohl zur Steuerung des Speicherladebetriebs zum Zweck einer Bremsung als auch zur Steuerung des Fahrbetriebs zum Zweck der Geschwindigkeitsveränderung einsetzbar ist.

**10.** Leichtfahrzeug nach Anspruch 9, **dadurch gekennzeichnet dass** die hydraulische Antriebseinrichtung (37) und die hydraulische Pumpeinrichtung (38) der Druckumsetzungseinrichtung (30/F) mit gleicher Dimensionierung ihrer Kolben realisiert sind.

**11.** Leichtfahrzeug nach Anspruch 9 oder Anspruch 10, **dadurch gekennzeichnet, dass** die Druckumsetzungseinrichtung (30/F) durch vorzugsweise von Hand erfolgende Umschaltung eines nach einer Betätigung in der **dadurch** gewählten Funktionsstellung verharrenden Ventils in die dem Speicherladebetrieb bzw. dem Fahrbetrieb zugeordnete Funktionsstellung schaltbar ist.

**12.** Leichtfahrzeug nach Anspruch 11, **dadurch gekennzeichnet, dass** das Funktionswahlventil (166) als 3-Stellungsventil ausgebildet ist, das zusätzlich zu den durch Betätigung wählbaren Funktionsstellungen, die dem Fahrbetrieb bzw. dem Ladebetrieb zugeordnet sind, eine federzentrierte Sperrstellung als Mittelstellung (0) hat, die dem Fahrzeugstillstand zugeordnet ist.

13. Leichtfahrzeug nach einem der Ansprüche 1 bis 12, **dadurch gekennzeichnet dass** die Vorderradantriebsmotore (11/1 und 11/2) ein größeres Schluckvolumen haben als der/die Hinterradantriebsmotor(e) (11/3 und/oder 11/4), und dass die Antriebsmotore mindestens achsweise, vorzugsweise individuell, In den Traktionsbetrieb schaltbar sind.

14. Leichtfahrzeug nach Anspruch 13, **dadurch gekennzeichnet, dass** bei einem Vierradfahrzeug das Schluckvolumen der Vorderradantriebsmotore (11/1 und 11/2) mindestens und etwa dreimal größer ist als das Schluckvolumen der Hinterradantriebsmotore (11/3 und 11/4), und dass ein Fahrbetriebsmodus wählbar ist, in dem das Fahrzeug nur über die Vorderräder oder nur die Hinterräder angetrieben wird.

15. Leichtfahrzeug nach Anspruch 13 oder Anspruch 14, **dadurch gekennzeichnet, dass** die Radantriebsmotore (11/1 bis 11/4) mindestens achsweise in den Traktionsbetrieb steuerbar sind, und dass mindestens die folgenden Konstellationen angetriebener Fahrzeugräder wählbar sind:

   a) Allradantrieb
   b) beide Vorderachsmotore
   c) beide Hinterachsmotore,

denen jeweils verschiedene Gesamtschluckvolumina entsprechen.

16. Leichtfahrzeug nach einem der Ansprüche 1 bis 15, **gekennzeichnet durch** seine Ausbildung als mindestens viersitziges, vorzugsweise mehrsitziges Fahrzeug mit z.B. zehn Sitzen, wobei jedem Sitz eine vom jeweiligen Passagier betätigbare Pumpe zugeordnet ist, die für den Fahrbetrieb und/oder den Speicherladebetrieb nutzbar ist.

17. Leichtfahrzeug nach einem der Ansprüche 1 bis 16, **dadurch gekennzeichnet, dass** ein mit Fremdenergie betreibbares, alternatives Druckversorgungsaggregat (30A) vorgesehen ist, das alternativ oder ergänzend zum muskelkraftbetriebenen Druckversorgungsaggregat als Antriebskraftquelle nutzbar ist.

18. Druckumsetzungseinrichtung, mittels derer zum Zweck einer Anpassung, Anhebung oder Absenkung des Versorgungsdruckniveaus $p_2$ eines hydraulischen Verbrauchers oder eines Druckspeichers, als dessen Betriebs- bzw. Versorgungsdruckquelle die Druckumsetzungseinrichtung dient, die ihrerseits mit einem Eingangsdruck $p_1$ beaufschlagbar ist, von dem der Versorgungsdruck $p_2$ gemäß einer mindestens näherungsweise geltenden Beziehung der Form

$$p_2 \bullet V_2 = p_1 \bullet V_1$$

ableitbar ist, in der mit $V_2$ das Fördervolumen einer eine Ausgangsstufe der Druckumsetzungseinrichtung (10) bildenden Hydraulikpumpe und mit $V_1$ das Schluckvolumen einer hydraulischen Antriebseinrichtung bezeichnet ist, mit der die Pumpeinrichtung (38) der Druckumsetzungseinrichtung (30) antreibbar ist, insbesondere zur Steuerung des Fahr-und/oder des Bremsbetriebes eines hydraulisch antreibbaren Leichtfahrzeuges gemäß einem der Ansprüche 1 bis 17, **gekennzeichnet durch** die folgenden Merkmale, dass

   a) die Pumpeinrichtung (38) als lineare Kolbenpumpe ausgebildet ist, die mittels der Antriebseinheit (37) periodisch zur Ausführung von Füll- und Förderhüben ihres Kolbens antreibbar ist,
   b) die Antriebseinheit (37) als Linearzylinder ausgebildet ist, dessen Kolben ventilgesteuert zu periodisch erfolgenden Hin- und Herbewegungen antreibbar ist,
   c) ein mechanisches Getriebe vorgesehen ist, das die Bewegungen des Kolbens der Antriebseinheit und der Pumpeinheit formschlüssig koppelt, des weiteren
   d) die Druckumsetzungseinrichtung **durch** Wählbetätigung des Getriebes auf verschiedene Werte des Übersetzungsverhältnisses einstellbar ist,
   e) das den Antriebszylinder mit dem Pumpenzylinder koppelnde mechanische Getriebe als Hebeltrieb mit schwenkbarem Hebel ausgebildet ist, dessen Hebelarmverhältnis stufenlos veränderbar ist, und dass
   f) der Hebel als zwelarmiger Hebel (43) ausgebildet ist, bei dem die Position des zentralen Schwenkgelenks (63) zwischen den Hebelarmenden stetig veränderbar ist.

**19.** Druckumsetzungseinrichtung nach Anspruch 18, **dadurch gekennzeichnet, dass** ein zur Bewegungssteuerung des Fahrzeuges vorgesehenes Nachlaufregelventil (316) aus einem zylindrisch-hülsenförmigen Gehäuseelement (413) und einem in diesem axial verschiebbar angeordneten Kolbenelement besteht und seinerseits axial verschiebbar in einem zylindrisch-rohrförmigen, mit einem das mittlere Hebelgelenk tragenden Schlitten fest verbundenen Anschlusselement angeordnet ist, dessen zentrale Achse sich rechtwinklig, z. B. horizontal, zur Bewegungsrichtung des Schlittens bzw. des Kolbens des Antriebszylinders erstreckt, wobei das als Rückmeldeelement benutzte Ventilelement (Kolben oder Gehäuseelement) an einer schrägen Gleitfläche (432) abgestützt ist, deren Spur in der durch die Achsen der Antriebseinheit (37) und der Pumpeinheit (38) aufgespannten Ebene schräg zur zentralen Achse des Nachlaufregelventils (316) verläuft.

**20.** Druckumsetzungseinrichtung nach Anspruch 19, **dadurch gekennzeichnet, dass** das Gehäuseelement (413) des Nachlaufregelventils (316) an der Schrägfläche (432) abgestützt ist und an der Gegenseite offen ist, wo ein Stößel (411) an dem Kolben des Ventils angreift, der rampenseitig über eine Ventilfeder (429) an dem Gehäuseelement (413) axial abgestützt ist.

**21.** Druckumsetzungseinrichtung nach Anspruch 20, **dadurch gekennzeichnet, dass** der Kolben (318) des Nachlaufregelventlis (316) mittels eines hebelförmigen, Steligliedes (217) verschiebbar ist, das hinsichtlich der Anordnung von Hebelgelenken (449, 458 und 453) zu dem zweiarmigen Hebel, der die Pumpenkolben mit den Antriebskolben der Pumpeinheit (38) bzw. der Antriebseinheit (37) kinematisch koppelt, analog ist.

**22.** Druckumsetzungseinrichtung nach Anspruch 21, **gekennzeichnet durch** die Merkmale, dass

a) über ein Festgelenk (449) ein parallel zu den Achsen (47 und 53) des Pumpen- und des Antriebskolbens verschiebbares Betätigungsglied (446) mit dem zweiarmigen Stellhebel (442) gekoppelt ist, der

b) an seinem gegenüberliegenden Ende in einem Lagerelement (454) gleitend verschiebbar gelagert ist, das um eine feste Achse, die in Höhe der zentralen Längsachse der Pumpeinheit (38) verläuft, drehbar ist und des Weiteren

c) ein drehbares Gleitstück vorgesehen ist, das um eine die mittlere Achse des Betätigungsstabes (441) bildende Achse drehbar ist, axial verschiebbar angeordnet ist.

**23.** Druckumsetzungseinrichtung nach einem der Ansprüche 20 bis 22, **dadurch gekennzeichnet, dass** eine Feststelleinrichtung vorgesehen ist, mit der die Position des Ventilkolbens (318) des Nachlaufregelventils (316) in einer einem erwünschten Übersetzungsverhältnis entsprechenden Position lösbar fixierbar ist.

**24.** Druckumsetzungseinrichtung nach einem der Ansprüche 18 bis 23; **dadurch gekennzeichnet, dass** eine Gestaltung der Stelleinrichtung (407) dahingehend getroffen ist, dass für das Umsetzungsverhältnis $u = p_2/p_1$ eine Beziehung der Form

$$p_2 / p_1 = A + B \cdot y$$

gilt, in der mit A ein Anfangswert des einstellbaren Umsetzungsverhältnisses bezeichnet ist und mit B eine durch die geometrische Auslegung der Einrichtung gegebene Proportionalitätskonstante.

**25.** Druckumsetzungseinrichtung nach einem der Ansprüche 18 bis 24, **dadurch gekennzeichnet, dass** mindestens für das zentrale Schwenkgelenk, mittels dessen der Hebel des Getriebes an dem zur Übersetzungseinstellung verschiebbaren Schlitten gelagert ist, eine hydraulische Einrichtung zur mindestens teilweisen Kompensation der Lagerkräfte vorgesehen ist, die im Betrieb der Druckumsetzungseinrichtung, in alternativen Richtungen wirkend, auftreten.

**26.** Druckumsetzungseinrichtung nach Anspruch 25, wobei als Lagerkörper, der die Funktion einer Lagerwelle des hebelförmigen Getriebeelements vermittelt, eine dickwandige Kreisscheibe vorgesehen ist, die in konkaven, sich jeweils über Kreissektorbereiche erstreckenden Gleitbereichen (381/l, 381/r) des Schlittens drehbar gelagert ist, **dadurch gekennzeichnet, dass** diese Kreisscheibe (378) innerhalb der konkaven, sektorförmigen Gleitflächen (381/l und 381/r) des Schlittens (388) mit geschlossen berandeten flach-nutförmigen Vertiefungen versehen ist, die durch die konkaven Gleitflächen (381/l und 381/r) der Schlittenbohrung flüssigkeitsdicht abgedeckt sind und zusammen mit diesen nach außen dicht abgeschlossene Kompensationskammern bilden, durch deren Druckbeaufschlagung auf die Kreisscheibe (378) wirkende, durch die Drücke, welche in der jeweils druckbeaufschlagten Antriebskammer (49/1 bzw. 49/2) der Antriebseinrichtung (37) und in der Ausgangsdruckkammer (52/2 bzw. 52/1) der Pumpeinrichtung (38) herrschen, bedingte Kräfte, zumindest zu einem größen Teil kompensierbar sind.

27. Druckumsetzungseinrichtung nach Anspruch 26, **dadurch gekennzeichnet, dass** die Kreisscheibe (378) sowohl in ihrem einen gleitfähig gelagerten Sektorbereich als auch in dem diesem gegenüberliegenden Sektorbereich mit einer zentralen, flachen Vertiefung (393/l bzw. 393/r) versehen ist, die jeweils mit der bezüglich einer Mittelebene (82) der Druckumsetzungseinrichtung (330) auf der gegenüberliegenden Seite derselben angeordneten Ausgangsdruckkammer (52/2 bzw. 52/1) der Pumpeinrichtung (38) der Druckumsetzungseinrichtung (330) kommunizierend verbunden ist, wobei Abschnitte der jeweiligen Verbindungsströmungspfade durch flexible Leitungen (394/r bzw. 394/l) gebildet sind.

28. Druckumsetzungseinrichtung nach Anspruch 27, **dadurch gekennzeichnet; dass** die effektiven Beträge der Querschnittsflächen der flachen Vertiefungen (393/l bzw. 393/r) durch deren Beaufschlagung mit den in den jeweils angeschlossenen Druckkammern (52/1 bzw. 52/2) der Pumpeinheit (38) betriebsbedingt herrschenden Drücken den Lastkräften entgegengesetzt gerichteten Kompensationskräfte erzeugbar sind.

29. Druckumsetzungseinrichtung nach Anspruch 28, **dadurch gekennzeichnet, dass** jeweils beidseits der zentralen flachen Vertiefungen (393/l und 393/r), vorzugsweise in einer bezüglich einer Mittelebene (365) des Lagerkörpers symmetrischen Anordnung und Ausbildung weitere, flache Vertiefungen (396/ra und 396/ri bzw. 396/la und 396/ll) vorgesehen sind, die - paarweise seitenbezogen - mit den Drücken beaufschlagbar sind, die im Betrieb der Druckumsetzungseinrichtung (330) in die einander gegenüberliegenden Antriebsdruckkammem (4912 bzw. 49/1) der Antriebseinrichtung (37) alternierend eingekoppelt werden.

30. Druckumsetzungseinrichtung nach einem der Ansprüche 26 bis 29, **dadurch gekennzeichnet, dass** auch der Schlitten (388) an seinen einander abgewandten, den aufragenden Wänden (387/l und 387/r) eines Führungsgestells der Druckumsetzungseinrichtung zugekehrten, äußeren Gleitflächen (397/l und 397/r) mit flachen, nutförmigen Vertiefungen (398/l bzw. 398/r) versehen ist, die zwischen dem Boden der Vertiefung und der Innenseite der Deckplatte (368) angeordnet sind, derart, dass die Mittelebene (365) des Schlittens auch Mittelebene dieser nutförmigen Vertiefungen (398/l und 398/r) ist, die Ausgleichskammem (398) bilden, die innerhalb des möglichen Schwenkbereiches der Kreisscheibe bzw. der zentralen Vertiefungen (393/l und 393/r) derselben mit diesen Kammern durch je einen schlittenfesten Kanal (399/l bzw. 399/r) in kommunizierender Verbindung stehen.

31. Druckumsetzungseinrichtung nach einem der Ansprüche 26 bis 30, wobei das hebelförmige Getriebeelement einen polygonalen, insbesondere rechteckigen Querschnitt hat und in einem den schwenkbaren Lagerkörper durchsetzenden Kanal komplementären Querschnitts gleitend verschiebbar ist, **dadurch gekennzeichnet, dass** zur Verminderung der Gleitreibung zwischen dem Stab (370) und der Kreisscheibe (378) an deren dem Stab zugewandten schmalen Begrenzungsseiten zu den äußeren Ausgleichskammern (398) analoge "Ausglelchskammern" vorgesehen sind.

**Claims**

1. Light vehicle for the transport of at least two persons, which can be driven by muscular power, for the conversion of which into propulsive or retarding forces there is provided a conversion device which can be actuated by the vehicle occupant/s and by means of which actuating forces can be converted into wheel torques correlated therewith, wherein

   a) the vehicle has a hydraulic power train, which, as drive elements, comprises rotary hydraulic motors (11/1 - 11/4) individually assigned to the vehicle wheels, and furthermore
   b) a pump device is provided as hydraulic energy source, which comprises hydraulic pumps that are individually assigned to the potential vehicle occupants and can be actuated individually or jointly by the vehicle occupants;
   c) by means of the pump device, at least one pressure accumulator (21) of a pressure supply unit (12) can be charged, from which hydraulic energy for driving operation control of the hydraulic motors (11/1 - 11/4) can be drawn under valve control;
   d) the drive motors (11/1 - 11/4) for their part operate as pumps in a braking operation mode of the vehicle, which can be used for recuperation, being driven by the wheels, wherein
   e) the conversion device (30) comprises a hydraulic drive device (37) that can be fed by the wheel pumps and, for its part, drives a pump device (38), which is designed for a high initial pressure level and which operates as a charging pump attachable to the accumulator (21);

f) the charging pump is designed as a variable displacement pump, the delivery volume of which per pump cycle, revolution or periodic reciprocating motion can be varied in a defined way, and

g) the hydraulic drive device (37) of the pressure conversion device (30) can be set to different displacement values, preferably in an infinitely variable manner,

**characterized in that** the drive device (37) is designed as a double-acting hydraulic linear cylinder, the piston of which executes strokes in alternate directions under valve control, end flanges of the cylinder piston forming moving, pressure-tight boundaries of drive chambers (49/1, 49/2) which can alternately be subjected to drive pressure or relieved to the reservoir of the pressure supply unit (12), the drive chambers of the hydraulic drive device being bounded in a manner fixed relative to the housing by housing element bores arranged spaced apart along a common central axis, in which piston elements (41/1 and 41/2) are supported in such a way that they can be moved in a pressure-tight manner, the piston elements being coupled rigidly to one another in terms of motion by a connecting element which, extending freely between chambers, is provided with an actuating device for switching over a control valve (86) that provides the reversal of motion of the drive device into the stroke end positions thereof, **in that** the pump device (38) also comprises two linear piston pumps with pistons that can be driven alternately to execute the filling or the delivery stroke and can be moved in a pressure-tight manner in coaxial bore stages arranged spaced apart, when viewed along the common central axis (53), and are coupled to one another in terms of motion, in a manner secure with respect to pushing and pulling, by an intermediate connecting piece extending substantially outside the bore stages, **in that** the central axes (47 and 53) of the drive device and of the pump device extend at a distance D from one another and parallel to one another, and **in that** the piston arrangements of the drive device and of the pump device are coupled to one another in terms of motion, preferably with positive engagement, by a mechanism with a variable stroke conversion ratio in such a way that a substantially continuously flowing hydraulic medium flow is produced, and **in that** the storage capacity of the pressure supply device (12) is matched to the permissible total weight of the vehicle such that the energy content of the completely charged pressure accumulator (21) is sufficient to bring the vehicle with a minimum acceleration value to a minimum speed correlated with a speed value customary in normal road traffic, e.g. a value of around 40 km/h.

2. Light vehicle according to Claim 1, **characterized in that** the changeover valve (86) is designed as a 2-position valve actuated mechanically by a stop effect, remaining in the respective functional position after a changeover through non-positive/positive engagement until, owing to the piston movement, which takes place in the activated functional position, a stop element comes to rest against the actuating element providing the changeover movement of the valve, with the stop elements, which are fixed to the piston, engaging on mutually oppositely arranged sides of the valve piston, which can be moved along an axis parallel to the longitudinal axis (47) of the drive device (37).

3. Light vehicle according to Claim 1 or Claim 2, **characterized in that** the mechanism providing the coupling between the movement of the drive pistons and the pump pistons is a linkage mechanism with variable-position articulation axes, the articulation axes extending perpendicular to the plane defined by the longitudinal axes (47 and 53) of the drive device (37) and of the pump device (38).

4. Light vehicle according to one of Claims 1 to 2, **characterized in that** a two-armed lever (43), the power arm/work arm length ratio of which is adjustable, preferably infinitely variable, is provided to couple the motion of the drive pistons and of the pump pistons.

5. Light vehicle according to Claim 4, **characterized in that** the two-armed lever (43) is connected in an articulated manner, by means of a fixed joint, to the intermediate piece of the drive piston arrangement or the intermediate piece of the pump piston arrangement and is in engagement with a sliding block that can be moved in a guided manner between slot sides of the free lever end and that, for its part, is connected pivotably, by way of a fixed joint, to the intermediate part of the pump piston arrangement and of the drive piston arrangement, respectively, and **in that** the central joint of the two-armed lever (43) is in engagement with a sliding block that can be moved in a guided manner between slot sides of a central portion of the lever and that, for its part, is connected pivotably, by way of a fixed joint, to a slide (83) that can be moved backwards and forwards between the piston arrangements, substantially at right angles to the central axes of the piston arrangements.

6. Light vehicle according to Claim 5, **characterized in that** the slide (83) carrying the central pivot joint (63) of the two-armed lever (43) can be moved in alternate directions and locked in a selected position by means of a valve-controlled hydraulic drive in order to set the lever arm ratio.

**7.** Light vehicle according to Claim 6, **characterized in that** the hydraulic drive provided for moving the slide (83) comprises a double-acting linear cylinder (114), the piston of which is coupled to the slide (83) in a manner secure with respect to pushing and pulling and, for motion control, can be a follow-up control valve, which operates with mechanical setpoint position input and mechanical actual position feedback.

**8.** Light vehicle according to Claim 7, **characterized in that** the follow-up control valve (14) is designed as a linear sliding valve, the central longitudinal axis of which is arranged so as to extend parallel to the central longitudinal axis of the adjusting cylinder of the slide (83), the housing of the follow-up control valve being connected to the slide (83) in a manner secure against movement, and position control is accomplished by moving the valve piston.

**9.** Light vehicle according to one of Claims 1 to 8, **characterized by** configuration and design of the pressure conversion device (30/F) in such a way that it can be used both for controlling accumulator charging operation for the purpose of braking and for controlling driving operation for the purpose of speed variation.

**10.** Light vehicle according to Claim 9, **characterized in that** the hydraulic drive device (37) and the hydraulic pump device (38) of the pressure conversion device (30/F) are implemented with pistons of the same dimensions.

**11.** Light vehicle according to Claim 9 or Claim 10, **characterized in that** the pressure conversion device (30/F) can be switched to the functional positions assigned to accumulator charging operation and driving operation, respectively, by preferably manual switching of a valve which, after actuation, remains in the functional position thereby selected.

**12.** Light vehicle according to Claim 11, **characterized in that** the function selection valve (166) is designed as a 3-position valve which has a spring-centred blocking position assigned to the stationary condition of the vehicle as a central position (0) in addition to the functional positions selectable by actuation, which are assigned to driving operation and to charging operation respectively.

**13.** Light vehicle according to one of Claims 1 to 12, **characterized in that** the front wheel drive motors (11/1 and 11/2) have a larger displacement than the rear wheel drive motor(s) (11/3 and/or 11/4), and **in that** the drive motors can be switched to traction operation at least axle-wise, preferably individually.

**14.** Light vehicle according to Claim 13, **characterized in that**, in the case of a four-wheel drive vehicle, the displacement of the front wheel drive motors (11/1 and 11/2) is at least and approximately three times greater than the displacement of the rear wheel drive motors (11/3 and 11/4), and **in that** a driving operation mode, in which the vehicle is driven only via the front wheels or only via the rear wheels, can be selected.

**15.** Light vehicle according to Claim 13 or Claim 14, **characterized in that** the wheel drive motors (11/1 to 11/4) can be switched to traction operation at least axle-wise, and **in that** at least the following combinations of driven vehicle wheels can be selected:

a) all-wheel drive
b) both front axle motors
c) both rear axle motors,

to each of which different total displacements correspond.

**16.** Light vehicle according to one of Claims 1 to 15, **characterized by** the design thereof as a vehicle with at least four seats, preferably multiple seats, e.g. ten seats, each seat being assigned a pump which can be actuated by the respective passenger and which can be used for driving operation and/or for accumulator charging operation.

**17.** Light vehicle according to one of Claims 1 to 16, **characterized in that** an alternative pressure supply unit (30A), which can be operated with external energy and can be used as an alternative or as a supplementary source of motive power to the pressure supply unit operated by muscular power, is provided.

**18.** Pressure conversion device, by means of which, for the purpose of adapting, raising or lowering the supply pressure level $p_2$ of a hydraulic load or of a pressure accumulator, as the operating or supply pressure source of which the pressure conversion device serves, which, for its part, can be subjected to an input pressure $p_1$, from which the supply pressure $p_2$ can be derived in accordance with an at least approximately applicable relation of the form

$$p_2 \bullet V_2 = p_1 \bullet V_1$$

in which $V_2$ denotes the delivery volume of a hydraulic pump forming an output stage of the pressure conversion device (10) and $V_1$ denotes the displacement of a hydraulic drive device, by means of which the pump device (38) of the pressure conversion device (30) can be driven, in particular for controlling the driving and/or braking operation of a hydraulically driveable light vehicle in accordance with one of Claims 1 to 17, **characterized by** the following features, namely that:

a) the pump device (38) is designed as a linear piston pump which can be driven periodically by means of the drive unit (37) to execute filling and delivery strokes with its piston,

b) the drive unit (37) is designed as a linear cylinder, the piston of which can be driven so as to perform periodic reciprocating movements under valve control,

c) a mechanical transmission is provided, coupling the movements of the piston of the drive unit and of the pump unit by positive engagement, furthermore

d) the pressure conversion device can be set to different values of the transmission ratio through actuating the transmission by way of selection,

e) the mechanical transmission coupling the drive cylinder to the pump cylinder is designed as a lever mechanism with a pivotable lever, the lever arm ratio of which is infinitely variable, and that

f) the lever is designed as a two-armed lever (43) where the position of the central pivot joint (63) between the lever arm ends is continuously variable.

19. Pressure conversion device according to Claim 18, **characterized in that** a follow-up control valve (316) provided for controlling the motion of the vehicle comprises a cylindrical sleeve-shaped housing element (413) and a piston element arranged in an axially movable manner therein and, for its part, is arranged in an axially movable manner in a cylindrical tube-shaped connection element firmly connected to a slide which carries the central lever joint and the central axis of which extends at right angles, e.g. horizontally, to the direction of motion of the slide and of the piston of the drive cylinder, with the valve element (piston or housing element) used as feedback element being supported against an oblique sliding surface (432), the path of which extends obliquely to the central axis of the follow-up control valve (316), in the plane defined by the axes of the drive unit (37) and of the pump unit (38).

20. Pressure conversion device according to Claim 19, **characterized in that** the housing element (413) of the follow-up control valve (316) is supported against the oblique surface (432) and is open on the opposite side, where a tappet (411) engages on the piston of the valve, which is supported axially against the housing element (413) on the ramp side via a valve spring (429).

21. Pressure conversion device according to Claim 20, **characterized in that** the piston (318) of the follow-up control valve (316) can be moved by means of a lever-shaped adjusting element (217) which is analogous, as regards the arrangement of lever joints (449, 458 and 453), to the two-armed lever which kinematically couples the pump pistons to the drive pistons of the pump unit (38) and of the drive unit (37) respectively.

22. Pressure conversion device according to Claim 21, **characterized by** the following features, namely that

a) an actuating member (446) that can be moved parallel to the axes (47 and 53) of the pump piston and of the drive piston is coupled via a fixed joint (446) to the two-armed adjusting lever (442), which

b) is supported at its opposite end, in a manner which allows sliding movement, in a bearing element (454) which can be rotated about a fixed axis extending at the level of the central longitudinal axis of the pump unit (38), and furthermore

c) a rotatable slider is provided, which is rotatable about an axis forming the central axis of the actuating rod (441) and is arranged in a manner which allows it to be moved axially.

23. Pressure conversion device according to one of Claims 20 to 22, **characterized in that** a fixing device is provided, by means of which the position of the valve piston (318) of the follow-up control valve (316) can be fixed releasably in a position corresponding to a desired transmission ratio.

24. Pressure conversion device according to one of Claims 18 to 23, **characterized in that** a configuration of the adjusting device (407) is chosen so that a relation of the form

$$p_2/p_1 = A + B \cdot y$$

applies to the conversion ratio u = $p_2/p_1$, in which A denotes an initial value of the adjustable conversion ratio and B denotes a proportionality constant given by the geometrical design of the device.

25. Pressure conversion device according to one of Claims 18 to 24, **characterized in that** at least for the central pivot joint, by means of which the lever of the mechanism is supported on the slide that can be moved to adjust the transmission ratio, a hydraulic device is provided, by means of which at least partial compensation of the bearing forces is achieved, which are acting in alternate directions during the operation of the pressure conversion device.

26. Pressure conversion device according to Claim 25, in which a thick-walled circular disc, which is supported rotatably in concave sliding zones (381/1, 381/r) of the slide, said sliding zones each extending over circular sector zones, is provided as a bearing body which provides the function of a bearing shaft for the lever-shaped mechanism element, **characterized in that** this circular disc (378) is provided, within the concave, sector-shaped sliding surfaces (381/1, 381/r) of the slide (388), with depressions in the form of flat grooves with closed boundaries which are covered fluid-tightly by the concave sliding surfaces (381/1 and 381/r) of the slide bore and, together therewith, form compensation chambers which are closed off in a sealed manner from the outside and through the pressurization of which forces acting on the circular disc (378), caused by the pressures prevailing in the respectively pressurized drive chamber (49/1 or 49/2) of the drive device (37) and in the output pressure chamber (52/2 or 52/1) of the pump device (38), can be compensated, at least to a large extent.

27. Pressure conversion device according to Claim 26, **characterized in that** the circular disc (378) is provided both in one slidably supported sector zone thereof and in the sector zone situated opposite the latter with a central, shallow depression (393/1 and 393/r respectively), each of which is connected so as to communicate with that output pressure chamber (52/2 and 52/1 respectively) of the pump device (38) of the pressure conversion device (330) which is arranged on the opposite side thereto, relative to a centre plane (82) of the pressure conversion device (330), portions of the respective connecting flow paths being formed by flexible lines (394/r and 394/1 respectively).

28. Pressure conversion device according to Claim 27, **characterized in that** the effective values of the cross-sectional areas of the shallow depressions (393/1 and 393/r respectively), through the pressurization of which with the pressures prevailing due to operation in the respectively connected pressure chambers (52/1 and 52/2 respectively) of the pump unit (38) compensation forces in the opposite direction to the load forces can be produced.

29. Pressure conversion device according to Claim 28, **characterized in that** further shallow depressions (396/ra and 396/ri; 396/la and 396/li) are in each case provided on both sides of the central, shallow depressions (393/1 and 393/r), preferably in an arrangement and design symmetrical with respect to a centre plane (365) of the bearing body, which depressions can be subjected - in pairs with respect to sides - to the pressures which are coupled in in alternation into the mutually opposite drive pressure chambers (49/2 and 49/1 respectively) of the drive device (37) during the operation of the pressure conversion device (330).

30. Pressure conversion device according to one of Claims 26 to 29, **characterized in that** the slide (388) is also provided on its mutually averted outer sliding surfaces (397/1 and 397/r), which face the upward-projecting walls (387/1 and 387/r) of a guide frame of the pressure conversion device, with shallow, groove-shaped depressions (398/1 and 398/r), which are arranged between the bottom of the depression and the inside of the cover plate (368) in such a way that the centre plane (365) of the slide is also the centre plane of these groove-shaped depressions (398/1 and 398/r), which form equalizing chambers (398), which are in communicating connection with these chambers within the possible pivoting range of the circular disc or of the central depressions (393/1 and 393/r) of the latter by means of a respective channel (399/1 and 399/r respectively) fixed with respect to the slide.

31. Pressure conversion device according to one of Claims 26 to 30, in which the lever-shaped mechanism element has a polygonal, in particular rectangular, cross section and can be moved in a sliding manner in a channel of complementary cross section passing through the pivotable bearing body, **characterized in that** "equalization chambers" analogous to the outer equalization chambers (398) are provided on the narrow delimiting sides of the circular disc (378), which face the rod (370), in order to reduce the sliding friction between the rod (370) and the said circular disc (378).

**Revendications**

1. Véhicule léger pour le transport d'au moins deux personnes, qui peut être entraîné par la force musculaire, dans lequel il est prévu, pour la transformation de cette force en forces de propulsion ou de ralentissement, un dispositif de conversion actionnable par le ou les occupant(s) du véhicule, au moyen duquel des forces d'actionnement peuvent être converties en couples de rotation des roues corrélés à ces forces, dans lequel

   a) le véhicule comporte une ligne d'entraînement hydraulique, qui comprend comme éléments d'entraînement des moteurs hydrauliques rotatifs (11/1 - 11/4) associés individuellement aux roues du véhicule ; en outre,
   b) il est prévu, comme source d'énergie hydraulique, un dispositif de pompes qui comprend des pompes hydrauliques associées individuellement aux occupants possibles du véhicule, qui peuvent être actionnées individuellement ou à plusieurs par les occupants du véhicule ;
   c) au moins un accumulateur de pression (21) d'une unité de fourniture de pression (12) peut être chargé au moyen du dispositif de pompes, et dans lequel de l'énergie hydraulique peut être prélevée sous la commande de soupapes pour la commande de fonctionnement de propulsion des moteurs hydrauliques (11/1 - 11/4) ;
   d) les moteurs d'entraînement (11/1 - 11/4), entraînés par les roues, fonctionnent de leur côté comme des pompes dans un mode de fonctionnement de freinage du véhicule utilisable pour la récupération ; dans lequel
   e) le dispositif de conversion (30) comprend un dispositif d'entraînement hydraulique (37) pouvant être alimenté par les pompes de roue, qui entraîne à son tour un dispositif de pompes (38) conçu à un haut niveau de pression initiale, qui opère comme pompe de chargement pouvant être raccordée à l'accumulateur (21) ;
   f) la pompe de chargement est réalisée sous la forme d'une pompe à cylindrée variable, dont le volume de refoulement, rapporté à un cycle de pompe, révolution ou mouvement alternatif périodique, peut être modifié de façon définie ; et
   g) le dispositif d'entraînement hydraulique (37) du dispositif de conversion de pression (30) est réglable à différentes valeurs du volume de dimensionnement,

   **caractérisé en ce que** le dispositif d'entraînement (37) se présente sous la forme d'un cylindre linéaire hydraulique à double effet, dont le piston parcourt des courses effectuées dans des directions alternées sous la commande de soupapes, dans lequel des brides d'extrémité du piston du cylindre forment des limitations mobiles, étanches à la pression, de chambres d'entraînement (49/1, 49/2), qui peuvent être en alternance soumises à la pression d'entraînement ou détendues vers le réservoir de stockage de l'ensemble de fourniture de pression (12), les chambres d'entraînement du dispositif d'entraînement hydraulique sont limitées solidairement au boîtier par des alésages d'éléments de boîtier disposés à distance l'un de l'autre le long d'un axe central commun, dans lesquels sont montés de façon étanche à la pression des éléments de piston coulissants (41/1 et 41/2), qui sont couplés en mouvement rigidement l'un à l'autre par un élément de liaison qui, s'étendant librement entre des chambres, est pourvu d'un dispositif d'actionnement destiné à commuter une soupape de commande (86), qui communique l'inversion du mouvement du dispositif d'entraînement dans ses positions de fin de course, **en ce que** le dispositif de pompes (38) comprend également deux pompes alternatives linéaires avec des pistons pouvant être entraînés en alternance pour l'exécution de la course de remplissage ou de refoulement, qui sont coulissants de façon étanche à la pression dans des étages d'alésages coaxiaux disposés à distance l'un de l'autre quand on les considère le long de l'axe central commun (53), et qui sont couplés en mouvement l'un à l'autre de façon solidaire en traction et en poussée au moyen d'une pièce intermédiaire de liaison s'étendant essentiellement à l'extérieur des étages d'alésages, **en ce que** les axes centraux (47 et 53) du dispositif d'entraînement et du dispositif de pompes s'étendent parallèlement l'un à l'autre à une distance D l'un de l'autre, et **en ce que** les agencements de pistons du dispositif d'entraînement et du dispositif de pompes sont couplés en mouvement l'un à l'autre, de préférence par complémentarité de forme, au moyen d'une transmission qui présente un rapport de conversion de course variable, de telle manière qu'un courant d'agent hydraulique s'écoulant essentiellement de façon permanente soit produit, et **en ce que** la capacité d'accumulation du dispositif de fourniture de pression (12) est adaptée au poids total admissible du véhicule, en ce sens que le contenu d'énergie de l'accumulateur de pression (21) entièrement chargé suffit pour amener le véhicule avec un niveau d'accélération minimal à une vitesse minimale qui est corrélée à un niveau usuel de la vitesse dans le trafic routier normal, par exemple à un niveau de l'ordre de 40 km/h.

2. Véhicule léger selon la revendication 1, **caractérisé en ce que** la soupape de commutation (86) se présente sous la forme d'une soupape à 2 positions actionnée mécaniquement sous l'effet d'un choc, qui est immobilisée après une commutation dans la position fonctionnelle respective par un encliquetage en complémentarité de force et de forme, jusqu'à ce qu'un élément de butée vienne buter contre l'élément d'actionnement par suite du mouvement de piston qui se produit dans la position fonctionnelle enclenchée, lequel élément d'actionnement communique le mouvement de commutation de la soupape, dans lequel les éléments de butée solidaires des pistons agissent sur des côtés du piston de soupape disposés l'un en face de l'autre, qui peut coulisser le long d'un axe parallèle à l'axe longitudinal (47) du dispositif d'entraînement (37).

3. Véhicule léger selon la revendication 1 ou la revendication 2, **caractérisé en ce que** la transmission communiquant le couplage en mouvement des pistons d'entraînement et de pompe se présente sous la forme d'une transmission à bielles avec des axes d'articulation changeant de position, dans lequel les axes d'articulation s'étendent perpendiculairement au plan passant par les axes longitudinaux (47 et 53) du dispositif d'entraînement (37) et du dispositif de pompes (38).

4. Véhicule léger selon l'une quelconque des revendications 1 à 2, **caractérisé en ce qu'**il est prévu, pour le couplage en mouvement des pistons d'entraînement et des pistons de pompe, un levier à deux bras (43), dont le rapport de longueur bras de force/bras de charge est réglable, de préférence variable de façon continue.

5. Véhicule léger selon la revendication 4, **caractérisé en ce que** le levier à deux bras (43) est relié de manière articulée, au moyen d'une articulation fixe, à la pièce intermédiaire de l'agencement de pistons d'entraînement ou à la pièce intermédiaire de l'agencement de pistons de pompe et est en prise avec un coulisseau déplaçable, guidé entre des joues fendues de l'extrémité libre du levier et qui est de son côté relié de façon pivotante, au moyen d'une articulation fixe, à la pièce intermédiaire de l'agencement de pistons de pompe ou de l'agencement de pistons d'entraînement, et **en ce que** l'articulation médiane du levier à deux bras (43) est en prise avec un coulisseau déplaçable, guidé entre des joues fendues d'un segment médian du levier, et qui est de son côté relié de façon pivotante, au moyen d'une articulation fixe, à un chariot (83) déplaçable en mouvement alternatif pour l'essentiel perpendiculairement aux axes centraux des agencements de pistons.

6. Véhicule léger selon la revendication 5, **caractérisé en ce que** le chariot (83) portant l'articulation pivotante médiane (63) du levier à deux bras (43) peut être déplacé dans des directions alternatives au moyen d'un entraînement hydraulique commandé par des soupapes pour le réglage du rapport des bras de levier, et peut être bloqué dans une position choisie.

7. Véhicule léger selon la revendication 6, **caractérisé en ce que** l'entraînement hydraulique prévu pour le déplacement du chariot (83) comprend un cylindre linéaire à double effet (114), dont le piston est couplé de façon solidaire en traction et en poussée avec le chariot (83), et peut, pour la commande du mouvement, être une soupape de régulation de poursuite, qui travaille avec une instruction mécanique pour la valeur de consigne de la position et avec une confirmation mécanique de la valeur réelle de la position.

8. Véhicule léger selon la revendication 7, **caractérisé en ce que** la soupape de régulation de poursuite (14) se présente sous la forme d'une vanne à tiroir linéaire, dont l'axe longitudinal central s'étend parallèlement à l'axe longitudinal central du cylindre de commande du chariot (83), dans lequel le boîtier de la soupape de régulation de poursuite est relié de façon solidaire au chariot (83) et la commande de position est effectuée par déplacement du piston de soupape.

9. Véhicule léger selon l'une quelconque des revendications 1 à 8, **caractérisé par** une configuration et une conception du dispositif de conversion de pression (30/F), dans un sens tel qu'il soit utilisable aussi bien pour la commande du fonctionnement de chargement de l'accumulateur en vue d'un freinage que pour la commande du fonctionnement de propulsion en vue d'un changement de la vitesse.

10. Véhicule léger selon la revendication 9, **caractérisé en ce que** le dispositif d'entraînement hydraulique (37) et le dispositif de pompes hydraulique (38) du dispositif de conversion de pression (30/F) sont réalisés avec le même dimensionnement de leurs pistons.

11. Véhicule léger selon la revendication 9 ou la revendication 10, **caractérisé en ce que** le dispositif de conversion de pression (30/F) peut être commuté dans la position fonctionnelle associée au fonctionnement de chargement de l'accumulateur ou au fonctionnement de propulsion par une commutation, effectuée de préférence à la main, d'une soupape s'immobilisant dans la position fonctionnelle ainsi choisie après un actionnement.

12. Véhicule léger selon la revendication 11, **caractérisé en ce que** la soupape de sélection de fonction (166) se présente sous la forme d'une soupape à 3 positions qui, en plus des positions fonctionnelles sélectionnables par actionnement associées au fonctionnement de propulsion ou au fonctionnement de chargement, présente une position de blocage centrée par ressort comme position neutre (0), qui est associée à l'arrêt du véhicule.

**13.** Véhicule léger selon l'une quelconque des revendications 1 à 12, **caractérisé en ce que** les moteurs d'entraînement des roues avant (11/1 et 11/2) présentent un plus grand volume de dimensionnement que le/les moteur(s) d'entraînement des roues arrière (11/3 et/ou 11/4), et **en ce que** les moteurs d'entraînement peuvent être amenés en fonctionnement de traction, au moins par essieu, de préférence individuellement.

**14.** Véhicule léger selon la revendication 13, **caractérisé en ce que**, dans un véhicule à quatre roues, le volume de dimensionnement des moteurs d'entraînement des roues avant (11/1 et 11/2) est au moins et environ trois fois plus grand que le volume de dimensionnement des moteurs d'entraînement des roues arrière (11/3 et 11/4), et **en ce que** l'on peut choisir un mode de fonctionnement de propulsion dans lequel le véhicule est entraîné uniquement par les roues avant ou uniquement par les roues arrière.

**15.** Véhicule léger selon la revendication 13 ou la revendication 14, **caractérisé en ce que** les moteurs d'entraînement des roues (11/1 à 11/4) peuvent être commandés en fonctionnement de traction au moins par essieu, et **en ce que** l'on peut choisir au moins les combinaisons suivantes de roues entraînées du véhicule :

   a) entraînement de toutes les roues
   b) les deux moteurs de l'essieu avant
   c) les deux moteurs de l'essieu arrière, auxquelles correspondent respectivement des volumes de dimensionnement totaux différents.

**16.** Véhicule léger selon l'une quelconque des revendications 1 à 15, **caractérisé par** sa configuration en forme de véhicule comportant au moins quatre sièges, de préférence plusieurs sièges avec par exemple dix sièges, dans lequel chaque siège est associé à une pompe, actionnable par le passager respectif, qui est utilisable pour le fonctionnement de propulsion et/ou le fonctionnement de charge d'accumulateur.

**17.** Véhicule léger selon l'une quelconque des revendications 1 à 16, **caractérisé en ce qu'**il est prévu un ensemble alternatif de fourniture de pression (30A), pouvant fonctionner avec une énergie extérieure, qui est utilisable comme source de force d'entraînement en remplacement ou en complément de l'ensemble de fourniture de pression fonctionnant par la force musculaire.

**18.** Dispositif de conversion de pression, au moyen duquel, en vue d'une adaptation, d'une augmentation ou d'une diminution du niveau de pression d'alimentation $p_2$ d'un consommateur hydraulique ou d'un accumulateur de pression, dont le dispositif de conversion de pression sert de source de pression de fonctionnement ou d'alimentation, qui peut de son côté être soumise à une pression d'entrée $p_1$, de laquelle la pression $p_2$ peut être déduite selon une équation valable au moins par approximation de la forme

$$p_2 \bullet V_2 = p_1 \bullet V_1,$$

dans laquelle $V_2$ désigne le volume de refoulement d'une pompe hydraulique formant un étage de sortie du dispositif de conversion de pression (10) et $V_1$ désigne le volume de dimensionnement d'un dispositif d'entraînement hydraulique, avec lequel le dispositif de pompes (38) du dispositif de conversion de pression (30) peut être entraîné, en particulier pour la commande du fonctionnement de propulsion et/ou de freinage d'un véhicule léger à entraînement hydraulique selon l'une quelconque des revendications 1 à 17, **caractérisé par** les caractéristiques suivantes :

   a) le dispositif de pompes (38) se présente sous la forme d'une pompe alternative linéaire, qui peut être entraînée périodiquement au moyen de l'unité d'entraînement (37) pour l'exécution de courses de remplissage et de refoulement de son piston ;
   b) l'unité d'entraînement (37) se présente sous la forme d'un cylindre linéaire, dont le piston peut être entraîné, sous la commande de soupapes, dans des mouvements d'aller et retour effectués périodiquement ;
   c) il est prévu une transmission mécanique, qui couple les mouvements du piston de l'unité d'entraînement et de l'unité de pompes en complémentarité de forme ; en outre,
   d) le dispositif de conversion de pression est réglable à différentes valeurs du rapport de conversion par actionnement de sélection de la transmission ;
   e) la transmission mécanique couplant le cylindre d'entraînement au cylindre de pompe se présente sous la forme d'un mécanisme à levier avec un levier pivotant, dont le rapport des bras de levier est variable de façon continue, et

f) le levier se présente sous la forme d'un levier à deux bras (43), dans lequel la position de l'articulation pivotante centrale (63) entre les extrémités des bras de levier est variable en continu.

**19.** Dispositif de conversion de pression selon la revendication 18, **caractérisé en ce qu'**une soupape de régulation de poursuite (316) prévue pour la commande du mouvement du véhicule se compose d'un élément de boîtier en forme de douille cylindrique (413) et d'un élément de piston disposé de façon axialement coulissante dans celui-ci et est de son côté disposée de façon axialement coulissante dans un élément de raccord de forme tubulaire cylindrique, solidaire d'un chariot portant l'articulation médiane du levier, et dont l'axe central s'étend perpendiculairement, par exemple horizontalement, à la direction de mouvement du chariot ou du piston du cylindre de travail, dans lequel l'élément de soupape utilisé comme élément de confirmation (piston ou élément de boîtier) est appuyé sur une face de glissement oblique (432), dont la trace dans le plan passant par les axes de l'unité d'entraînement (37) et de l'unité de pompe (38) s'étend en oblique par rapport à l'axe central de la soupape de régulation de poursuite (316).

**20.** Dispositif de conversion de pression selon la revendication 19, **caractérisé en ce que** l'élément de boîtier (413) de la soupape de régulation de poursuite (316) est appuyé sur la face oblique (432) et est ouvert sur le côté opposé, où un poussoir (411) agit sur le piston de la soupape, qui est appuyé axialement sur l'élément de boîtier (413) du côté de la rampe au moyen d'un ressort de soupape (429).

**21.** Dispositif de conversion de pression selon la revendication 20, **caractérisé en ce que** le piston (318) de la soupape de régulation de poursuite (316) est déplaçable au moyen d'un organe de réglage en forme de levier (217) qui, en ce qui concerne l'agencement d'articulations de levier (449, 458 et 453), est analogue au deuxième levier, qui couple de façon cinématique les pistons de pompe aux pistons d'entraînement de l'unité de pompe (38) ou de l'unité d'entraînement (37).

**22.** Dispositif de conversion de pression selon la revendication 21, **caractérisé par** les caractéristiques suivantes :

a) un organe d'actionnement (446) , déplaçable parallèlement aux axes (47 et 53) du piston de pompe et du piston d'entraînement, est couplé au levier de commande à deux bras (442) par une articulation fixe (449), levier dont

b) l'extrémité opposée est montée de façon déplaçable en glissement dans un élément de palier (454), qui peut tourner autour d'un axe fixe, qui s'étend à hauteur de l'axe longitudinal central de l'unité de pompes (38), et en outre

c) il est prévu un coulisseau rotatif, déplaçable axialement, qui peut tourner autour d'un axe formant l'axe médian de la barre d'actionnement (441).

**23.** Dispositif de conversion de pression selon l'une quelconque des revendications 20 à 22, **caractérisé en ce qu'**il est prévu un dispositif de fixation, avec lequel la position du piston de soupape (318) de la soupape de régulation de poursuite (316) peut être fixée de façon libérable dans une position correspondant à un rapport de conversion désiré.

**24.** Dispositif de conversion de pression selon l'une quelconque des revendications 18 à 23, **caractérisé en ce qu'**une configuration du dispositif de commande (407) est choisie dans l'optique que le rapport $u = p_2/p_1$ soit donné par une équation de la forme

$$p_2/p_1 = A + B \bullet y,$$

dans laquelle A désigne une valeur initiale du rapport de conversion réglable et B est une constante de proportionnalité fixée par la conception géométrique du dispositif.

**25.** Dispositif de conversion de pression selon l'une quelconque des revendications 18 à 24, **caractérisé en ce que**, au moins pour l'articulation pivotante centrale au moyen de laquelle le levier de la transmission est monté sur le chariot déplaçable pour le réglage de la conversion, un dispositif hydraulique est pourvu pour la compensation au moins partielle des forces d'appui, qui apparaissent en agissant dans des directions alternatives lors du fonctionnement du dispositif de conversion de pression.

**26.** Dispositif de conversion de pression selon la revendication 25, dans lequel il est prévu, comme corps de palier qui communique le fonctionnement d'un arbre de palier de l'élément de transmission en forme de levier, un disque circulaire à paroi épaisse, qui est monté de façon rotative dans des zones de glissement concaves (381/l, 381/r) du chariot qui s'étendent respectivement sur des zones de secteur circulaire, **caractérisé en ce que** ce disque circulaire (378) est pourvu, à l'intérieur des faces de glissement concaves en forme de secteurs (381/l et 381/r) du chariot (388), de creux en forme de rainures plates à bord fermé, qui sont recouvertes de façon étanche au liquide par les faces de glissement concaves (381/l et 381/r) de l'alésage de chariot et forment avec celles-ci des chambres de compensation fermées de façon étanche par rapport à l'extérieur, dont la mise sous pression permet de compenser, au moins en grande partie, des forces qui agissent sur le disque circulaire (378) et qui sont dues aux pressions qui règnent dans la chambre d'entraînement (49/l ou 49/2) du dispositif d'entraînement (37) respectivement soumise à la pression et dans la chambre de pression de sortie (52/2 ou 52/1) du dispositif de pompes (38).

**27.** Dispositif de conversion de pression selon la revendication 26, **caractérisé en ce que** le disque circulaire (378) est pourvu, aussi bien dans sa première zone de secteur montée de façon glissante que dans la zone de secteur opposée à celle-ci, d'un creux central plat (393/l ou 393/r), qui se trouve respectivement en communication avec la chambre de pression de sortie (52/2 ou 52/1) du dispositif de pompes (38) du dispositif de conversion de pression (330), disposée sur le côté opposé par rapport à un plan médian (82) du dispositif de conversion de pression (330), dans lequel des parties des chemins respectifs d'écoulement de liaison sont formées par des conduites flexibles (394/r ou 394/1).

**28.** Dispositif de conversion de pression selon la revendication 27, **caractérisé en ce que** les valeurs effectives des aires de section transversale des creux plats (393/1 ou 393/r) peuvent être produites par des forces de compensation orientées à l'inverse des forces de charge par leur exposition aux pressions régnant à cause du fonctionnement dans les chambres de pression respectivement raccordées (52/1 ou 52/2) de l'unité de pompes (38).

**29.** Dispositif de conversion de pression selon la revendication 28, **caractérisé en ce qu'**il est prévu, chaque fois de part et d'autre des creux plats centraux (393/1 et 393/r), de préférence en une disposition et une configuration symétriques par rapport à un plan médian (365) du corps de palier, d'autres creux plats (396/ra et 396/rl ou 396/la et 396/ll) qui, rapportés latéralement par paires, peuvent être soumis aux pressions qui sont appliquées en alternance dans les chambres de pression d'entraînement (49/2 ou 49/1) opposées l'une à l'autre du dispositif d'entraînement (37) pendant le fonctionnement du dispositif de conversion de pression (330).

**30.** Dispositif de conversion de pression selon l'une quelconque des revendications 26 à 29, **caractérisé en ce que** le chariot (388) également est pourvu, sur ses faces de glissement extérieures (397/l et 397/r) situées à l'opposé l'une de l'autre et tournées vers les parois saillantes (387/l et 387/r) d'un châssis de guidage du dispositif de conversion de pression, de creux plats en forme de rainures (398/l ou 398/r), qui sont disposés entre le fond du creux et le côté intérieur de la plaque de couverture (368), de telle manière que le plan médian (365) du chariot soit également le plan médian de ces creux en forme de rainures (398/l et 398/r), qui forment des chambres de compensation (398) qui, à l'intérieur de la zone de pivotement possible du disque circulaire ou des creux centraux (393/l et 393/r) de celui-ci, sont en liaison de communication avec ces chambres respectivement par un canal (399/l ou 399/r) solidaire du chariot.

**31.** Dispositif de conversion de pression selon l'une quelconque des revendications 26 à 30, dans lequel l'élément de transmission en forme de levier présente une section transversale polygonale, en particulier rectangulaire, et est déplaçable de façon glissante dans un canal de section transversale complémentaire traversant le corps de palier pivotant, **caractérisé en ce que**, pour réduire le frottement de glissement entre la barre (370) et le disque circulaire (378), il est prévu sur les côtés de limitation étroits de celui-ci tournés vers la barre des chambres de compensation analogues aux chambres de compensation extérieures (398).

Fig.1

EP 2 146 891 B1

Fig.2a

Fig.2b

Fig.2c

Fig.3d

Fig.3a

Fig.3c

Fig.3b

Fig.4c

Fig.4b

Fig.4a

Fig.4d

EP 2 146 891 B1

Fig.4e

EP 2 146 891 B1

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4078816 A
- DE 19749906 A1